(19) Europäisches Patentamt / European Patent Office / Office européen des brevets

(11) EP 2 687 548 B1

(12) # EUROPEAN PATENT SPECIFICATION

(45) Date of publication and mention of the grant of the patent:
**31.07.2019 Bulletin 2019/31**

(21) Application number: **12756915.0**

(22) Date of filing: **13.03.2012**

(51) Int Cl.:
***B82Y 30/00*** (2011.01) ***C08F 2/44*** (2006.01)
***C09C 3/10*** (2006.01) ***C08F 220/14*** (2006.01)
***C08F 220/18*** (2006.01) ***C08F 220/22*** (2006.01)
***C08F 220/30*** (2006.01) ***C08F 220/32*** (2006.01)
***C08F 292/00*** (2006.01) ***C08K 5/541*** (2006.01)
***G02B 1/113*** (2015.01) ***G02B 1/118*** (2015.01)
***C09C 1/00*** (2006.01) ***C09C 1/30*** (2006.01)
***G02B 1/00*** (2006.01)

(86) International application number:
**PCT/JP2012/056423**

(87) International publication number:
**WO 2012/124693 (20.09.2012 Gazette 2012/38)**

(54) **ORGANIC/INORGANIC COMPOSITE, MANUFACTURING METHOD THEREFOR, ORGANIC/INORGANIC COMPOSITE FILM, MANUFACTURING METHOD THEREFOR, PHOTONIC CRYSTAL, COATING MATERIAL, THERMOPLASTIC COMPOSITION, MICROSTRUCTURE, OPTICAL MATERIAL, ANTIREFLECTION MEMBER, AND OPTICAL LENS**

ORGANISCHER/ANORGANISCHER VERBUNDSTOFF, HERSTELLUNGSVERFAHREN DAFÜR, ORGANISCH/ANORGANISCHE VERBUNDFOLIE, HERSTELLUNGSVERFAHREN DAFÜR, PHOTONISCHER KRISTALL, BESCHICHTUNGSMATERIAL, THERMOPLASTISCHE ZUSAMMENSETZUNG, MIKROSTRUKTUR, OPTISCHES MATERIAL, ANTIREFLEKTIERENDES ELEMENT UND OPTISCHE LINSE

COMPOSITE ORGANIQUE/INORGANIQUE, SON PROCÉDÉ DE FABRICATION, FILM COMPOSITE ORGANIQUE/INORGANIQUE, SON PROCÉDÉ DE FABRICATION, CRISTAL PHOTONIQUE, MATIÈRE DE REVÊTEMENT, COMPOSITION THERMOPLASTIQUE, MICROSTRUCTURE, MATIÈRE OPTIQUE, ÉLÉMENT ANTI-REFLET ET LENTILLE OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2011 JP 2011055444**
**18.03.2011 JP 2011060569**
**22.03.2011 JP 2011063062**

(43) Date of publication of application:
**22.01.2014 Bulletin 2014/04**

(73) Proprietor: **Asahi Kasei Kabushiki Kaisha**
**Tokyo 100-0006 (JP)**

(72) Inventors:
- **AKIMOTO Mitsuyo**
  **Tokyo 101-8101 (JP)**
- **TANAKA Kenya**
  **Tokyo 101-8101 (JP)**

(74) Representative: **D Young & Co LLP**
**120 Holborn**
**London EC1N 2DY (GB)**

(56) References cited:
**WO-A1-2004/078811** **JP-A- 2004 018 557**
**JP-A- 2008 516 017** **US-A1- 2003 199 653**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

## Technical Field

The present invention relates to an organic-inorganic composite, a manufacturing method therefor, an organic-inorganic composite film, a manufacturing method therefor, a photonic crystal, coating material, a thermoplastic composition, a microstructure, an optical material, an antireflection member, and an optical lens.

## Background Art

An optically transparent thermoplastic resin, for example, poly(methyl methacrylate) (hereinafter, referred to as pMMA) or polycarbonate (hereinafter, referred to as PC) is used in various optical elements including lenses and prisms, because of its lightweight properties or high productivity.

However, since pMMA has small optical anisotropy, but has a refractive index as low as approximately 1.49, the development of a resin with a high refractive index has been demanded.

On the other hand, PC is often used in lenses or optical disks on the ground that a refractive index is approximately 1.59, but has the disadvantages that a melt viscosity is high and distortion easily remains. Moreover, there is the disadvantage that optical anisotropy easily occurs during molding, because a benzene ring constituting PC is susceptible to molecular orientation.

Therefore, when the thermoplastic resin is used in lenses for pickup using blue light, the temperature variation of spherical aberration is large and it is difficult to obtain stable optical physical properties. Moreover, there is a problem that such a thermoplastic resin alone is deficient in optical stability against blue light used in blue-ray disks, etc. In order to compensate for these disadvantages, attempts to solve the problems by mixing inorganic particles with the thermoplastic resin have been made.

For example, a molded product obtained by hot-pressing a composition comprising $TiO_2$ sol mixed with a copolymer of bisphenol A and epichlorohydrin is described in Patent Literature 1, and a molded product obtained by injection-molding a thermoplastic composite material comprising $SiO_2$ particles mixed with pMMA is described in Patent Literature 2.

Moreover, in recent years, a nanoimprint method aimed at nano-scale fine structure processing has received attention, and application development thereof has been actively performed. The nanoimprint method is one that has applied an embossing technique, and is a fine structure processing technique of mechanically altering the shape of a material to be processed such as a film by pressing a die (mold, stamper, template, etc.) with a pattern of projections and depressions formed to precisely transfer the fine pattern.

A photo-imprint method using a photocurable composition (a method of irradiating a photocurable composition with light through a transparent mold or a transparent substrate to cure it), and a thermal imprint method using a thermoplastic resin as a material to be processed (a method of pressing a mold to a resin heated to a glass transition temperature (hereinafter, also referred to as Tg) or more, and releasing the mold after cooling to thereby transfer the fine structure to the resin which is the material to be processed) have been proposed as the nanoimprint method. For example, a cationic polymerizable composition for nanoimprint is disclosed in Patent Literature 3, and a photocurable composition for nanoimprint is disclosed in Patent Literature 4. Moreover, a thermoplastic resin provided with microfabrication by the thermal imprint method is disclosed in Non Patent Literature 1.

Moreover, conventionally, the control of the refractive index of a molded product formed from a polymer has been performed by a method of introducing a sulfur atom, a halogen atom, or an aromatic group such as a benzene ring into the polymer. However, the control of the refractive index using only the organic polymer has limitations, and there has also been a problem that moisture absorptivity, temperature dependence of the refractive index, and optical properties such as birefringence decrease.

Accordingly, attempts to disperse inorganic particles into a polymer have been actively performed in recent years as means for controlling the refractive index with optical properties maintained. In this case, for providing good-looking products without bias or variation in terms of physical properties, it is required that the inorganic particles should be uniformly dispersed in the polymer.

However, the inorganic particles easily aggregate, and particularly, inorganic particles of nano order size significantly has the tendency. Therefore, the practical use of the method using inorganic particles has been hindered.

A method of achieving the dispersion of fine particles by introducing a functional group to fine particle surface and complexing this with a polymer having a functional group that reacts with the functional group is disclosed in Patent Literature 5 as a method for dispersing fine particles into a polymer.

In Patent Literature 6, there is description about an inorganic-organic composite flame-retardant composition constituted of an inorganic hydroxide and an organic resin.

In Patent Literature 7, there is description on electrophoresis particles comprising a polymer chain grafted to

the surface of a core particle prepared by the combination of a polymer and titanium oxide, carbon black, a soluble dye, etc.

In Patent Literature 8, there is description about particles comprising a polymer polymerized to titanium oxide surface.

JP 2008-516017 A describes a surface polymerization process and polymer product using a RAFT agent. The process comprises providing a dispersion of a particulate material in a continuous liquid phase, the dispersion comprising a RAFT agent as a stabiliser for the particulate material, and the continuous liquid phase comprising one or more ethylenically unsaturated monomers; and polymerising the one or more ethylenically unsaturated monomers under the control of the RAFT agent to thereby form polymer at the surface of the particulate material.

## Citation List

### Patent Literature

Patent Literature 1: JP 2007-270097 A
Patent Literature 2: JP 2007-77271 A
Patent Literature 3: JP 2009-138116 A
Patent Literature 4: JP 2010-159369 A
Patent Literature 5: JP 11-043556 A
Patent Literature 6: JP 2005-179576 A
Patent Literature 7: JP 2005-345617 A
Patent Literature 8: JP 2008-106129 A

### Non Patent Literature

Non Patent Literature 1: S. Chou et al., Appl. Phys. lett., Vol. 67, 3114 (1995)

## Summary of Invention

### Technical Problem

However, it is difficult to uniformly disperse inorganic particles in a thermoplastic resin, and there is the case where the deterioration or yellowing of an obtained molded product occurs; thus, it is difficult to obtain stable optical properties. Although an approach of applying strong shear force under high temperature by an approach such as melt kneading has been proposed in order to relatively uniformly mix inorganic particles, it is difficult to completely disperse inorganic particles and there is the case where the deterioration or yellowing of an obtained optical element occurs.

Moreover, a photo-imprint method produces a material with high strength, whereas the adjustment of processing or manufacturing conditions is difficult because a specific manufacturing process is required; and the manufacturing process is expensive. On the other hand, although a thermal imprint method can apply a general-purpose thermal processing process and therefore, can form a fine structure inexpensively, there is a tendency that the formed fine structure is easily broken because strength is weak compared with a curable resin; and the refractive index range of the material to be processed is narrow. The compounding of inorganic particles is effective for solving these problems; however, it is very difficult to uniformly mix nano-scale inorganic particles with a resin.

The present invention is intended to provide an organic-inorganic composite excellent in refractive index and molding processability, etc., with optical properties maintained, a manufacturing method therefor, an organic-inorganic composite film, a manufacturing method therefor, a photonic crystal, a coating material, a thermoplastic composition, a microstructure, an optical material, an antireflection member, and an optical lens.

### Solution to Problem

The present invention relates to the followings:

[1] An organic-inorganic composite comprising an inorganic compound particle and a polymer attached to the inorganic compound particle, wherein
a molecular weight distribution of the polymer is 2.3 or less, wherein the molecular weight distribution is determined by Mw/Mn from a weight average molecular weight and a number-average molecular weight, and wherein Mn and Mw are poly(methyl methacrylate)-based values that are measured by gel permeation chromatography, and

a content of the inorganic compound particle is 96% by mass or less with respect to a total mass of the organic-inorganic composite;
wherein the inorganic compound particle and the polymer are covalently attached via a coupling agent, the coupling agent having a polymerization initiating group represented by formula (1) or (2):

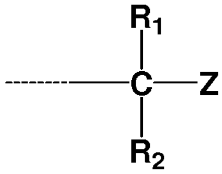
(1)

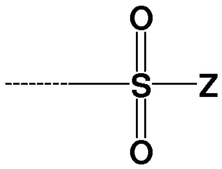
(2)

where $R_1$ and $R_2$ each independently represent a hydrogen atom, an alkyl group with the number of carbon of 1 to 20 which may have a substituent, an allyl group which may have a substituent, an aryl group with the number of carbon of 6 to 20 which may have a substituent, an alkylaryl group, or an alkylaryl group which may have a substituent; and Z represents a halogen atom.
[2] The organic-inorganic composite according to [1], wherein the inorganic compound particle is an inorganic oxide particle.
[3] The organic-inorganic composite according to [1] or [2], wherein an average particle size of the inorganic compound particle is 1 to 200 nm, wherein the average particle size is the average value of the outer diameter of the particle and is measured according to the method described herein.
[4] The organic-inorganic composite according to any one of [1] to [3], wherein maximum length L and minimum width D of the inorganic compound particle satisfy $L/D \geq 1.2$.
[5] The organic-inorganic composite according to any one of [1] to [4], wherein a density of the inorganic compound particle is 2.5 to 8 $g/cm^3$.
[6] The organic-inorganic composite according to any one of [1] to [5], wherein a refractive index of the inorganic compound particle is 1.6 to 4.5, wherein the refractive index is measured according to the method described herein.
[7] The organic-inorganic composite according to any one of [1] to [6], wherein the inorganic compound particle is a zirconium oxide particle or a titanium oxide particle.
[8] The organic-inorganic composite according to any one of claims [1] to [7], wherein a cavity ratio of the inorganic compound particle is 5 to 80%, wherein the cavity ratio is defined by the formula: cavity ratio (% by volume) = (Volume of the cavity portion) / (Volume of the whole particle) x 100, and wherein the cavity ratio is measured according to the method described herein.
[9] The organic-inorganic composite according to any one of [1] to [8], wherein the inorganic compound particle forms a chain-like structure comprising a plurality of primary particles connected in a form of beads.
[10] The organic-inorganic composite according to any one of claims [1] to [9], wherein the inorganic compound particle and the polymer are attached via a coupling agent, wherein the coupling agent has a structure represented by the following formula (1):

$$X\text{-}Si(R^1)(R^2)(R^3) \ldots \qquad (1)$$

wherein X is a polymerization initiating group; $R^1$ and $R^2$ are each independently an alkyl group in which the number of carbon atoms is 1 to 10; and $R^3$ is an alkoxy group in which the number of carbon atoms is 1 to 9, a hydrogen atom, a hydroxy group, or a halogen atom.
[11] The organic-inorganic composite according to any one of [1] to [10], wherein the polymer is a nonionic polymer.
[12] The organic-inorganic composite according to any one of [1] to [11], wherein the polymer comprises methacrylic acid ester or acrylic acid ester as a monomer unit.
[13] The organic-inorganic composite according to any one of [1] to [12], wherein the polymer comprises at least one cross-linkable functional group.
[14] The organic-inorganic composite according to any one of [1] to [13], wherein the polymer contains 0.1 to 60% by mass of fluorine with respect to a total mass of the organic-inorganic composite.

[15] The organic-inorganic composite according to any one of [1] to [14], wherein number-average molecular weight Mn of the polymer is 5000 to 100000 g/mol, wherein Mn is a poly(methyl methacrylate)-based value that is measured by gel permeation chromatography.
[16] The organic-inorganic composite according to any one of [1] to [15], wherein the content of the inorganic compound particle is 5 to 80% by mass with respect to a total mass of the organic-inorganic composite.
[17] The organic-inorganic composite according to any one of [1] to [16], wherein the content of the inorganic compound particle is 2 to 70% by volume with respect to a total volume of the organic-inorganic composite.
[18] The organic-inorganic composite according to any one of [1] to [17], further comprising a free polymer that is not attached to the inorganic compound particle, wherein a content of the free polymer is 30% by mass or less with respect to a total mass of the free polymer and the polymer attached to the inorganic compound particle.
[19] A photonic crystal comprising the organic-inorganic composite according to any one of [1] to [18].
[20] An organic-inorganic composite film comprising the organic-inorganic composite according to any one of [1] to [19], wherein a degree of particle dispersion is 0.8 or less, wherein the degree of particle dispersion = (average deviation of the distance between centroids of adjacent particles) / (distance between centroids of adjacent particles), and is measured according to the method described herein.
[21] The organic-inorganic composite film according to [20], wherein a relative permittivity is less than 7, wherein the relative permittivity is measured according to the method described herein.
[22] The organic-inorganic composite film according to [20] or [21], wherein a ratio of voids in the organic-inorganic composite film is less than 5% by volume with respect to a volume of the film.
[23] The organic-inorganic composite film according to any one of [20] to [22], wherein the organic-inorganic composite is cross-linked.
[24] The organic-inorganic composite film according to [23], wherein the organic-inorganic composite is cross-linked by radical polymerization.
[25] The organic-inorganic composite film according to [23] or [24], wherein the organic-inorganic composite is further cross-linked by a cross-linking agent.
[26] The organic-inorganic composite film according to any one of claims [20] to [25], wherein the degree of particle dispersion is 0.6 or less, wherein the degree of particle dispersion = (average deviation of the distance between centroids of adjacent particles) / (distance between centroids of adjacent particles), and is measured according to the method described herein.
[27] The organic-inorganic composite film according to any one of [20] to [26], wherein a refractive index is 1.55 or more, wherein the refractive index is measured according to the method described herein.
[28] The organic-inorganic composite film according to any one of [20] to [27], wherein pencil hardness is F or more, wherein the pencil hardness is measured at a load of 500 g according to JIS K5600-5-4.
[29] The organic-inorganic composite film according to any one of [20] to [28], wherein a water contact angle is 75° or more, wherein the water contact angle is measured by a sessile drop method using a contact angle meter.
[30] A coating material comprising the organic-inorganic composite according to any one of [1] to [18].
[31] The coating material according to [30], further comprising a photopolymerization initiator or a curing agent.
[32] The coating material according to [30] or [31], wherein a solid content concentration is 0.2 to 30% by mass.
[33] The coating material according to any one of [30] to [32], wherein a viscosity is 5 Pa·s or less.
[34] A manufacturing method for manufacturing the organic-inorganic composite according to any one of [1] to [18], comprising the following step 1 and step 2:

step 1: a step of reacting the inorganic compound particle with a coupling agent having a polymerization initiating group to obtain a surface-modified inorganic compound particle; and
step 2: a step of forming the polymer attached to the inorganic compound particle by living radical polymerization of radical polymerizable monomers initiated by the polymerization initiating group to yield the organic-inorganic composite.

[35] The method for manufacturing the organic-inorganic composite according to [34], further comprising the following step 3 after the step 1 and the step 2:
step 3: a step of attaching a compound comprising a reactive double bond to the organic-inorganic composite after the step 2.
[36] A manufacturing method for manufacturing the organic-inorganic composite according to any one of [1] to [18], comprising the following step 4 and step 5:

step 4: a step of reacting the inorganic compound particle with a coupling agent having a polymerization initiating group and a hydrophobizing agent to obtain a surface-modified inorganic compound particle; and
step 5: a step of forming, after step 4, the polymer attached to the inorganic compound particle by living radical

polymerization of radical polymerizable monomers initiated by the polymerization initiating group to yield the organic-inorganic composite.

[37] The method for manufacturing the organic-inorganic composite according to [36], further comprising the following step 6 after the step 4 and the step 5:
step 6: a step of attaching a compound comprising a reactive double bond to the organic-inorganic composite.
[38] The method for manufacturing the organic-inorganic composite according to any one of [34] to [37], wherein the living radical polymerization is atom transfer radical polymerization.
[39] A manufacturing method for manufacturing the organic-inorganic composite film according to any one of [20] to [29], comprising:

a step of obtaining a coating material comprising an organic-inorganic composite comprising the inorganic compound particle and the polymer attached to the inorganic compound particle; and
a step of applying the coating material onto a substrate to form the organic-inorganic composite film.

[40] The method for manufacturing the organic-inorganic composite film according to [39], further comprising a step of cross-linking the organic-inorganic composite by light curing or thermal curing.
[41] A thermoplastic composition comprising the organic-inorganic composite according to any one of [1] to [18] and a thermoplastic resin.
[42] The thermoplastic composition according to [41], wherein a content of the inorganic acid compound is 1 to 60% by volume with respect to a total volume of the thermoplastic composition.
[43] The thermoplastic composition according to [41] or [42], wherein the thermoplastic resin comprises at least one type of polymethacrylic acid ester, polycarbonate, polyamide, and polyolefin.
[44] A microstructure comprising the organic-inorganic composite according to any one of [1] to [18] or the thermoplastic composition according to any one of [41] to [43], and
having a fine structure consisting of a plurality of projections and depressions, wherein
a distance between apexes of adjacent projections is 10 to 800 nm, and a depth of the depressions is 10 nm to 1 μm, wherein the distance between apexes of adjacent projections and the depth of the depressions is measured according to the method described herein.
[45] An optical material comprising at least one type selected from the group consisting of the organic-inorganic composite according to any one of [1] to [18], the organic-inorganic composite film according to any one of [20] to [29], the thermoplastic composition according to any one of [41] to [43], and the microstructure according to [44].
[46] An antireflection member comprising the optical material according to [45].
[47] An optical lens comprising the optical material according to [45].

## Advantageous Effects of Invention

According to the present invention, an organic-inorganic composite excellent in refractive index and molding processability, etc., with optical properties maintained, a manufacturing method therefor, an organic-inorganic composite film, a manufacturing method therefor, a photonic crystal, a coating material, a thermoplastic composition, a microstructure, an optical material, an antireflection agent, and an optical lens can be provided.
That is, according to one embodiment of the present invention, an optical element that comprises an organic-inorganic composite and is excellent in optical properties and molding processability, and an optical product using it can be provided. This optical element comprises an organic-inorganic composite in which polymers having a uniform chain length are attached to inorganic compound particles. Moreover, according to one embodiment of the present invention, a thermoplastic composition comprises an organic-inorganic composite in which polymers having a uniform chain length are attached to inorganic compound particles.
Due to the specific structure of this organic-inorganic composite, the inorganic particles are uniformly dispersed in the optical element, which can in turn maintain transparency and can suppress variation in optical properties. Moreover, improvement in blue color permeability or the achievement of a refractive index that cannot be achieved by an organic polymer alone is possible by the compounding of inorganic compound particles. Furthermore, in the case where this organic-inorganic composite is thermoplastic, processing can be inexpensively performed by injection molding or the like.
Although in Patent Literature 1, there is description on a molded product obtained by hot-pressing a composition comprising $TiO_2$ sol mixed with a copolymer of bisphenol A and epichlorohydrin, it is difficult to uniformly disperse inorganic particles into a polymer and the invention of Patent Literature 1 differs from the present invention that can uniformly disperse inorganic particles. In Patent Literature 2, there is description about a molded product obtained by injection-molding a thermoplastic composite material comprising $SiO_2$ particles mixed with pMMA. In the case where this material is injection-molded without undergoing melt kneading, it is difficult to uniformly disperse inorganic particles

into a polymer; and when injection molding is performed after melt kneading, the dispersibility of inorganic particles is slightly improved but is insufficient and a molded product tends to yellow.

Moreover, the microstructure of the present invention comprises an organic-inorganic composite in which polymers having a uniform chain length are attached to inorganic compound particles. Due to the specific structure of this organic-inorganic composite, the inorganic particles are uniformly dispersed in the microstructure, which can in turn maintain transparency and can suppress variation in optical properties. Moreover, the achievement of a refractive index that cannot be achieved by an organic polymer alone is possible by the compounding of inorganic compound particles, and strength can be improved. Furthermore, this organic-inorganic composite is thermoplastic and as such, can be inexpensively processed by the thermal imprint method. Although in Patent Literatures 3 and 4, there is description of a photocurable composition that is processed by a photo-imprint method, the disclosure of Patent Literatures 3 and 4 differ from the present invention because the microstructure of the present invention is a material that may be processed by the thermal imprint method and also because the inorganic compound is compounded. Moreover, although in Non Patent Literature 1, there is description about a thermoplastic resin that is thermal imprint-processable, the inorganic compound is not compounded and it is a disclosure that differs from the present invention.

Moreover, according to the present invention, it is possible to form a transparent organic-inorganic composite film having favorable appearance, while a film-forming organic-inorganic composite whose refractive index can be easily controlled can be provided. Furthermore, the organic-inorganic composite constituting the organic-inorganic composite film of the present invention is capable of easily forming a microstructure or a thermoplastic composition, and these can become excellent optical materials.

## Brief Description of Drawings

Figure 1 is a TEM photograph of beaded silica particles.

Figure 2 is a schematic diagram of the surface shape of a microstructure.

Figure 3 is a schematic diagram of the cross-sectional shape of the microstructure.

Figure 4 is a schematic diagram showing a method for calculating the maximum length and minimum width of a particle.

Figure 5 is a morphological observation example of the cross-section of a microstructure.

## Description of Embodiments

Hereinafter, a mode for carrying out the present invention (hereinafter, the present embodiment) will be described in detail.

[Organic-inorganic composite]

The organic-inorganic composite of the present embodiment comprises (A) an inorganic compound particle and (B) a polymer attached to the inorganic compound particle, wherein a molecular weight distribution of the polymer is 2.3 or less.

[(A) Inorganic compound particle]

The inorganic compound constituting the inorganic compound particle is a compound other than organic compounds and specifically refers to a compound constituted of an element other than carbon, except for some carbon compounds.

Examples of the element constituting the inorganic compound include elements of groups 1 to 16 in the periodic table. Although this element is not particularly limited, elements belonging to groups 2 to 14 in the periodic table are preferable. Specific examples thereof include elements of group 2 (Mg, Ca, Ba, etc.), elements of group 3 (La, Ce, Eu, Ac, Th, etc.), elements of group 4 (Ti, Zr, Hf, etc.), elements of group 5 (V, Nb, Ta, etc.), elements of group 6 (Cr, Mo, W, etc.), elements of group 7 (Mn, Re, etc.), elements of group 8 (Fe, Ru, Os, etc.), elements of group 9 (Co, Rh, Ir, etc.), elements of group 10 (Ni, Pd, Pt, etc.), elements of group 11 (Cu, Ag, Au, etc.), elements of group 12 (Zn, Cd, etc.), elements of group 13 (Al, Ga, In, etc.), and elements of group 14 (Si, Ge, Sn, Pb, etc.).

Examples of inorganic compounds comprising these elements include: compounds formed from the above-described elements and negative elements, such as oxides (including complex oxides), halides (fluoride, chloride, bromide, and iodide), oxo acid salts (nitrate, sulfate, phosphate, borate, perchlorate, carbonate, etc.), carbon monooxide, carbon dioxide and carbon disulfide; and prussic acid, and salts such as prussiate, cyanate, thiocyanate, and carbide.

Examples of one that is exceptionally classified into inorganic compounds among carbon compounds include allotropes of carbon, such as diamond, lonsdaleite, graphite, graphene, fullerenes (buckminsterfullerene, carbon nanotube, carbon nanohorn, etc.), glassy carbon, carbyne, amorphous carbon, and carbon nanoform.

One inorganic compound particle may comprise one type or two or more types of the above-described elements. A plurality of types of elements may be evenly present or unevenly distributed in the particle, and the surface of a particle of a compound of some element may be coated with a compound of another element. These inorganic compounds may be used alone or used in combination of a plurality.

Although the size of the inorganic compound particle (particularly, a spherical particle) is not particularly limited, the average particle size (average value of the outer diameter of the particle) is preferably 1 to 200 nm. If the average particle size is larger than 200 nm, there is a tendency that a problem such as the scattering of light becomes easy to cause when the organic-inorganic composite is used as an optical material; and if the average particle size is less than 1 nm, there is a possibility that the intrinsic properties of a substance constituting the inorganic compound particle change. Moreover, it becomes difficult to effectively form a void between inorganic compound particles. From a similar viewpoint, the average particle size of the inorganic matter particle is more preferably 1 to 150 nm, further preferably 10 to 100 nm. Particularly, in the case where transparency is required for a film-forming organic-inorganic composite and a coating film, a molded product, an optical material, etc. using it, it is preferable that the average particle size of the inorganic compound particle should be 10 to 70 nm and it is more preferable to be 10 to 60 nm, because the size of the particle needs to enter the Rayleigh scattering region. A method for measuring the average particle size of the inorganic compound particle will be described in detail in Examples mentioned later.

The shape or crystal form of the inorganic compound particle is not particularly limited and may be various shapes, for example, spherical shapes, crystalline shapes, squamous shapes, columnar shapes, tubular shapes, filamentous shapes, hollow shapes, porous shapes, and beaded shapes.

It is preferable that the inorganic compound particle should be an inorganic oxide particle. The inorganic oxide particle is not particularly limited as long as being a particle formed from an oxide of an element other than carbon, for example, Si, Zr, Ti, Ar, Sn, Ca and Ba. $SiO_2$, $ZrO_2$, $TiO_2$, $Al_2O_3$, $BaTiO_3$ and $CaCO_3$ are preferable, with $SiO_2$ particularly preferred, from the viewpoint of easiness of obtainment. The inorganic compound may have a $ZrO_2$ particle or a $TiO_2$ particle, and $SiO_2$ and $Al_2O_3$, etc. that coats the surface of these particles. These may be used alone or used in combination of a plurality.

[(A1): L/D of inorganic compound particle]

Although the maximum length L and minimum width D of the inorganic compound particle are not particularly limited, it is preferable to satisfy $L/D \geq 1.2$. L/D is 1.2 or more, whereby better moldability is obtained. L/D is more preferably 1.3 to 5, further preferably 1.5 to 3. A method for measuring L/D will be described in detail in Examples mentioned later.

[(A2): Degree of circularity of inorganic compound particle]

The degree of circularity of the inorganic compound particle is preferably 0.92 or less. The degree of circularity is 0.92 or less, whereby the organic-inorganic composite can be molded to easily obtain a molded product. From a similar viewpoint, this degree of circularity is more preferably 0.2 to 0.85, further preferably 0.5 to 0.8. A method for measuring the degree of circularity will be described in detail in Examples mentioned later.

[(A3): Inorganic compound particle with high refractive index]

Although the refractive index of the inorganic compound particle with a high refractive index is not particularly limited, it is preferable to be on the order of 1.6 to 4.5 from the viewpoint of obtainment of the high refractive index. The refractive index of the inorganic compound particle is more preferably 1.7 to 3.0, further preferably 1.8 to 2.5, from the viewpoint of a balance between refractive index design and film formability.

Although the density of the inorganic compound particle with a high refractive index is not particularly limited, it is preferable to be on the order of 2.5 to 8 $g/cm^3$ for easily obtaining the high refractive index in a molded product, etc. The density of the inorganic compound particle is more preferably 3.5 to 5.5 $g/cm^3$ from the viewpoint of a balance between refractive index design and moldability.

[(A3): Inorganic compound particle with low refractive index (inorganic compound particle having cavity ratio of 5 to 80%)]

Although the cavity ratio of the inorganic compound particle is not particularly limited, an inorganic compound particle whose intraparticle cavity ratio is 5 to 80% may be used for the purpose of obtainment of the low refractive index.

If the cavity ratio is less than 5% by volume, a refractive index-reducing effect is small; and if it exceeds 80% by volume, strength is weakened and there is a possibility of breakage in being processed into an optical material, etc. On the other hand, the cavity ratio is 5 to 80% by volume, whereby a good-looking coating film excellent in the ability to control a refractive index can be obtained. From a similar viewpoint, this cavity ratio is more preferably 10 to 60% by volume, further preferably 15 to 40% by volume. The cavity ratio is represented by "Cavity ratio (% by volume) = (Volume of the cavity portion) / (Volume of the whole particle) × 100", and a method for measuring the cavity ratio will be described in detail in Examples mentioned later.

Although the form thereof is not particularly limited, a tubular particle, a hollow particle, and a porous particle are preferable, with a hollow particle and a porous particle particularly preferred, from the viewpoint of refractive index control. Among others, a spherical hollow silica particle and porous silica are preferable from the viewpoint of easiness of obtainment.

The outer shell thickness of the hollow particle is not particularly limited, but is preferably 1 to 30 nm, further preferably 5 to 20 nm, particularly preferably 7 to 12 nm, from the viewpoint of a balance between a refractive index and film formability.

Although the refractive index of the hollow particle is not particularly limited, it is preferable to be on the order of 1.05 to 1.4 because a refractive index-controlling effect can be easily obtained. The refractive index of the inorganic compound particle is more preferably 1.1 to 1.35, further preferably 1.15 to 1.3 from the viewpoint of a balance between refractive index design and film formability.

[(A4): Inorganic oxide particle forming chain-like structure comprising a plurality of primary particles connected in form of beads]

An inorganic oxide particle having a chain-like structure in which a plurality of primary particles are connected in a form of beads (hereinafter, referred to as a "beaded inorganic oxide particle") has, but not limited to, a shape in which particles are connected and/or branched in a form of beads. Specifically, examples thereof can include, as shown in Figure 1, one having a chain-like structure in which spherical colloidal silica particles are connected in a form of beads, and one in which connected colloidal silica is branched (hereinafter, referred to as "beaded silica"). The beaded silica is one in which primary particles of spherical silica are attached by a particle-particle bond via a divalent or higher metal ion. At least 3 or more, further preferably 5 or more, more preferably 7 or more primary particles are connected. The beaded inorganic oxide particle also encompasses one in which primary particles connected in a form of beads are branched. When the beaded inorganic oxide particle is observed at a magnification of 50,000 to 100,000 times using an electron microscope such as SEM and TEM, the number of particles present in forms having the chain-like structure and having the branched structure, not single spherical particles, among the particles present in the visual field is at least 50% or more, preferably 70% or more, further preferably in the range of 90 to 100%. The beaded inorganic oxide particle has, because of its shape, a tendency that the strength of a member, etc. is improved. Furthermore, the case of using an inorganic oxide particle with large L/D, such as the beaded inorganic matter particle mentioned above, is particularly preferable because a structure with projections and depressions is formed on film surface depending on an inorganic oxide content and therefore exerts excellent water repellency as if water droplets roll on the surface of lotus leaves.

[(B) Polymer]

For the polymer constituting the organic-inorganic composite, at least a portion thereof is attached to the surface of the inorganic compound particle via a coupling agent (coupling agent having a polymerization initiating group) mentioned later. The attachment between the inorganic compound particle and the polymer is a covalent bond, from the viewpoint of the strength of attachment. This polymer comprises one type or two or more types of radical polymerizable monomers as a monomer unit. Moreover, the organic-inorganic composite may contain a plurality of types of polymers constituted of different monomer units.

It is preferable that the polymer should be a nonionic polymer. In the present invention, an ionic polymer refers to polymers comprising "alkali metals and alkaline earth metals and salts thereof" or ammonium salts, and the nonionic polymer refers to polymers that do not comprise them.

The "alkali metals and alkaline earth metals and salts thereof" are liberated to form a hydrate, which in turn becomes responsible for metal corrosion and becomes responsible for a breakdown in an optical material or an electronic material using many metal wires, etc. Moreover, in being used in organic EL, a lithium ion cell, etc., there is also a

possibility of having adverse influence on conductivity.

Since the "alkali metals and alkaline earth metals and salts thereof" and the ammonium salts exhibit alkaline properties upon contact with water, the control of reaction becomes difficult in some cases.

[Coupling agent]

The coupling agent according to the present embodiment is a compound that is used for connecting the inorganic compound particle surface and the organic polymer mentioned above. This coupling agent is not particularly limited as long as being a compound having a polymerization initiating group defined below and a functional group that reacts with the inorganic compound particle surface to form a bond. In this regard, the inorganic compound particle surface may be formed from the inorganic compound itself or may be surface-treated. The surface treatment as referred to herein is to modify the inorganic compound particle surface with a functional group by chemical reaction, heat treatment, light irradiation, plasma irradiation, radiant ray irradiation, etc.

A method for attaching the coupling agent to the inorganic compound particle surface is not particularly limited, but includes, for example, a method of reacting the coupling agent with a hydroxy group in the inorganic compound particle surface, and a method of reacting the coupling agent with a functional group introduced by the surface treatment of the inorganic compound particle surface. It is also possible to further react a coupling agent with the coupling agent attached to the inorganic compound particle to connect a plurality of coupling agents. Moreover, depending on the type of the coupling agent, water or catalyst may be used in combination.

Examples of the functional group carried by the coupling agent include, but not particularly limited to, a phosphoric acid group, a carboxy group, an acid halide group, an acid anhydride group, an isocyanate group, a glycidyl group, a chlorosilyl group, an alkoxysilyl group, a silanol group, an amino group a phosphonium group, and a sulfonium group, in the case of forming a bond by reaction with the hydroxy group in the inorganic compound particle surface. Among others, one that is preferred from the viewpoint of a balance between reactivity and the residual amount of acid or coloring is an isocyanate group, a chlorosilyl group, an alkoxysilyl group, and a silanol group, with a chlorosilyl group and an alkoxysilyl group further preferred.

Although the number of the functional group of the coupling agent is not particularly limited, it is preferable to be monofunctional or bifunctional, particularly preferably monofunctional. If two or more functional groups are present, a condensate (by-product) of the coupling agent is formed and the removal thereof becomes difficult. Moreover, because an unreacted functional group remains in an organic-inorganic composite film, alcohol, water, or the like is formed depending on a step of thermal drying or thermal processing, etc., and becomes responsible for the foaming of the film. Moreover, this is also because it may become responsible for the aggregation of inorganic compound particles.

The polymerization initiating group carried by the coupling agent is a functional group having the ability to initiate polymerization. Examples thereof include polymerization initiating groups that are used in nitroxide-mediated radical polymerization (hereinafter, referred to as "NMP"), atom transfer radical polymerization (hereinafter, referred to as "ATRP"), and reversible addition-fragmentation chain transfer polymerization (hereinafter, referred to as "RAFT") mentioned later.

The polymerization initiating group for NMP is not particularly limited as long as being a group to which a nitroxide group is bonded.

The polymerization initiating group for ATRP is typically a group containing a halogen atom. It is preferable that the bond dissociation energy of the halogen atom should be low. Examples of preferable structures include groups in which a halogen atom bonded to a tertiary carbon atom, a halogen atom bonded to a carbon atom adjacent to an unsaturated carbon-carbon bond in a vinyl group, a vinylidene group, and a phenyl group, etc., or a halogen atom bonded directly to a heteroatom-containing coupling group such as a carbonyl group, a cyano group, and a sulfonyl group or bonded to atoms adjacent to these is introduced.

In the present invention the coupling agent has a polymerization initiating group presented by formula (1) or (2). Formula (1) is an organic halide group and formulat (2) is a sulfonyl halide group:

[Chemical Formula 1]

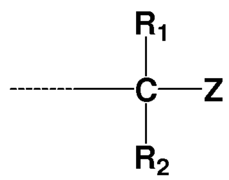

・・・ (1)

[Chemical Formula 2]

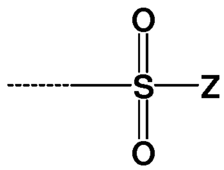

· · · (2)

In formulas (1) and (2), $R_1$ and $R_2$ each independently represent a hydrogen atom, an alkyl group with the number of carbon of 1 to 20 which may have a substituent, an allyl group which may have a substituent, an aryl group with the number of carbon of 6 to 20 which may have a substituent, an alkylaryl group, or an alkylaryl group which may have a substituent; and Z represents a halogen atom.

The polymerization initiating group of formula (1) may have a carbonyl group, as shown in the following formula (3). In formula (3), $R_1$, $R_2$, and Z have the same meanings as in $R_1$, $R_2$, and Z in formula (1).

[Chemical Formula 3]

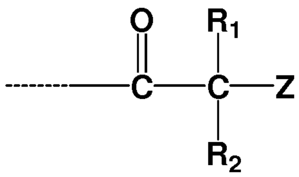

· · · (3)

Specific examples of the polymerization initiating group of formula (3) are shown in the following chemical formulas:

[Chemical Formula 4]

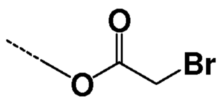
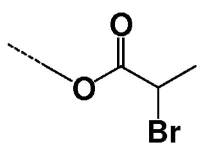
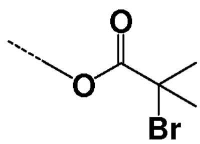
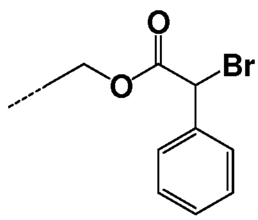
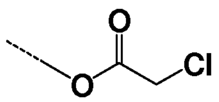
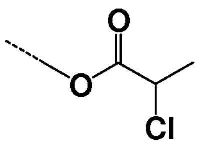
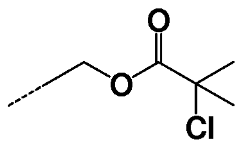
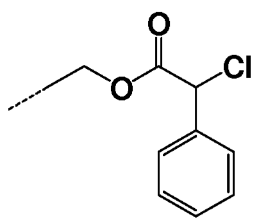
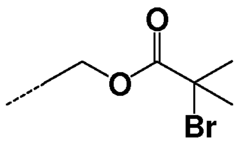
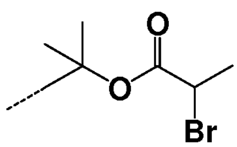
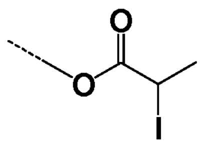

The polymerization initiating group for RAFT is not particularly limited as long as being a general radical polymerization initiating group. Moreover, a group containing a sulfur atom functioning as a RAFT agent may be used as the polymerization initiating group. Examples of the polymerization initiating group include trithiocarbonate, dithioester, thioamide, thiocarbamate, dithiocarbamate, thiouranium, thiourea, dithiooxamide, thioketone, and trisulfide.

It is preferable that the coupling agent should have a structure represented by the following formula 1:

X-Si($R^1$)($R^2$)($R^3$) ... (formula 1)

In formula 1, X is the polymerization initiating group mentioned above; $R^1$ and $R^2$ are each independently an alkyl group in which the number of carbon atoms is 1 to 10; and $R^3$ is an alkoxy group in which the number of carbon atoms is 1 to 10, a hydrogen atom, a hydroxy group, or a halogen atom.

Specific examples of suitable coupling agents include silane compounds as follows:

3-(2-bromoisobutyloxy)propyldimethylchlorosilane (Cas No: 370870-81-8),
3-(2-bromoisobutyloxy)propyldichloromethylsilane (Cas No: 1057260-39-5),
3-(2-bromoisobutyloxy)propyltrichlorosilane (Cas No:688359-84-4),
3-(methoxydimethylsilylpropyl)-2-bromo-2-methylpropionate (Cas No:531505-27-8),
3-(dimethoxymethylsilylpropyl)-2-bromo-2-methylpropionate (Cas No: 1186667-60-6),
3-(trimethoxysilylpropyl)-2-bromo-2-methylpropionate (Cas No:314021-97-1),
(3-(2-bromoisobutyryl)propyl)dimethylethoxysilane (Cas No:265119-86-6),
(3-(2-bromoisobutyryl)propyl)methyldiethoxysilane (Cas No:1186667-65-1),
(3-(2-bromoisobutyryl)propyl)triethoxysilane (Cas No:880339-31-1),
(3-(2-bromopropionyl)propyl)dimethylchlorosilane (Cas No:438001-36-6),
(3-(2-bromopropionyl)propyl)trichlorosilane (Cas No:663174-64-9),
(3-(2-bromopropionyl)propyl)dimethyl methoxysilane (Cas No:861807-46-7),
(3-(2-bromopropionyl)propyl)dimethylethoxysilane (Cas No:265119-85-5),
(3 - (2-bromopropionyl)propyl)triethoxysilane (Cas No:1233513-06-8).

Examples of the polymeric form of the polymer include, but not particularly limited to, homopolymers, periodic copolymers, block copolymers, random copolymers, gradient copolymers, tapered copolymers, and graft copolymers. Among others, copolymers are preferable from the viewpoint of Tg or control of physical properties such as a refractive index.

It is preferable that the polymer should be homopolymers or copolymers of acrylic acid esters and methacrylic acid esters, from the viewpoint of solubility in general-purpose organic solvents or suppression of thermal decomposition.

It is preferable that radical polymerizable monomers should be ATRP or RAFT.

Examples of the monomers include ethylene, "dienes such as but-1,3-diene, 2-methylbut-1,3-diene, and 2-chlorobut-1,3-diene", "styrenes such as styrene, $\alpha$-methylstyrene, 4-methylstyrene, 4-hydroxystyrene, acetoxystyrene, 4-chloromethylstyrene 2,3,4,5,6-pentafluorostyrene, and 4-aminostyrene", "acrylic acid esters such as methyl acrylate, ethyl acrylate, n-butyl acrylate, tert-butyl acrylate, isobutyl acrylate, 2-ethylhexyl acrylate, octyl acrylate, octadecyl acrylate, cyclohexyl acrylate, benzyl acrylate, trimethylsilyl acrylate, acrylic acid amide, 2-(dimethylamino)ethyl acrylate, 2,2,2-trifluoroethyl acrylate, 2,2,3,3-tetrafluoropropyl acrylate, 1,1,1,3,3,3-hexafluoroisopropyl acrylate, 1H,1H,2H,2H-heptadecafluorodecyl acrylate, 1H,1H,3H-hexafluorobutyl acrylate, 1H,1H,5H-octafluoropentyl acrylate, 1H,1H-heptafluorobutyl acrylate, 2-isocyanatoethyl acrylate, and 1,1-(bisacryloyloxymethyl)ethyl isocyanate", "methacrylic acid esters such as methyl methacrylate, ethyl methacrylate, n-butyl methacrylate, tert-butyl methacrylate, isobutyl methacrylate, 2-ethylhexyl methacrylate, octyl methacrylate, octadecyl methacrylate, cyclohexyl methacrylate, benzyl methacrylate, trimethylsilyl methacrylate, methacrylic acid amide, 2-(dimethylamino)ethyl methacrylate, 2-(diethylamino)ethyl methacrylate, 2,2,2-trifluoroethyl methacrylate, 1H,1H,2H,2H-heptadecafluorodecyl methacrylate, 1H,1H,3H-hexafluorobutyl methacrylate, 2,2,3,3-tetrafluoropropyl methacrylate, 1H,1H,5H-octafluoropentyl methacrylate, 1H,1H,7H-dodecafluoropentyl methacrylate, 2-isocyanatoethyl methacrylate, 2-(0-[1'-methylpropylideneamino]carboxyamino)ethyl methacrylate, and 2-[(3,5-dimethylpyrazolyl)carbonylamino]ethyl methacrylate", "(meth)acrylic acid derivatives such as 2-hydroxyethyl acrylate, 2-hydroxypropyl acrylate, 3-hydroxypropyl acrylate, 2-hydroxybutyl acrylate, 3-hydroxybutyl acrylate, 4-hydroxybutyl acrylate, 2-hydroxyhexyl acrylate, 6-hydroxyhexyl acrylate, 3-perfluorobutyl-2-hydroxypropyl acrylate, 3-perfluorohexyl-2-hydroxypropyl acrylate, 3-perfluorooctyl-2-hydroxypropyl acrylate, 2-hydroxyethyl methacrylate, 2-hydroxypropyl methacrylate, 3-hydroxypropyl methacrylate, 2-hydroxybutyl methacrylate, 3-hydroxybutyl methacrylate, 4-hydroxybutyl methacrylate, 6-hydroxyhexyl methacrylate, cyclohexyl methacrylate, 3-perfluorobutyl-2-hydroxypropyl methacrylate, 3-perfluorohexyl-2-hydroxypropyl methacrylate, 3-perfluorooctyl-2-hydroxypropyl methacrylate, acrylamide, methacrylamide, N-cyclopropylacrylamide, N,N-dimethylacrylamide, N-hydroxymethylacrylamide, N-isopropylacrylamide, acrylonitrile, and methacrylonitrile", "vinyl esters such as vinyl acetate, vinyl propionate, vinyl benzoate, and vinyl butyrate", "vinyl ethers such as vinyl methyl ether and vinyl ethyl ether", "vinyl methyl ketone, vinyl hexyl ketone, vinyl ketones, N-vinyl compounds such as N-vinylpyrrole, N-vinylcarbazole, N-vinylindole, and N-vinylpyrrolidone", "allyl compounds such as allyl alcohol, allyl chloride, allyl acetate, vinyl chloride, and vinylidene chloride", "compounds having a fluorine-alkyl group, such as vinyl fluoride and vinylidene fluoride", "functional monomers such as glycidyl acrylate, glycidyl methacrylate, and 4-glycidylstyrene", and "compounds having two or more reactive double

bonds, such as allyl acrylate, allyl methacrylate, diacrylic anhydride, 1,2-ethanediyl diacrylate, pentaerythritol triacrylate, pentaerythritol tetraacrylate, and divinylbenzene". Among others, it is preferable to select styrenes, acrylic acid ester, or methacrylic acid ester in the case of particularly emphasizing the transparency of a coating film or a molded product.

Among the above-described monomers, it is preferable to select at least one or more types of monomers containing fluorine for the purpose of refractive index control or imparting of water repellency/oil repellency, and 2,2,2-trifluoroethyl acrylate, 2,2,3,3-tetrafluoropropyl acrylate, 2,2,3,3,3-pentafluoropropyl acrylate, 1,1,1,3,3,3-hexafluoroisopropyl acrylate, 2,2,2-trifluoroethyl methacrylate, 2,2,3,3-tetrafluoropropyl methacrylate, 2,2,3,3,3-pentafluoropropyl methacrylate, and 1,1,1,3,3,3-hexafluoroisopropyl methacrylate are further preferable because of being easily obtainable.

Use of at least one type of monomer selected from the group consisting of acrylic acid ester and methacrylic acid ester is preferable as a monomer that does not contain fluorine, because of being easily obtainable, and, among others, a monomer selected from methyl acrylate, ethyl acrylate, butyl acrylate, methyl methacrylate, ethyl methacrylate, and butyl methacrylate is preferable.

Specific examples of preferable monomers are shown below by chemical formulas.

[Chemical Formula 5]

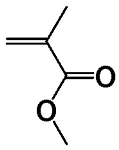
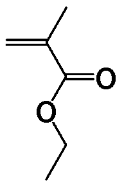
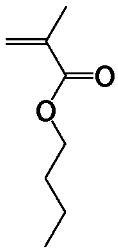
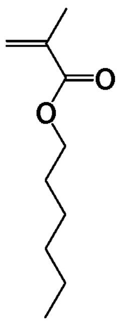
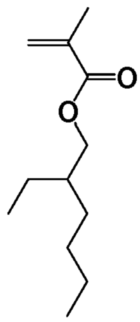
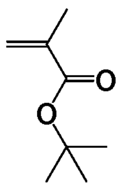
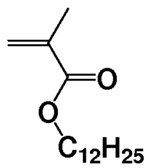

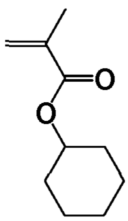
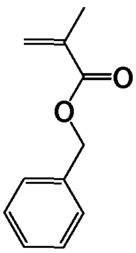
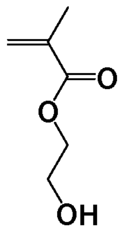
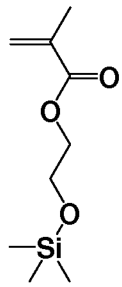

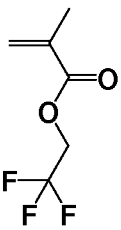
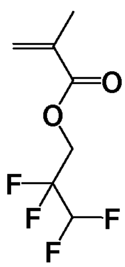
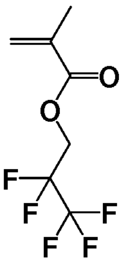
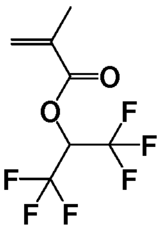

Methacrylic acid ester

[Chemical Formula 6]

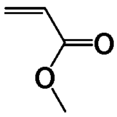
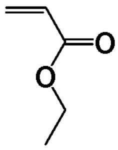
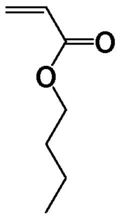
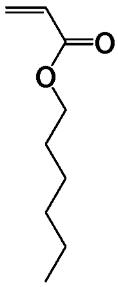
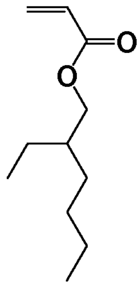
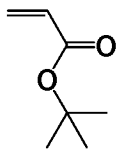
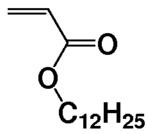

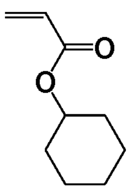
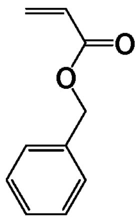

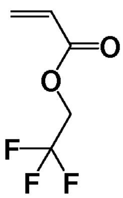
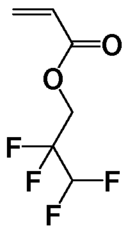
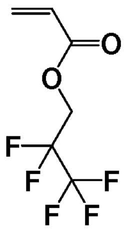
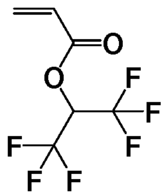

Acrylic acid ester

[Chemical Formula 7]

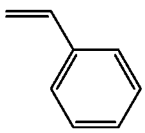
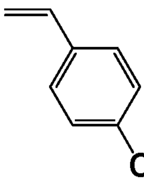
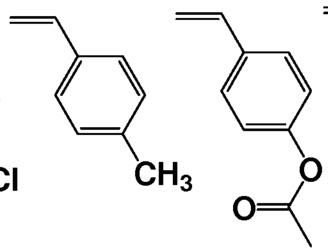
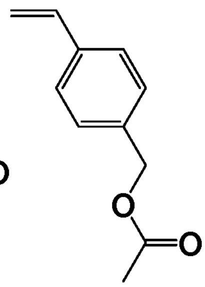

Styrenes

The polymer may have a cross-linkable functional group for the purpose of cross-linking the organic-inorganic composite. Although the type of the cross-linkable functional group is not particularly limited, a (meth)acryloyl group, a cyclic ether group (an epoxy group, an oxetane group, etc.), or the like is preferable from the viewpoint of reactivity.

Moreover, it is preferable to select a nonionic monomer as a raw material, for rendering the polymer nonionic. In the present invention, an ionic monomer refers to monomers comprising "alkali metals and alkaline earth metals and salts thereof" or ammonium salts, and the nonionic monomer refers to monomers that do not comprise them.

Examples of the ionic monomer include alkali metal salts or ammonium salts of (meth)acrylic acid and alkali metal salts of acrylamide-2-ethylsulfonic acid, and examples of the alkali metal salts include sodium salt, potassium salt, and lithium salt.

The reactive double bond that may be used in the present embodiment refers to unsaturated bonds that are capable of curing by initiating polymerization reaction from a compound that forms radical (photo-radical initiator) by irradiation with active light rays such as ultraviolet light mentioned later. A carbon-carbon double bond in a (meth)acryloyl group (acryloyl group or methacryloyl group) is preferable as the reactive double bond.

Examples of a method for introducing the reactive double bond into the polymer include a method of synthesizing the polymer using a compound having two or more reactive double bonds as a monomer, and a method of synthesizing the polymer from a monomer having a functional group, and then adding a compound having a reactive double bond to the functional group.

A compound that can suppress problems such as gelation in synthesizing the organic polymer and has two or more double bonds differing in reactivity is preferable as the compound having two or more reactive double bonds, though not limited thereto. Among others, allyl acrylate is more preferable because being easily obtainable.

As an approach for adding the compound having a reactive double bond to the polymer, it is preferable to react a functional group in the polymer with a functional group in the compound having a reactive double bond. Functional groups such as a hydroxy group, an alkoxysilyl group, an epoxy group, a carboxyl group, an isocyanate group, an amino group, and an amide group are preferable as the functional group in the polymer or in the compound having a reactive double bond. Examples of combinations of these functional groups include hydroxy group-carboxyl group, amino group-carboxyl group, amide group-carboxyl group, alkoxysilyl group-carbonyl group, isocyanate group-hydroxy group, epoxy group-hydroxy group, alkoxysilyl group-hydroxy group, amide group-hydroxy group, and epoxy group-amino group.

Hydroxyalkyl vinyl ethers such as hydroxyethyl vinyl ether, hydroxybutyl vinyl ether, and cyclohexanedimethanol monovinyl ether; ethylene glycol monovinyl ethers such as diethylene glycol monovinyl ether, triethylene glycol monovinyl ether, and tetraethylene glycol monovinyl ether; hydroxyalkyl allyl ethers such as hydroxyethyl allyl ether, hydroxybutyl allyl ether, and cyclohexanedimethanol monoallyl ether; hydroxyalkyl vinyl esters such as hydroxyethylcarboxylic acid vinyl ester, hydroxybutylcarboxylic acid vinyl ester, and ((hydroxymethylcyclohexyl)methoxy)acetic acid vinyl ester; hydroxyalkylcarboxylic acid allyl esters such as hydroxyethylcarboxylic acid allyl ester, hydroxybutylcarboxylic acid allyl ester, and ((hydroxymethylcyclohexyl)methoxy)acetic acid allyl ester; (meth)acrylic acid hydroxyalkyl esters such as hydroxyethyl (meth)acrylate, and the like are preferable as the compound having a reactive double bond and having a hydroxy group.

3-(Meth)acryloyloxypropyltrimethoxysilane, 3-(meth)acryloyloxypropylmethyldimethoxysilane, trimethoxysilylpropyl vinyl ether, and the like are preferable as the compound having a reactive double bond and having an alkoxysilyl group.

(Meth)acrylic acid, itaconic acid, fumaric acid, maleic acid, maleic anhydride, citraconic acid, undecylenic acid, and the like are preferable as the compound having a reactive double bond and having a carboxyl group. Aminopropyl vinyl ether, diethylaminoethyl vinyl ether, and the like are preferable as the compound having an amino group.

2-Isocyanatoethyl (meth)acrylate, 1,1-bis(acryloylmethyl)ethyl isocyanate, 2-(0-[1'-methylpropylideneamino]carboxyamino)ethyl methacrylate, 2-[(3,5-dimethylpyrazolyl)carbonylamino]ethyl methacrylate, and the like are preferable as the compound having a reactive double bond and having an isocyanate group.

Glycidyl vinyl ether, glycidylcarboxylic acid vinyl ester, glycidyl allyl ether, glycidyl (meth)acrylate, methylglycidyl (meth)acrylate, 3,4-epoxycyclohexylmethyl (meth)acrylate, and the like are preferable as the compound having a reactive double bond and having an epoxy group.

In the case of introducing an isocyanate group as the cross-linkable functional group, an approach of synthesizing the polymer by using 2-isocyanatoethyl (meth)acrylate, 2-(0-[1'-methylpropylideneamino]carboxyamino)ethyl methacrylate, and 2-[(3,5-dimethylpyrazolyl)carbonylamino]ethyl methacrylate, etc. as one of the monomer units is preferable from the viewpoint of easiness of polymerization reaction and reactivity of the functional group, though not particularly limited thereto. Furthermore, it is also possible to introduce a (meth)acryloyl group as the cross-linkable functional group by synthesizing the polymer with use of 2-isocyanatoethyl (meth)acrylate, etc. as one of the monomer units and reacting an isocyanate group in the obtained polymer with a hydroxy group in hydroxyethyl (meth)acrylate or the like.

In the case of introducing a (meth)acryloyl group as the cross-linkable functional group, an approach of synthesizing the polymer by using hydroxyethyl (meth)acrylate as one of the monomer units, and then reacting a hydroxy group in the polymer with an isocyanate group in 2-isocyanatoethyl (meth)acrylate, 1,1-(bisacryloyloxymethyl)ethyl isocyanate, or the like is more preferable from the viewpoint of easiness of polymerization reaction and reactivity of the functional group.

Moreover, in the case of introducing a cyclic ether group (epoxy group, etc.) as the cross-linkable functional group, an approach of synthesizing the polymer by using glycidyl (meth)acrylate as one of the monomer units is preferable from the viewpoint of easiness of polymerization reaction.

Examples of the shape of the polymer include, but not particularly limited to, chain-like shapes, branched chain-like shapes, ladder shapes, and star shapes. It is also possible to improve dispersibility or compatibility by introducing other arbitrary substituents, etc.

Although the molecular weight of the polymer is not particularly limited, the number-average molecular weight (hereinafter, referred to as "Mn") thereof is preferably 3000 to 500000 g/mol, more preferably 4000 to 200000 g/mol, further preferably 5000 to 100000 g/mol, particularly preferably 10000 to 80000 g/mol. If Mn is less than 3000 g/mol, there is a tendency that the aggregation of inorganic matter particles becomes easy to cause and furthermore, it becomes difficult to maintain the shape of a film because the thickness of a polymer layer formed around the inorganic matter

particle becomes thinner. If it exceeds 500000 g/mol, there is a tendency that properties as the inorganic matter particle become difficult to exert and the voidage between organic-inorganic composites decreases.

The molecular weight distribution of the polymer is determined by Mw/Mn from a weight-average molecular weight (hereinafter, referred to as "Mw") and Mn. Mn and Mw as referred to herein are poly(methyl methacrylate)-based values that are measured by gel permeation chromatography (GPC), as described in detail in Examples mentioned later.

In the present embodiment, the molecular weight distribution (degree of molecular weight dispersion) of the polymer contained in the organic-inorganic composite is 2.3 or less. It is preferable that the molecular weights (chain lengths) of polymers should be uniform, i.e., molecular weight distribution should be a value close to 1, from the viewpoint of dispersibility of the inorganic matter particle and film formability. From such a viewpoint, the molecular weight distribution is preferably 1.0 to 2.2, more preferably 1.0 to 2.1, further preferably 1.0 to 1.9, particularly preferably 1.0 to 1.8.

In the case where chain transfer reaction, bimolecular termination reaction, or the like has occurred in polymerization reaction, the molecular weight distribution becomes larger than 2.3. In this case, there arises such a problem that a free polymer is formed or inorganic matter particles aggregate. Moreover, because the polymer attached to the inorganic matter particle mainly function as a binder in a coating of the organic-inorganic composite of the present embodiment, it is exceeding important, also from the viewpoint of self film formability, to form a more homogeneous shell layer in which the molecular weights of polymers are uniform.

[Properties of organic-inorganic composite]

Although the glass transition temperature (hereinafter, referred to as Tg) of the organic-inorganic composite is not particularly limited, it is preferable to be -10 to 180°C, more preferably 0 to 160°C, further preferably 20 to 150°C, particularly preferably 40 to 120°C, on the ground that favorable film formability can be imparted with stickiness suppressed.

The halogen content of the organic-inorganic composite refers to the total amount of bromine and chlorine. Although this halogen content is not particularly limited, it is preferable to be 0.001 to 2.5% by mass, more preferably 0.01 to 1.5% by mass, further preferably 0.1 to 1% by mass, with respect to the total mass of the organic-inorganic composite on the ground that film formability is favorable.

Although the fluorine content of the organic-inorganic composite is not particularly limited, it is preferable to be 0.1 to 60% by mass, more preferably 1 to 50% by mass, further preferably 5 to 40% by mass, with respect to the total mass of the organic-inorganic composite in consideration of a balance between dispersibility in general-purpose organic solvents and a refractive index-controlling effect, water/oil repellency, or transparency.

The content of the inorganic compound particle in the organic-inorganic composite is 96% by mass or less, preferably 5 to 80% by mass, further preferably 15 to 75% by mass, particularly preferably 25 to 70% by mass, with respect to the total mass of the organic-inorganic composite from the viewpoint of refractive index control and film formability or moldability. Moreover, the content of the inorganic compound particle is preferably 2 to 70% by volume, further preferably 7 to 65% by volume, particularly preferably 10 to 60% by volume, with respect to the total volume of the organic-inorganic composite.

Although the copper content of the organic-inorganic composite is not particularly limited, it is preferable to be 0.2% by mass or less, more preferably 0.05% by mass or less, further preferably 0.02% by mass or less, particularly preferably 0.005% by mass or less, for suppressing the coloring of a coating film or a molded product.

[Method for manufacturing organic-inorganic composite]

The organic-inorganic composite according to the present embodiment can be obtained by, for example, a method comprising: a step of attaching a coupling agent having a polymerization initiating group to the surface of the inorganic compound particle; a step of forming the polymer by living radical polymerization initiated by the polymerization initiating group; and, if necessary, a step of adding a compound having a reactive double bond to the polymer.

A surface-modified inorganic compound particle in which the coupling agent is introduced in the surface of the inorganic compound particle is obtained by the reaction between the inorganic compound particle and the coupling agent. The reaction between the inorganic compound particle and the coupling agent can be performed in a reaction solution in which these are dispersed or dissolved. In this regard, the reaction solution may be heated. After the reaction with the coupling agent or simultaneously with the coupling agent, a hydrophobizing agent may be added and reacted. Although the type of the hydrophobizing agent is not particularly limited as long as being one that reacts with a residual hydroxy group on the inorganic particle surface, examples thereof include 1,1,1,3,3,3-hexamethyldisilazane (HMDS), chlorotrimethylsilane (TMS), dimethylethylchlorosilane, chlorodimethylpropylsilane, butylchlorodimethylsilane, chlorotriethylsilane, chlorodimethylphenylsilane, benzylchlorodimethylsilane, chlorodimethyl(3-phenylpropyl)silane, trimethylethoxysilane, triethylethoxysilane, and hexamethyldisiloxane.

Living radical polymerization (hereinafter, referred to as "LRP") is selected as the radical polymerization because

the degree of molecular weight dispersion (molecular weight distribution) of the polymer to be formed can be reduced. LRP includes NMP, ATRP, and RAFT. In general, among these, ATRP is particularly preferable in terms of versatility of a polymerization initiator, many types of applicable monomers, a polymerization temperature, etc. Moreover, for the organic-inorganic composite material of the present invention, it is required to suppress the formation of a free polymer that is not attached to the inorganic compound particle, and also from this viewpoint, ATRP in which polymerization control is easy is particularly preferable.

The scheme of the radical polymerization is not particularly limited, and, for example, a bulk polymerization method or a solution polymerization method can be selected. Furthermore, a scheme such as suspension polymerization, emulsion polymerization, dispersion polymerization, or seed polymerization may be adopted from the viewpoint of productivity or safety.

The polymerization temperature is not particularly limited and can be appropriately selected according to a polymerization method and a monomer species. For example, in the case of ATRP or RAFT, the polymerization temperature is preferably -50°C to 200°C, further preferably 0°C to 150°C, particularly preferably 20°C to 130°C. In the case where the monomer comprises acrylic acid ester and/or methacrylic acid ester, polymerization is performed at 50 to 130°C, whereby polymerization can be performed in a relatively short time with gelation or bimolecular termination suppressed.

The polymerization time is not particularly limited and can be appropriately selected according to a polymerization method or a monomer species, but can be set to for example, 5 minutes to 100 hours from the viewpoint of a balance between productivity and the stability of quality.

The polymerization reaction may be performed without a solvent or performed in the presence of a solvent. In the case of using a solvent, solvents in which the dispersibility of the surface-modified inorganic compound particle and the solubility of a polymerization catalyst are favorable are preferable. The solvents may be used alone or used in combination of a plurality of types.

Examples of the type of the solvent include, but not particularly limited to, methyl isobutyl ketone (MIBK), methyl ethyl ketone (MEK), anisole, toluene, xylene, tetrahydrofuran (THF), 1-propanol, 2-propanol, methanol, ethanol, 1-butanol, t-butanol, acetonitrile, dimethylformamide (DMF), dimethylacetamide, dimethyl sulfoxide (DMSO), n-methylpyrrolidone, 1,4-dioxane, and water.

Although the amount of the solvent used is not particularly limited, for example, 0 to 2000 parts by mass are preferable, with 0 to 1000 parts by mass more preferred, with respect to 100 parts by mass of monomers. If the amount of the solvent is small, a reaction rate tends to be large and is advantageous; however, polymerization solution viscosity tends to become higher depending on a monomer species or polymerization conditions. Moreover, if the amount of the solvent is large, polymerization solution viscosity becomes lower; however, a reaction rate decreases, and it is therefore preferable to appropriately adjust a compounding ratio.

Although the polymerization reaction may be performed without a catalyst or performed with use of a catalyst, it is preferable to use a catalyst from the viewpoint of productivity. Although the type of the catalyst is not particularly limited, an arbitrary catalyst can be appropriately used depending on a polymerization method, a monomer species, etc. For example, in the case of ATRP, the type of the catalyst can be appropriately selected from among various types of generally known ones according to a polymerization scheme, etc. Specifically, for example, a metal catalyst containing Cu (0), $Cu^+$, $Cu^{2+}$, $Fe^+$, $Fe^{2+}$, $Fe^{3+}$, $Ru^{2+}$, or $Ru^{3+}$ can be used. Among others, particularly, a monovalent copper compound containing $Cu^+$ and zerovalent copper are preferable for achieving the high-level control of a molecular weight or a molecular weight distribution. Specific examples thereof include Cu (0), CuCl, CuBr, $CuBr_2$, and $Cu_2O$. These may be used alone or used in combination of a plurality. The amount of the catalyst used is usually 0.01 to 100 mol, preferably 0.01 to 50 mol, further preferably 0.01 to 10 mol, with respect to 1 mol of the polymerization initiating group.

The metal catalyst is usually used in combination with an organic ligand. Examples of ligand atoms for metals include a nitrogen atom, an oxygen atom, a phosphorus atom, and a sulfur atom. Among others, a nitrogen atom and a phosphorus atom are preferable. Specific examples of the organic ligand include 2,2'-bipyridine and its derivatives, 1,10-phenanthroline and its derivatives, tetramethylethylenediamine, N,N,N',N",N"-pentamethyldiethylenetriamine (hereinafter, referred to as "PMDETA"), tris(dimethylaminoethyl)amine (hereinafter, referred to as "Me6TREN"), tris(2-pyridylmethyl)amine, triphenylphosphine, and tributylphosphine. In the case of performing the polymerization of acrylic acid esters or methacrylic acid esters, PMDETA, Me6TREN, 2,2'-bipyridine and 4,4'-di(5-nonyl)-2,2'-dipyridine, one of its derivatives (hereinafter, referred to as "dNbpy") are preferable. Specific examples of the organic ligand are shown by the following chemical formulas:

[Chemical Formula 8]

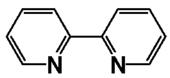
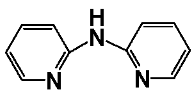
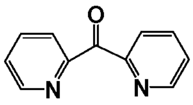
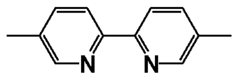
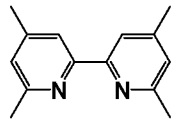
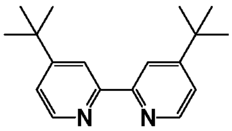
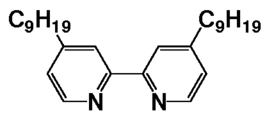
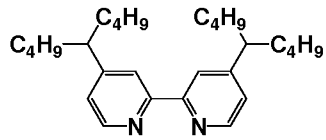
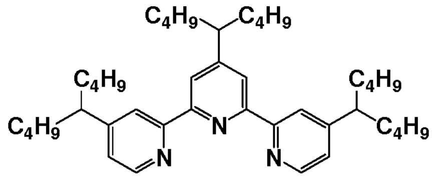
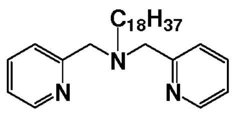
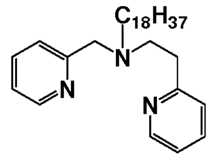
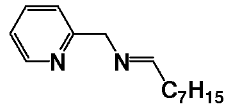
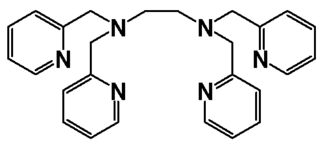
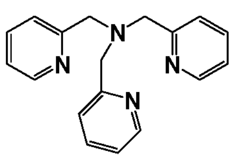
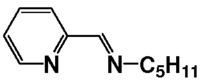
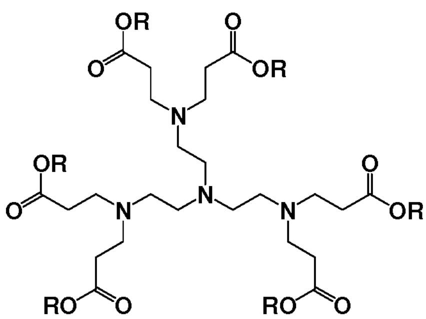
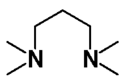
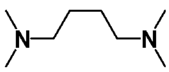
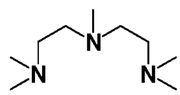
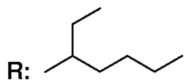
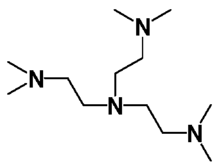

The metal catalyst and the organic ligand may be separately added and mixed in the polymerization system, or they may be added into the polymerization system after being mixed in advance. Particularly, in the case of using a copper compound, the former method is preferable.

In addition to those described above, additives can be used, if necessary, in the polymerization reaction. Examples of the types of the additives include, but not particularly limited to, dispersants/stabilizers and emulsifiers (surfactants).

Although the dispersants/stabilizers are not particularly limited as long as being one that has functions thereof, examples thereof include various types of hydrophobic or hydrophilic dispersants and stabilizers such as: polystyrene derivatives such as polyhydroxystyrene, polystyrenesulfonic acid, vinylphenol-(meth)acrylic acid ester copolymers, styrene-(meth)acrylic acid ester copolymers, and styrene-vinylphenol-(meth)acrylic acid ester copolymers; poly(meth)acrylic acid derivatives such as poly(meth)acrylic acid, poly(meth)acrylamide, polyacrylonitrile, polyethyl (meth)acrylate, and polybutyl (meth)acrylate; polyvinyl alkyl ether derivatives such as polymethyl vinyl ether, polyethyl vinyl ether, polybutyl vinyl ether, and polyisobutyl vinyl ether; cellulose derivatives such as cellulose, methylcellulose, cellulose acetate, cellulose nitrate, hydroxymethylcellulose, hydroxyethylcellulose, hydroxypropylcellulose, and carboxymethylcellulose; polyvinyl acetate derivatives such as polyvinyl alcohol, polyvinylbutyral, polyvinylformal, and polyvinyl acetate; nitrogen-containing polymer derivatives such as polyvinylpyridine, polyvinylpyrrolidone, polyethyleneimine, and poly-2-methyl-2-oxazoline; polyvinyl halide derivatives such as polyvinyl chloride and polyvinylidene chloride; and polysiloxane derivatives such as polydimethylsiloxane. These may be used alone or used in combination of a plurality.

Although the emulsifiers (surfactants) are not particularly limited as long as being one that has functions thereof, examples thereof include: anionic emulsifiers such as alkyl sulfuric acid ester salts such as sodium lauryl sulfate, alkylbenzenesulfonate such as sodium dodecylbenzenesulfonate, alkylnaphthalenesulfonate, fatty acid salts, alkyl phosphate, and alkyl sulfosuccinate; cationic emulsifiers such as alkylamine salts, quaternary ammonium salts, alkylbetaine, and amine oxide; and nonionic emulsifiers such as polyoxyethylene alkyl ether, polyoxyethylene alkyl ether, polyoxyethylene alkylallyl ether, polyoxyethylene alkylphenyl ether, sorbitan fatty acid ester, glycerin fatty acid ester, and polyoxyethylene fatty acid ester. These may be used alone or used in combination of a plurality.

As the step of adding a compound having a cross-linkable functional group containing a reactive double bond to the polymer, the compound having a reactive double bond is introduced to the polymerization solution containing the organic-inorganic composite obtained by radical polymerization, and reaction may be performed as it is; or the organic-inorganic composite washed and purified is dispersed again in an organic solvent, and then, reaction may be performed.

Although the reaction between the functional group in the polymer and the functional group in the compound having a cross-linkable functional group containing a reactive double bond may be performed without a catalyst or performed with use of a catalyst, it is preferable to use a catalyst from the viewpoint of productivity.

A polymerization inhibitor may be introduced to the reaction solution in order to prevent the reactive double bond from causing radical reaction and gelation during the reaction between the functional groups.

Although the manufacturing method mentioned above is not particularly limited, typical manufacturing methods are shown below.

[Method for manufacturing organic-inorganic composite material - 1: manufacturing method by discontinuous steps]

(1) A coupling agent having a polymerization initiating group is added to a dispersion solution of inorganic compound particles and reacted at a predetermined temperature, and a hydrophobizing agent is further added and reacted to obtain a dispersion solution of surface-modified inorganic compound particles.
(2) After cooling to room temperature, the dispersion solution is washed with a predetermined solvent, and a solid content is separated/dried by centrifugation or the like to obtain surface-modified inorganic compound particles.
(3) The surface-modified inorganic compound particles are dispersed in a polymerization solvent, and then, radical polymerizable monomers and a catalyst are added and reacted under predetermined conditions so that a polymer attached to the inorganic compound particle is formed by living radical polymerization initiated by the polymerization initiating group to obtain organic-inorganic composite 1. If necessary, reaction subsequent to (4) is performed.
(4) After cooling to room temperature, a polymerization inhibitor is added to the reaction solution of the organic-inorganic composite 1, and a compound having a cross-linkable functional group containing a reactive double bond and a catalyst are further added and reacted under predetermined conditions, followed by washing with a solvent to obtain organic-inorganic composite 2.

[Method for manufacturing organic-inorganic composite material - 2: manufacturing method by continuous steps]

(1) A coupling agent having a polymerization initiating group is added to a dispersion solution of inorganic compound particles and reacted at a predetermined temperature, and a hydrophobizing agent is further added and reacted to obtain a dispersion solution of surface-modified inorganic compound particles.
(2) After cooling to room temperature, radical polymerizable monomers and a catalyst are added and reacted under predetermined conditions so that a polymer attached to the inorganic compound particle is formed by living radical polymerization initiated by the polymerization initiating group to obtain organic-inorganic composite 1. If necessary, reaction subsequent to (3) is performed.
(3) After cooling to room temperature, a polymerization inhibitor is added to the reaction solution of the organic-inorganic composite 1, and a compound having a functional group containing a reactive double bond and a catalyst are further added and reacted under predetermined conditions, followed by washing with a solvent to obtain organic-inorganic composite 2.

[Coating material]

The coating material of the present embodiment is not particularly limited as long as being one that comprises

the organic-inorganic composite, but is preferably a liquid. Among others, one in which the organic-inorganic composite is dispersed in an organic solvent is preferable.

Although the organic solvent used in the coating material is not particularly limited, general-purpose organic solvents in which the dispersibility of the organic-inorganic composite mentioned above is favorable and safety is relatively high are preferable. These solvents may be used alone or used by mixing a plurality. From the viewpoint of film formability and safety, the evaporation rate of the organic solvent is preferably 10 to 600, further preferably 20 to 200, in the case where that of butyl acetate is as 100. From a similar viewpoint, the boiling point of the organic solvent is preferably 75 to 200°C, further preferably 90 to 180°C. These may be used alone or used in combination of two or more types.

Examples of the organic solvent include acetone, methyl ethyl ketone (MEK), diethyl ketone, methyl isobutyl ketone (MIBK), diisobutyl ketone, cyclohexanone, diacetone alcohol, isophorone, tetrahydrofuran (THF), 2-methoxyethanol (methylcellosolve), 2-ethoxyethanol (ethylcellosolve), 2-n-butoxyethanol (n-butylcellosolve), ethylene glycol mono-tert-butyl ether (t-butylcellosolve), 1-methoxy-2-propanol (propylene glycol monoethyl ether), 3-methoxy-3-methylbutanol (methylmethoxybutanol), diethylene glycol mono-n-butyl ether (diethylene glycol monobutyl ether), benzene, toluene, xylene, anisole (methoxybenzene), benzotrifluoride, cyclohexane, hexane, mineral spirit, benzyl alcohol, methanol, ethanol, 1-propanol, 2-propanol, 1-butanol, t-butanol, ethyl acetate, isopropyl acetate, propyl acetate, butyl acetate, isobutyl acetate, 2-methoxy-1-methylethyl acetate (propylene glycol monomethyl ether acetate), 2-ethoxyethyl acetate (cellosolve acetate), ethyl 3-ethoxypropionate, 3-methoxybutyl acetate, 3-methoxy-3-methylbutyl acetate, diethyl ether, ethylene glycol, propylene glycol, 1,3-propanediol, acetonitrile, dimethylacetamide, dimethylformamide (DMF), dimethyl sulfoxide (DMSO), n-methylpyrrolidone (NMP), pyridine, 1,4-dioxane, and chloroform.

A photopolymerization initiator, a curing agent, a curing accelerator, a cross-linking agent, a free polymer, an additive, a plasticizer, fat and oil, an emulsifier (surfactant), a coupling agent, an acid, an alkali, a monomer, an oligomer, a polymer, a pigment, a soluble dye, a perfume, a dye, etc. may be further added, if necessary.

The photopolymerization initiator of the present embodiment is not particularly limited as long as being one that polymerizes a composition by irradiation with active light rays, but can be broadly classified into three: a photo-radical initiator, a photo-acid-generating agent, and a photo-base-generating agent.

It is preferable to use, as the photo-radical initiator, a compound that generates a radical by irradiation with active light rays or radiant rays. By using such a photo-radical initiator, the polymerization reaction of the reactive double bond in the organic polymer can be induced by a radical generated by irradiation with active light rays or radiant rays to cure the organic-inorganic composite.

Acetophenones, benzoins, benzophenones, ketals, anthraquinones, thioxanthones, azo compounds, peroxides, 2,3-dialkyldione compounds, disulfide compounds, thiuram compounds, fluoroamine compounds, oxime esters, or the like are used as such photo-radical initiators. Specific examples of the photo-radical initiator include: acetophenones such as 2,2'-diethoxyacetophenone, p-dimethylacetophenone, 1-hydroxycyclohexyl phenyl ketone, 1-hydroxydimethyl phenyl ketone, 2-methyl-4'-methylthio-2-morpholinopropiophenone, 2-benzyl-2-dimethylamino-1-(4-morpholinophenyl)-butanone 1, 2-methyl-1[4-(methylthio)phenyl]-2-morpholinopropan-1-one, α-hydroxyacetophenone, and α-aminoacetophenone; benzoins such as benzoin methyl ether, benzoin ethyl ether, benzoin isopropyl ether, and benzyl dimethyl ketal; benzophenones such as benzophenone, 2,4'-dichlorobenzophenone, 4,4'-dichlorobenzophenone, and p-chlorobenzophenone; and oxime esters such as 1,2-octanedione-1-[4-(phenylthio)-2-(0-benzoyloxime)], and ethanone-1-[9-ethyl-6-(2-methylbenzoyl)-9H-carbazol-3-yl]-1-(0-acetyl oxime). These photo-radical initiators may be used alone or used in combination of two or more types.

The photo-acid-generating agent is a compound that generates an acid by irradiation with active light rays or radiant rays, and examples thereof include sulfonic acid derivatives, onium salts, and carboxylic acid esters.

Examples of the sulfonic acid derivatives can include disulfones, disulfonyldiazomethanes, disulfonylmethanes, sulfonylbenzoylmethanes, imidosulfonates such as trifluoromethyl sulfonate derivatives, benzoin sulfonates, sulfonates of 1-oxy-2-hydroxy-3-propyl alcohols, pyrogallol trisulfonates, and benzyl sulfonates. Specifically, examples thereof can include diphenyldisulfone, ditosyldisulfone, bis(phenylsulfonyl)diazomethane, bis(chlorophenylsulfonyl)diazomethane, bis(xylylsulfonyl)diazomethane, phenylsulfonylbenzoyldiazomethane, bis(cyclohexylsulfonyl)methane, benzoin tosylate, 1,2-diphenyl-2-hydroxypropyl tosylate, 1,2-di(4-methylmercaptophenyl)-2-hydroxypropyl tosylate, pyrogallol methylsulfonate, pyrogallol ethylsulfonate, 2,6-dinitrophenylmethyl tosylate, ortho-nitrophenylmethyl tosylate, and para-nitrophenyl tosylate.

Examples of the carboxylic acid esters can include 1,8-naphthalenedicarboximide methylsulfonate, 1,8-naphthalenedicarboximide tosylsulfonate, 1,8-naphthalenedicarboximide trifluoromethylsulfonate, 1,8-naphthalenedicarboximide camphor sulfonate, succinimide phenylsulfonate, succinimide tosylsulfonate, succinimide trifluoromethylsulfonate, succinimide camphor sulfonate, phthalimide trifluorosulfonate, and cis-5-norbornene-endo-2,3-dicarboximide trifluoromethylsulfonate.

Sulfonium salts or iodonium salts having an anion such as tetrafluoroborate ($BF_4^-$), hexafluorophosphate ($PF_6^-$), hexafluoroantimonate ($SbF_6^-$), hexafluoroarsenate ($AsF_6^-$), hexachloroantimonate ($SbCl_6^-$), tetraphenylborate, tetrakis(trifluoromethylphenyl)borate, tetrakis(pentafluoromethylphenyl)borate, a perchloric acid ion ($ClO_4^-$), a trifluorometh-

anesulfonic acid ion ($CF_3SO_3^-$), a fluorosulfonic acid ion ($FSO_3^-$), a toluenesulfonic acid ion, a trinitrobenzenesulfonic acid anion, a trinitrotoluenesulfonic acid anion can be used as the onium salts.

Examples of the sulfonium salts include triphenylsulfonium hexafluoroarsenate, triphenylsulfonium hexafluoroborate, triphenylsulfonium tetrafluoroborate, triphenylsulfonium tetrakis(pentafluorobenzyl)borate, methyldiphenylsulfonium tetrafluoroborate, methyldiphenylsulfonium tetrakis(pentafluorobenzyl)borate, dimethylphenylsulfonium hexafluorophosphate, triphenylsulfonium hexafluorophosphate, triphenylsulfonium hexafluoroantimonate, diphenylnaphthylsulfonium hexafluoroarsenate, triarylsulfonium hexafluorophosphate, anisyldiphenylsulfonium hexahexafluoroantimonate, 4-butoxyphenyldiphenylsulfonium tetrafluoroborate, 4-butoxyphenyldiphenylsulfonium tetrakis(pentafluorobenzyl)borate, 4-chlorophenyldiphenylsulfonium hexafluoroantimonate, tris(4-phenoxyphenyl)sulfonium hexafluorophosphate, di(4-ethoxyphenyl)methylsulfonium hexafluoroarsenate, 4-acetylphenyldiphenylsulfonium tetrafluoroborate, 4-acetylphenyldiphenylsulfonium tetrakis(pentafluorobenzyl)borate, tris(4-thiomethoxyphenyl)sulfonium hexafluorophosphate, di(methoxysulfonylphenyl)methylsulfonium hexafluoroantimonate, di(methoxynaphthyl)methylsulfonium tetrafluoroborate, di(methoxynaphthyl)methylsulfonium tetrakis(pentafluorobenzyl)borate, di(carbomethoxyphenyl)methylsulfonium hexafluorophosphate, (4-octyloxyphenyl)diphenylsulfonium tetrakis(3,5-bis-trifluoromethylphenyl)borate, tris(dodecylphenyl)sulfonium tetrakis(3,5-bis-trifluoromethylphenyl)borate, 4-acetamidophenyldiphenylsulfonium tetrafluoroborate, 4-acetamidophenyldiphenylsulfonium tetrakis(pentafluorobenzyl)borate, dimethylnaphthylsulfonium hexafluorophosphate, trifluoromethyldiphenylsulfonium tetrafluoroborate, trifluoromethyldiphenylsulfonium tetrakis(pentafluorobenzyl)borate, phenylmethylbenzylsulfonium hexafluorophosphate, 10-methylphenoxathiinium hexafluorophosphate, 5-methylthianthrenium hexafluorophosphate, 10-phenyl-9,9-dimethylthioxanthenium hexafluorophosphate, 10-phenyl-9-oxothioxantheniumxanthenium tetrafluoroborate, 10-phenyl-9-oxothioxanthenium tetrakis(pentafluorobenzyl)borate, 5-methyl-10-oxothianthrenium tetrafluoroborate, 5-methyl- 10-oxothianthrenium tetrakis(pentafluorobenzyl)borate, and 5-methyl-10,10-dioxothianthrenium hexafluorophosphate.

Examples of the iodonium salts include (4-n-decyloxyphenyl)phenyliodonium hexafluoroantimonate, [4-(2-hydroxy-n-tetradecyloxy)phenyl]phenyliodonium hexafluoroantimonate, [4-(2-hydroxy-n-tetradecyloxy)phenyl]phenyliodonium trifluorosulfonate, [4-(2-hydroxy-n-tetradecyloxy)phenyl]phenyliodonium hexafluorophosphate, [4-(2-hydroxy-n-tetradecyloxy)phenyl]phenyliodonium tetrakis(pentafluorophenyl)borate, bis(4-t-butylphenyl)iodonium hexafluoroantimonate, bis(4-t-butylphenyl)iodonium hexafluorophosphate, bis(4-t-butylphenyl)iodonium trifluorosulfonate, bis(4-t-butylphenyl)iodonium tetrafluoroborate, bis(dodecylphenyl)iodonium hexafluoroantimonate, bis(dodecylphenyl)iodonium tetrafluoroborate, bis(dodecylphenyl)iodonium hexafluorophosphate, bis(dodecylphenyl)iodonium trifluoromethylsulfonate, di(dodecylphenyl)iodonium hexafluoroantimonate, di(dodecylphenyl)iodonium triflate, diphenyliodonium bisulfate, 4,4'-dichlorodiphenyliodonium bisulfate, 4,4'-dibromodiphenyliodonium bisulfate, 3,3'-dinitrodiphenyliodonium bisulfate, 4,4'-dimethyldiphenyliodonium bisulfate, 4,4'-bissuccinimidodiphenyliodonium bisulfate, 3-nitrodiphenyliodonium bisulfate, 4,4'-dimethoxydiphenyliodonium bisulfate, bis(dodecylphenyl)iodonium tetrakis (pentafluorophenyl)borate, and (4-octyloxyphenyl)phenyliodonium tetrakis(3,5-bis-trifluoromethylphenyl)borate.

Aromatic diazonium salts can be used as other onium salts, and, for example, p-methoxybenzenediazonium hexafluoroantimonate can be used.

Examples of commercially available onium salts can include San-Aid SI-60, SI-80, SI-100, SI-60L, SI-80L, SI-100L, SI-L145, SI-L150, SI-L160, SI-L110, and SI-L147 (all manufactured by Sanshin Chemical Industry Co., Ltd.), UVI-6950, UVI-6970, UVI-6974, and UVI-6990 (all manufactured by Union Carbide Corp.), Adeka Optomer SP-150, SP-151, SP-170, SP-171, and SP-172 (all manufactured by Adeka Corp.), Irgacure 261 and Irgacure 250 (manufactured by Chiba Specialty Chemicals Co., Ltd.), CI-2481, CI-2624, CI-2639, and CI-2064 (all manufactured by Nippon Soda Co., Ltd.), CD-1010, CD-1011, and CD-1012 (all manufactured by Sartomer Company, Inc.), DS-100, DS-101, DAM-101, DAM-102, DAM-105, DAM-201, DSM-301, NAI-100, NAI-101, NAI-105, NAI-106, SI-100, SI-101, SI-105, SI-106, PI-105, NDI-105, BENZOIN TOSYLATE, MBZ-101, MBZ-301, PYR-100, PYR-200, DNB-101, NB-101, NB-201, BBI-101, BBI-102, BBI-103, and BBI-109 (all manufactured by Midori Kagaku Co., Ltd.), PCI-061T, PCI-062T, PCI-020T, and PCI-022T (all manufactured by Nippon Kayaku Co., Ltd.), IBPF and IBCF (manufactured by Sanwa Chemical Co., Ltd.) CD1012 (manufactured by Sartomer Company, Inc.), IBPF and IBCF (all manufactured by Sanwa Chemical Co., Ltd.), BBI-101, BBI-102, BBI-103, and BBI-109 (all manufactured by Midori Kagaku Co., Ltd.), UVE1014 (manufactured by General Electric Company), RHODORSIL-PI2074 (manufactured by Rhodia S.A.), and WPI-113 and WPI-116 (manufactured by Wako Pure Chemical Industries, Ltd.). Moreover, diaryliodonium salts that can be manufactured by methods described in J. Polymer Science: Part A: polymer Chemistry, Vol. 31, 1473-1482 (1993), and J. Polymer Science: Part A: polymer Chemistry, Vol. 31, 1483-1491 (1993) may be used. These may be used alone or in combination of two or more types.

For example, an acyclic acyloxyimino compound, an acyclic carbamoyloxime compound, a carbamoylhydroxylamine compound, a carbamic acid compound, a formamide compound, an acetamide compound, a carbamate compound, a benzyl carbamate compound, a nitrobenzyl carbamate compound, a sulfonamide compound, an imidazole derivative compound, an aminimide compound, a pyridine derivative compound, an $\alpha$-aminoacetophenone derivative compound, a quaternary ammonium salt derivative compound, an $\alpha$-lactone ring derivative compound, an aminimide

compound, or a phthalimide derivative compound can be used as the photo-base-generating agent. Among others, acyloxyimino compounds in which the formation efficiency of amine is relatively high are preferable. These may be used alone or in combination of two or more types.

The curing agent according to the present embodiment is not particularly limited as long as being a substance that is used for curing a resin composition.

Examples of the curing agent include acid anhydride-based compounds, amine-based compounds, amide-based compounds, phenol-based compounds, and isocyanate compounds such as polyisocyanate, and among others, acid anhydride-based compounds are preferable, with carboxylic anhydrides more preferred. Moreover, in the case of reacting a cyclic ether group, combined use with a curing accelerator mentioned later is preferable.

Moreover, alicyclic acid anhydrides are included in the acid anhydride-based compounds as referred to herein, and among carboxylic anhydrides, alicyclic carboxylic anhydrides are preferable. These substances may be used alone or used in combination of a plurality.

Specific examples of the curing agent include phthalic anhydride, succinic anhydride, trimellitic anhydride, pyromellitic anhydride, maleic anhydride, tetrahydrophthalic anhydride, methyltetrahydrophthalic anhydride, methylnadic anhydride, hexahydrophthalic anhydride, methylhexahydrophthalic anhydride, diaminodiphenylmethane, diethylenetriamine, triethylenetetramine, diaminodiphenylsulfone, isophoronediamine, dicyandiamide, tetraethylenepentamine, dimethylbenzylamine, ketimine compounds, polyamide resins synthesized from a dimer of linolenic acid and ethylenediamine, bisphenols, polycondensates of phenols (phenol, alkyl-substituted phenol, naphthol, alkyl-substituted naphthol, dihydroxybenzene, dihydroxynaphthalene, etc.) and various types of aldehydes, polymers of phenols and various types of diene compounds, polycondensates of phenols and aromatic dimethylol, or condensates of bismethoxymethylbiphenyl and naphthols or phenols, biphenols and their denaturation products, imidazole, boron trifluoride-amine complexes, and guanidine derivative.

Specific examples of the alicyclic carboxylic anhydrides include 1,2,3,6-tetrahydrophthalic anhydride, 3,4,5,6-tetrahydrophthalic anhydride, hexahydrophthalic anhydride, "4-methylhexahydrophthalic anhydride/hexahydrophthalic anhydride = 70/30", 4-methylhexahydrophthalic anhydride, and "methylbicyclo[2.2.1]heptane-2,3-dicarboxylic anhydride/bicyclo[2.2.1]heptane-2,3-dicarboxylic anhydride".

Moreover, specific examples of aliphatic acid anhydrides include tetrapropenyl succinic anhydride, octenyl succinic anhydride, and 2,5-diketotetrahydrofuran.

The curing accelerator according to the present embodiment means a curing catalyst that is used for the purpose of promotion of curing reaction and may be used alone or used in combination of a plurality. Although the curing accelerator is not particularly limited, it is preferable to select tertiary amines and salts thereof.

Specific examples of the curing accelerator include the followings:

(1) tertiary amines: benzyldimethylamine, 2,4,6-tris(dimethylaminomethyl)phenol, cyclohexyldimethylamine, triethanolamine, etc.,
(2) imidazoles: 2-methylimidazole, 2-n-heptylimidazole, 2-n-undecylimidazole, 2-phenylimidazole, 2-phenyl-4-methylimidazole, 1-benzyl-2-methylimidazole, 1-benzyl-2-phenylimidazole, 1,2-dimethylimidazole, 2-ethyl-4-methylimidazole, 1-(2-cyanoethyl)-2-methylimidazole, 1-(2-cyanoethyl)-2-n-undecylimidazole, 1-(2-cyanoethyl)-2-phenylimidazole, 1-(2-cyanoethyl)-2-ethyl-4-methylimidazole, 2-phenyl-4-methyl-5-hydroxymethylimidazole, 2-phenyl-4,5-di(hydroxymethyl)imidazole, 1-(2-cyanoethyl)-2-phenyl-4,5-di[(2'-cyanoethoxy)methyl]imidazole, 1-(2-cyanoethyl)-2-n-undecylimidazolium trimellitate, 1-(2-cyanoethyl)-2-phenylimidazolium trimellitate, 1-(2-cyanoethyl)-2-ethyl-4-methylimidazolium trimellitate, 2,4-diamino-6-[2'-methylimidazolyl-(1')]ethyl-s-triazine, 2,4-diamino-6-(2'-n-undecylimidazolyl)ethyl-s-triazine, 2,4-diamino-6-[2'-ethyl-4'-methylimidazolyl-(1')]ethyl-s-triazine, isocyanuric acid adducts of 2-methylimidazole, isocyanuric acid adducts of 2-phenylimidazole, isocyanuric acid adducts of 2,4-diamino-6-[2'-methylimidazolyl-(1')]ethyl-s-triazine, etc.,
(3) organic phosphorus-based compounds: diphenylphosphine, triphenylphosphine, triphenyl phosphite, etc.,
(4) quaternary phosphonium salts: benzyltriphenylphosphonium chloride, tetra-n-butylphosphonium bromide, methyltriphenylphosphonium bromide, ethyltriphenylphosphonium bromide, n-butyltriphenylphosphonium bromide, tetraphenylphosphonium bromide, ethyltriphenylphosphonium iodide, ethyltriphenylphosphonium acetate, tetra-n-butylphosphonium o,o-diethyl phosphorodithioate, tetra-n-butylphosphonium benzotriazolate, tetra-n-butylphosphonium tetrafluoroborate, tetra-n-butylphosphonium tetraphenylborate, tetraphenylphosphonium tetraphenylborate, etc.,
(5) diazabicycloalkenes: 1,8-diazabicyclo[5.4.0]undecene-7 and its organic acid salts, etc.,
(6) organic metal compounds: zinc octoate, tin octoate, aluminum-acetylacetone complexes, etc.,
(7) quaternary ammonium salts: tetraethylammonium bromide, tetra-n-butylammonium bromide, etc., and
(8) metal halide compounds: boron compounds such as boron trifluoride and triphenyl borate; zinc chloride, tin (II) chloride, etc.

Examples of the cross-linking agent include, but not particularly limited to, compounds having a plurality of (meth)acryloyl groups.

Examples of (meth)acrylate cross-linking agents intramolecularly having two (meth)acryloyl groups include: alkylene glycol di(meth)acrylates such as ethylene glycol di(meth)acrylate, butanediol di(meth)acrylate, hexanediol di(meth)acrylate, and cyclohexanedimethanol di(meth)acrylate; and polyalkylene glycol di(meth)acrylates such as triethylene glycol di(meth)acrylate, tripropylene glycol di(meth)acrylate, tetraethylene glycol di(meth)acrylate, and polyethylene glycol di(meth)acrylate.

Examples of (meth)acrylate cross-linking agents intramolecularly having three (meth)acryloyl groups include: tri(meth)acrylates having a branched alkyl group, such as trimethylolpropane tri(meth)acrylate and pentaerythritol tri(meth)acrylate; tri(meth)acrylates having a branched alkylene ether group, such as glycerol propoxy tri(meth)acrylate and trimethylolpropane triethoxy tri(meth)acrylate; and tri(meth)acrylates containing a heterocyclic ring, such as tris(2-hydroxyethyl)isocyanurate tri(meth)acrylate.

Examples of (meth)acrylate cross-linking agents intramolecularly having four or more (meth)acryloyl groups include: poly(meth)acrylates having a plurality of branched alkyl groups, such as di(trimethylolpropane) tetra(meth)acrylate and dipentaerythritol hexa(meth)acrylate; and poly(meth)acrylates having a plurality of branched alkyl groups and a hydroxy group, such as dipentaerythritol penta(meth)acrylate. These (meth)acrylic acid ester-based cross-linking agents may be used alone or used in combination of two or more types.

Although an approach of coating is not particularly limited as mentioned later, it is desirable to adopt a wet coat method because of being capable of coating a large area or capable of reducing facility cost. For this, it is preferable that the coating material should be a liquid in which the organic-inorganic composite mentioned above is dispersed in a solvent.

It is preferable that the viscosity of the coating material should be 5 Pa·s or less, more preferably 3 Pa·s or less, further preferably 1 Pa·s or less, particularly preferably 100 mPa·s or less, from the viewpoint of easiness of coating.

The solid content concentration (concentration of the organic-inorganic composite comprising a free polymer) of the coating material is not particularly limited, but is preferably 0.2 to 30% by mass, further preferably 1 to 20% by mass, particularly preferably 3 to 15% by mass, with respect to the mass of the whole coating material in terms of a balance between dispersibility and film formability. The solid content concentration may be adjusted by directly diluting the organic-inorganic composite as it is or may be adjusted by concentrating the dilute solution with an evaporator or the like.

[Organic-inorganic composite film]

The organic-inorganic composite film of the present embodiment is not particularly limited as long as being a film that comprises the organic-inorganic composite and satisfies the above-described requirements. In the present invention, the "film" may be formed on a support base or may form a structure in itself, though the thickness is not limited.

In the present invention, the term "void" means a microvoid formed between inorganic compound particles in two or more adjacent organic-inorganic composites constituting the film. The term "cavity" means a vacancy formed in the inside of the inorganic compound particle itself and is distinguished from the "void".

A void ratio with respect to the apparent volume of the film, i.e., a voidage, can be calculated on the basis of the volume-weighted means of the refractive indexes (> 1) of the organic-inorganic composites constituting the film and the refractive indexes (refractive index of air: 1.00) of voids.

The ratio of voids (voidage) formed between the organic-inorganic composites is less than 5% by volume, preferably less than 4% by volume, more preferably less than 3% by volume, with respect to the volume of the organic-inorganic composite film. If the voidage is 5% by volume or more, there is a possibility that the refractive index of the organic-inorganic composite film becomes lower than an assumed refractive index.

The degree of particle dispersion of the organic-inorganic composite film of the present embodiment is a value that reflects the dispersion state of inorganic compound particles in the film. The degree of particle dispersion is measured by a method mentioned later and is preferably 0.8 or less, more preferably 0.6 or less, further preferably 0.5 or less, particularly preferably 0.3 or less, from the viewpoint of uniformity of optical properties. The degree of particle dispersion is calculated according to the following formula on the basis of measurement results obtained by observing a molded product using a scanning transmission electron microscope or the like and measuring the distance between centroids of adjacent particles in the observed image:

Degree of particle dispersion = (Average deviation of the distance between centroids of adjacent particles) / (Distance between centroids of adjacent particles)

The relative permittivity of the organic-inorganic composite film of the present embodiment is not particularly limited, but is preferably less than 7, more preferably less than 6.5, further preferably less than 6. If the relative permittivity is 7 or more, there is the case where use in optical/electronic materials is limited.

Although the refractive index of the organic-inorganic composite film is not particularly limited, it is preferable to be 1.55 or more, more preferably 1.6 or more, further preferably 1.65 or more, particularly preferably 1.68 or more, in the case of being measured by a method mentioned later and using it as a high-refractive index material. If the refractive index is smaller than 1.55, application to antireflection films or the like becomes difficult.

Although the pencil hardness of the organic-inorganic composite film is not particularly limited, it is preferable to be HB or more, more preferably F or more, further preferably H or more, from the viewpoint of being measured by a method mentioned later and of handling.

Although the organic-inorganic composite film of the present embodiment is not particularly limited as long as being a film comprising the organic-inorganic composite, it is preferable to be a film formed by coating with the coating material mentioned above by an approach mentioned later. In general, it is formed at a thickness of a few nm to a few cm on a substrate (for example, a PET film, a TAC film, glass, a resin material such as acryl/polycarbonate, a metal, a silicon wafer, LED, a semiconductor, CD, DVD, etc., or various hard coat layers).

"Dry coating methods such as vapor deposition, sputtering, and ion plating", "wet coating methods such as printing, slit coat, bar coat, applicator coating, spin coat, blade coat, air knife coat, gravure coat, roll coat, spray coat, and dip coat", etc., are generally known as approaches of coating. Moreover, in addition to the methods mentioned above, there is also an approach of forming the organic-inorganic composite film on a substrate by applying "molding process methods such as film molding, laminate molding, injection molding, blow molding, compression molding, rotational molding, extrusion molding, and stretch molding". These approaches may be used alone or in combination of a plurality.

The "free polymer" means a polymer that is not attached to the inorganic compound particle. For cured products, a polymer that is a composition forming a cured product and is not attached to the inorganic compound particle before curing reaction, or a low-molecular-weight organic compound is also included. A method for measuring the free polymer will be described in detail in Examples mentioned later.

The ratio of the free polymer that is not attached to the inorganic compound particle according to the present embodiment is determined by a method mentioned later, and the ratio is preferably 30% by mass or less, more preferably 20% by mass or less, further preferably 3% by mass or less. If the ratio of the free polymer is 30% by mass or more, there is the case where the dispersion uniformity of the organic-inorganic composite decreases and optical properties decrease.

Although the curing of the organic-inorganic composite film according to the present embodiment is not particularly limited, energy line curing or thermal curing is preferable, with light curing particularly preferred. An approach of light curing is not particularly limited and usually takes a course in which a polymerization initiator is decomposed by stimulation with active light rays, whereby a polymerization initiating species is formed to polymerize the polymerizable functional group of the target substance.

The light curing is a method of obtaining a cured product by performing irradiation with active light rays (ultraviolet rays, near-ultraviolet rays, visible light rays, near-infrared rays, infrared rays, etc.), and the type of the active light rays is not particularly limited, but is preferably ultraviolet rays or visible light rays, more preferably ultraviolet rays.

Among the light curing methods, a photo-radical polymerization type is preferable because of the advantages that the reactivity of the reactive double bond is high and cross-linking is made in a short time, etc.

In addition to the cross-linking by photo-radical polymerization mentioned above, cationic polymerization, cross-linking reaction by heating, cross-linking reaction by mixing with a compound having a functional group that can react with the organic polymer, and the like may be used in combination. In the case of having at least one reactive double bond in the polymer in the organic-inorganic composite, the cross-linking of the organic-inorganic composites can be performed, for example, by initiating polymerization reaction from the reactive double bond by a radical generated from a photo-radical initiator and forming a bond between the polymers or between the polymer and the inorganic compound particle. Moreover, in the case of involving a cross-linking agent, it can be performed by forming a bond between the polymers or between the polymer and the inorganic compound particle by the cross-linking agent. Incidentally, the bond between the polymers or between the polymer and the inorganic compound particle is preferably a bond between the polymers of different organic-inorganic composites or between the polymer and the inorganic compound particle thereof,

but may also be a bond between the polymers of the same organic-inorganic composite or between the polymer and the inorganic compound particle thereof.

The generation source of the active light rays is not particularly limited, and examples thereof include various types of light sources such as low-pressure mercury lamps, medium-pressure mercury lamps, high-pressure mercury lamps, ultrahigh-pressure mercury lamps, UV lamps, xenon lamps, carbon arc lamps, metal halide lamps, fluorescent lamps, tungsten lamps, argon ion lasers, helium cadmium lasers, helium neon lasers, krypton ion lasers, various types of semiconductor lasers, YAG lasers, excimer lasers, light-emitting diodes, CRT light sources, plasma light sources, and electron beam irradiators.

Irradiation light strength differs depending on the wavelength of the light source used, etc., but is usually in the range of a few $mW/cm^2$ to 10 $W/cm^2$. The irradiation light strength is preferably in the range of on the order of a few dozen of $mW/cm^2$ to 5 $W/cm^2$. The irradiance is appropriately set according to the sensitivity of the reactive double bond, the thickness of a coating film, temperature, etc.

The thermal curing is a method of performing curing by intermolecularly forming a three-dimensional cross-linking bond through chemical reaction by heat. Although a method for the thermal curing is not particularly limited, it is preferable to select a method of performing thermal curing with use of a curing agent or a curing accelerator, or a method of performing thermal curing using a thermal cationic polymerization initiator, and, among others, a method of performing thermal curing with use of a curing agent or a curing accelerator is more preferable.

The organic-inorganic composite film according to the present embodiment has excellent transparency and optical properties, and total light transmittance in the thickness direction, which is an indicator therefor, is not particularly limited, but is preferably 85 to 100%, more preferably 88 to 100%, further preferably 90 to 100%. Likewise, the value of haze is not particularly limited, but is preferably 0 to 5%, more preferably 0 to 3%, further preferably 0 to 2%.

The organic-inorganic composite film according to the present embodiment easily achieves the desired refractive index and as such, is useful as an optical material or an optical member. Typical examples thereof can include antireflection films and hard coat films.

The water contact angle of the organic-inorganic composite film according to the present embodiment is an indicator for water repellency, and the value thereof is not particularly limited, but is preferably 75° or more, more preferably 80° or more, further preferably 90° or more. This is because the contact angle is 75° or more, whereby an adherence-suppressing effect or favorable wiping properties are exerted on water-based dirt.

[Method for manufacturing organic-inorganic composite film]

Although the method for manufacturing the organic-inorganic composite film according to the present embodiment is not particularly limited, typical manufacturing methods are shown below.

[Method for manufacturing organic-inorganic composite film - 1: without curing treatment]

(1) Organic-inorganic composites are dispersed by adding thereto an organic solvent to obtain a coating material.
(2) The coating material is applied onto a substrate, and the organic solvent is removed from the applied coating material to thereby form an organic-inorganic composite film.

[Method for manufacturing organic-inorganic composite film - 2: light curing (photo-radical curing)]

(1) Organic-inorganic composites are dispersed by adding thereto an organic solvent and a photo-radical initiator to obtain a coating material.
(2) The coating material is applied onto a substrate, and the organic solvent is removed from the applied coating material to thereby form an organic-inorganic composite film.
(3) The organic-inorganic composite film is further irradiated with active light rays so that the organic-inorganic composites are cross-linked (light curing) to obtain an organic-inorganic composite film.

[Method for manufacturing organic-inorganic composite film - 3: light curing (light cationic curing)]

(1) Organic-inorganic composites are dispersed by adding thereto an organic solvent and a photo-acid-generating

agent to obtain a coating material.

(2) The coating material is applied onto a substrate, and the organic solvent is removed from the applied coating material to thereby form an organic-inorganic composite film.

(3) The organic-inorganic composite film is further irradiated with active light rays so that the organic-inorganic composites are cross-linked (light curing) to obtain an organic-inorganic composite film.

[Method for manufacturing organic-inorganic composite film - 4: thermal curing (cross-linking by curing agent and curing accelerator)]

(1) Organic-inorganic composites are dispersed by adding thereto an organic solvent, a curing agent, and a curing accelerator to obtain a coating material.

(2) The coating material is applied onto a substrate, and the organic solvent is removed from the applied coating material to thereby form an organic-inorganic composite film.

(3) The organic-inorganic composite film is further heated for a predetermined time so that the organic-inorganic composites are cross-linked (thermal curing) to obtain an organic-inorganic composite film.

[Microstructure]

The microstructure of the present embodiment is one in which a fine structure with projections and depressions is formed in the surface layer portion of a material to be processed comprising the organic-inorganic composite. A schematic diagram of the surface shape of the microstructure according to the present embodiment is shown in Figure 2. The projections are arranged as in a pattern represented by arrangement (a) or arrangement (b).

A schematic diagram of the surface shape of the microstructure is shown in Figure 3. As shown in Figure 3, the distance (X) between apexes of adjacent projections is 10 to 800 nm, and the depth (Y) of the depressions is 10 nm to 1 μm. Although the dimensions of projections and depressions are not particularly limited as long as being within the above-described ranges, the distance (X) between apexes is preferably 20 to 600 nm, more preferably 50 to 500 nm. If X is less than 10 nm, functions by projections and depressions tend to be difficult to exert; and if it exceeds 800 nm, there is a tendency that the scattering of light increases. Moreover, in the case of targeting an antireflection effect by the fine structure, it is effective to set X to approximately 1/2 of the wavelength of light. For example, for reflection under natural light, it is preferable to set X to approximately 1/2 of a wavelength of 500 to 600 nm, i.e., to on the order of 250 nm to 300 nm.

Moreover, it is preferable that the depth (Y) of the depressions should be 20 to 800 nm, more preferably 50 to 700 nm, further preferably 100 to 500 nm. If Y is less than 10 nm, functions by projections and depressions tend to be difficult to exert; and if it exceeds 1 μm, there is a tendency that the fine structure easily breaks.

Although the shape of the fine structure is not particularly limited, examples of the cross-sectional shape of the projections specifically include triangle shapes, semi-circular shapes, semi-circular shapes, arcuate shapes, trapezoidal shapes, and mixed shapes of these. Moreover, a Fresnel lens-shaped structure whose cross-sectional shape consists of the combination of saw shapes is useful from the viewpoint of antireflection. Moreover, examples of the solid geometry of the projections include cone shapes, circular cone shapes, "polygonal pyramid shapes such as trigonal pyramid, square pyramid, pentagonal pyramid, and hexagonal pyramid", and dome shapes, and a shape in which the upper portion of these solid geometries has been cut off is also possible. Moreover, the shapes exemplified above may be combined to form one structural surface.

Although the sequence of the fine structure is not particularly limited, it is preferable to be a regular sequence in the case of being used in an optical application. For example, as to the distance (X) between apexes of projections in Figure 3, it is preferable to be X1 = X2 = X3 in the case of the arrangement (a) of Figure 2 and to be X4 = X5 = X6 = X7 in the case of the arrangement (b).

A method for processing the fine structure is not particularly limited, but is preferably a nanoimprint method, and, among others, processing by a thermal imprint method is preferable. A photo-imprint method using a photocurable composition, a thermal imprint method using a thermoplastic resin as a material to be processed, a method combining these, etc., are known as nanoimprint methods.

The photo-imprint method is a method of irradiating a photocurable composition with light through a transparent mold or a transparent substrate to cure it; and the thermal imprint method is a method of pressing a mold to a resin heated to a glass transition temperature or more, and releasing the mold after cooling to thereby transfer the fine structure to the material to be processed.

Because the microstructure of the present embodiment is easy to process, it is preferable to perform processing by the thermal imprint method. The processing temperature thereof is not particularly limited, but is preferably 40 to

280°C, more preferably 70 to 250°C, further preferably 100 to 230°C. If it exceeds 280°C, there is a possibility of deteriorating depending on composition; and if it is less than 40°C, there is the case of being difficult to adjust due to a balance with room temperature.

Although a method for manufacturing the material to be processed comprising the organic-inorganic composite is not particularly limited, for example, a method of preparing a molded product mentioned later and transferring the fine structure to the surface layer portion of the molded product, or a method of preparing a coating film and transferring the fine structure to the surface layer portion thereof is preferable.

The water contact angle of the microstructure according to the present embodiment is an indicator for water repellency, and the value thereof is not particularly limited, but is preferably 75° or more, more preferably 80° or more, further preferably 90° or more. This is because the contact angle is 75° or more, whereby an adherence-suppressing effect or favorable wiping properties are exerted on water-based dirt.

[Thermoplastic composition]

The thermoplastic composition of the present embodiment is not particularly limited as long as being a thermoplastic composition comprising the above-described organic-inorganic composite and a thermoplastic resin. In this context, the thermoplastic composition of the present embodiment comprises the organic-inorganic composite of the present invention and, further, any one type of thermoplastic resins described below. That is, the thermoplastic resin is distinguished from the free polymer contained in the organic-inorganic composite. Incidentally, the thermoplastic resin can employ one that has the same composition as in the free polymer.

The thermoplastic resin of the present embodiment refers to a resin having the properties of being softened by heating to a glass transition temperature or a melting point to exhibit plasticity and being solidified by cooling. Although it is not particularly limited as long as being one that satisfies the requirements, examples thereof include polyethylene (PE), polypropylene (PP), polystyrene (pSt), "polymethacrylic acid ester resins including poly(methyl methacrylate) (pMMA)", polyacrylonitrile (PAN), "ABS resins including ABS resin, $\alpha$-methylstyrene-based ABS resin, and phenylmaleimide-based ABS resin", ASA resin (AAS resin), ACS resin, polyvinyl chloride resin, nylon, fluorine resin, polycarbonate (PC), "polyester resins including polyethylene terephthalate (PET) and polybutylene terephthalate (PBT)", polyamide, and polyolefin, and these may be used alone or used in combination of a plurality.

Although the form of the thermoplastic composition of the present embodiment is not particularly limited, specific examples thereof include pellet forms, powder forms, granule forms, squamous forms, spherical forms, needle-like forms, liquid forms, and paste forms.

Although the ratio between the organic-inorganic composite and the thermoplastic resin is not particularly limited, organic-inorganic composite:thermoplastic resin is preferably 3 to 80:20 to 97, more preferably 5 to 70:30 to 95, further preferably 10 to 60:40 to 90 (% by mass, 100% by mass in total) as a mixing ratio. If the organic-inorganic composite is less than 1% by mass, functions derived from the inorganic compound particle become difficult to exert; if it exceeds 80% by mass, there is a tendency that miscibility with the thermoplastic resin decreases.

Although the glass transition temperature (hereinafter, referred to as Tg) of the thermoplastic composition of the present embodiment is not particularly limited, it is preferable to be 40 to 180°C, more preferably 60 to 160°C, further preferably 80 to 150°C, from the viewpoint of easiness of molding process. If it exceeds 180°C, an apparatus capable of processing is limited; if it is less than 40°C, shape maintenance tends to become difficult.

The content of the inorganic compound particle in the thermoplastic composition of the present embodiment is not particularly limited, but is preferably 1 to 60% by volume, further preferably 3 to 50% by volume, particularly preferably 5 to 50% by volume, with respect to the total volume of the thermoplastic composition. If the content is less than 1% by volume, functions derived from the inorganic compound particle become difficult to exert; if it exceeds 60% by volume, there is a tendency that molding processability decreases.

The degree of particle dispersion of the thermoplastic composition of the present embodiment is a value that reflects the dispersion state of inorganic compound particles in the thermoplastic composition. The degree of particle dispersion is not particularly limited, but is preferably 0.8 or less, further preferably 0.7 or less, particularly preferably 0.6 or less, from the viewpoint of transparency of a molded product.

The refractive index of the thermoplastic composition of the present embodiment is not particularly limited, but is preferably 1.1 to 2.3, more preferably 1.2 to 2.2, further preferably 1.3 to 2.0. If the refractive index is less than 1.1, there is the case where the strength of an optical element decreases; and if it is larger than 2.3, there is the case where scattering increases.

The thermoplastic composition of the present embodiment is transparent, and total light transmittance, which is an indicator therefor, is preferably 82 to 100%, more preferably 85 to 100%, further preferably 87 to 100%.

[Method for manufacturing thermoplastic composition]

The thermoplastic composition according to the present embodiment is obtained, for example, by a method of mixing the organic-inorganic composite and the thermoplastic resin, and devolatilization treatment (treatment of removing a solvent) or drying treatment may be further performed, if necessary.

Moreover, adding and mixing a solvent, an additive, a plasticizer, an antioxidant, fat and oil, an emulsifier (surfactant), a coupling agent, an acid, an alkali, a monomer, an oligomer, a polymer, a pigment, a soluble dye, a perfume, a dye, a gun powder/explosive, a fertilizer, a pharmaceutical drug, a pharmaceutical excipient, a quasi-drug, a food product, a food additive, a seasoning, an inorganic particle, etc., during mixing is not limited by any means. Among others, a plasticizer for improving flowability, or an antioxidant for suppressing deterioration is particularly useful for improving quality.

Although a method for the mixing is not particularly limited, specific examples thereof include the following methods.

(1) A method of dispersing or dissolving the organic-inorganic composite and the thermoplastic resin in a solvent, performing mixing, and then removing the solvent with an evaporator or the like.
(2) A method of adding the organic-inorganic composite to the thermoplastic resin and performing melt kneading.
(3) A method of adding one in which the organic-inorganic composite is dispersed in a solvent to the thermoplastic resin, performing kneading, and then removing the solvent.

Although an apparatus used in the mixing is not particularly limited, specific examples thereof include KRC kneader (Kurimoto, Ltd.), Polylabo System (manufactured by HAKKE GmbH), "Laboplastomill and Nano-com mixer (manufactured by Toyo Seiki Seisaku-Sho, Ltd.)", "Nauta mixer/Buss co-kneader and extruder (manufactured by Buss Japan Ltd)", TEM-type extruder (manufactured by Toshiba Machine Co., Ltd.), TEX twin screw kneading machine (The Japan Steel Works, LTD), PCM kneading machine (manufactured by Ikegai Corp.), "Three-roll mill, Mixing roll mill, Planetary mixer and kneader (manufactured by Inoue Seisakusho Co., Ltd.")", Kneadex (Mitsui Kozan Co., Ltd.), "MS-type pressure kneader and Kneader-Ruder (manufactured by Moriyama Co., Ltd.)", and Banbury mixer (manufactured by Kobe Steel, Ltd.).

[Method for molding thermoplastic composition]

Although the method for molding the thermoplastic composition of the present embodiment is not particularly limited, it is general to form the desired shape by usually providing stimulation such as temperature, pressure, light (visible light, ultraviolet rays, infrared rays, near-infrared rays, etc.), electron beam, plasma, or shock wave. Specifically, it is possible to adopt a method for molding a general polymer material, such as melt molding or cast molding, and among others, it is preferable to select melt molding in the case where the organic-inorganic composite of the present invention is thermoplastic.

A molding method using carbon dioxide as a plasticizer for improving flowability, or an approach for enhancing transfer properties by inductively heating die surface is also applicable to injection molding.

Although the molding conditions are appropriately selected depending on intended use or a molding method, it is preferable that the temperature of a material to be processed, for example, for injection molding should be set to a temperature capable of imparting moderating flowability during molding.

Moreover, preparing a composition for molding by adding a solvent, an additive, a plasticizer, an antioxidant, fat and oil, an emulsifier (surfactant), a coupling agent, an acid, an alkali, a monomer, an oligomer, a polymer, a pigment, a soluble dye, a perfume, a dye, a fertilizer, a pharmaceutical drug, a pharmaceutical excipient, a quasi-drug, a food product, a food additive, a seasoning, an inorganic particle, etc. during molding, and molding this is not limited by any means. Among others, a plasticizer for improving flowability, or an antioxidant for suppressing deterioration is particularly useful for improving quality.

The thermoplastic composition according to the present embodiment may contain various types of organic resins, coloring agents, leveling agents, lubricants, surfactants, silicone-based compounds, reactive diluents, unreactive diluents, antioxidants, light stabilizers, etc.. Moreover, substances generally supplied as additives for resins (plasticizers, flame retardants, stabilizers, antistatic agents, impact strength modifiers, foaming agents, antibacterial/fungicidal agents, fillers, anti-fogging agents, cross-linking agents, etc.) may be compounded.

[Optical material]

The optical material according to the present embodiment comprises the organic-inorganic composite, the organic-inorganic composite film, the thermoplastic composition, or the microstructure and is used for forming an optical

member.

The optical material refers to a general material that is used in an application that allows light such as visible light, infrared rays, ultraviolet rays, X rays, or lasers to pass through the material. The optical material may be used in various applications. A coating material and a dope solution for preparing the optical material described below are also included in the optical material.

Typical examples of the application of the optical material include antireflection members for various types of displays, and high-transmittance members (films or molded products) for enhancing the light extraction efficiency of illumination and optical semiconductors.

In the liquid crystal display field, examples thereof include liquid crystal display peripheral materials such as films for liquid crystals such as substrate materials, light guide plates, prism sheets, deflection plates, retarders, viewing angle correction films, adhesives, and polarizer protective films.

Other examples include: sealants, optical correction films, housing materials, protective films for front glass, front glass substitute materials, and adhesives, for color PDP (plasma display) expected as a next-generation flat-panel display; substrate materials, light guide plates, prism sheets, deflection plates, retarders, viewing angle correction films, adhesives, and polarizer protective films, for plasma-addressed liquid crystal (PALC) displays; protective films for front glass, front glass substitute materials, and adhesives, for organic EL (electroluminescence) displays; and various types of film substrates, protective films for front glass, front glass substitute materials, and adhesives, for field emission displays (FEDs).

In the optical recording field, examples thereof include disk substrate materials, pickup lenses, protective films, sealants, and adhesives, for VD (videodisk), CD/CD-ROM, CD-R/RW, DVD-R/DVD-RAM, MO/MD, PD (phase-change disk), or optical cards.

In the optical semiconductor field, examples thereof include light-emitting diodes (LEDs), semiconductor lasers, photodiodes, phototransistors, CCD/CMOS sensors, photocouplers, photorelays, photointerrupters, and devices for optical communications.

In the optical instrument field, examples thereof include taking lenses for cameras, materials for lenses, finders, finder prisms, target prisms, finder covers, and light-receiving sensor portions. Projection lenses, protective films, sealants, and adhesives for projection television are also included in examples. Further examples include materials for lenses, sealants, adhesives, and films, for optical sensing instruments.

In the optical component field, examples thereof include peripheral fiber materials for light switches, lenses, waveguides, and sealants and adhesives for elements, for optical communications systems. Peripheral optical fiber materials, ferrules, sealants, and adhesives for optical connectors are also included in examples. Examples of light passive components and optical circuit components include lenses, waveguides, and sealants and adhesives for LED elements. Peripheral substrate materials, fiber materials, and sealants and adhesives for elements for optical electronic integrated circuits (OEICs) are also included in examples.

In the optical fiber field, examples thereof include illumination/light guides for decoration displays, sensors and displays/signs in industrial applications, and optical fibers for communications infrastructures and for household digital equipment connection.

Examples of semiconductor integrated circuit peripheral materials include resist materials for microlithography for LSI or ultra-LSI materials.

Examples of next-generation optical/electronic functional organic materials include next-generation DVD, organic EL element peripheral materials, organic photorefractive elements, light-amplifying elements, which are light-light conversion devices, optical arithmetic elements, peripheral substrate materials for organic solar cells, fiber materials, and sealants and adhesives for elements.

In the automobile/transport field, examples thereof include lamp reflectors for automobiles, bearing retainers, gear portions, corrosion-resistant coats, switch portions, head lamps, components within engines, electric components, various types of interior and exterior trims, powered engines, brake oil tanks, rust-proof steel plates for automobiles, interior panels, interior decorating materials, wire harnesses for protection/bundling, fuel hoses, automobile lamps, glass substitutes, and intermediate films for automobile window glass. Intermediate films for double glass for railroad vehicles are also included in examples. In aircraft applications, ductility-imparting agents for constructional materials, engine peripheral members, wire harnesses for protection/bundling, corrosion-resistant coats, and intermediate films for window glass are included in examples.

In the architecture field, examples thereof include materials for interior decorating/processing, components for illumination, electric covers, sheets, intermediate films for glass, glass substitutes, and solar cell peripheral materials, and for agriculture, examples thereof include films for house coat.

[Optical member]

The optical member according to the present embodiment refers to a member comprising the optical material

mentioned above, and its form is not particularly limited. Although the application of the optical member is not particularly limited, it is suitably used in the applications mentioned above because of comprising the optical material.

[Photonic crystal]

The photonic crystal according to the present embodiment is a nanostructure whose refractive index periodically changes. The photonic crystal can control the propagation of light (wavelength: a few hundreds to a few thousands of nm) through the nanostructure by utilizing the diffraction, scattering, and interference of light in the inside of the nanostructure. For example, the photonic crystal can reflect only light with a certain wavelength when irradiated with light and as such, can be used as a dispersive element.

Since the structural period of the photonic crystal is on the order of half a wavelength and takes a periodic structure as exceedingly fine as a few hundreds of nm in the case of the visible light region, preparation by microfabrication is not easy; however, preparation can be done conveniently using the organic-inorganic composite of the present invention.

Although a method therefor is not particularly limited, it is possible to obtain the photonic crystal, for example, by preparing an organic-inorganic composite in which polymer chains that differ in refractive index from inorganic compound particles and have a uniform chain length are grafted to the inorganic compound particles with the desired particle size, and further performing molding by vacuum hot pressing. Moreover, it is also possible to obtain an inverse opal-type photonic crystal by treating a molded product obtained by a method similar to above with hydrofluoric acid or the like and removing the inorganic compound particles.

[Antireflection member]

The antireflection member according to the present embodiment may be a film (antireflection film) or may be other antireflection molded products. The antireflection film is not particularly limited as long as being a film comprising the organic-inorganic composite film mentioned above. The antireflection film may have a substrate, and the organic-inorganic composite film may be disposed on the substrate. Films made of resins are desirable as the substrate. Examples of preferable resins include PET, TAC, acrylic resin, polycarbonate resin, vinyl chloride resin, epoxy resin, and polyimide resin. In the case of using the antireflection film in a display application, PET, TAC, and acrylic resin are preferable, with PET and TAC particularly preferred.

The antireflection molded product according to the present embodiment is not particularly limited as long as being a molded product comprising the organic-inorganic composite film mentioned above, but may comprise a substrate and the organic-inorganic composite film disposed on the substrate. Examples of the substrate include acrylic resin, polycarbonate resin, vinyl chloride resin, epoxy resin, and polyimide resin. Among others, acrylic resin and polycarbonate resin are particularly preferable from the viewpoint of transparency and strength. The shape of the molded product is not particularly limited, and, for example, various shapes such as sheet shapes, plate shapes, block shapes, disc shapes, and three-dimensional solid geometries may be selected.

[Optical element]

The optical element according to the present embodiment refers to a functional element using the diffraction phenomenon of light. The optical element of the present embodiment is not particularly limited as long as being one that satisfies this requirement, but is suitable for, for example, an optical lens, an optical prism, an optical filter, etc.

Examples of the optical lens and optical prism described above include: lenses of laser scanning systems, such as lenses for microscopes, endoscopes, telescopes, and the like, f$\theta$ lenses for laser beam printers, and lenses for sensors; lenses of imaging systems such as cameras and mobile phones; prism lenses of finder systems; total light transmission-type lenses such as lenses of glasses; and pickup lenses for optical disks.

[Optical semiconductor device]

Although the optical semiconductor of the present invention is not particularly limited as long as being a semiconductor using light, there are recently many cases of using compound semiconductors. The optical semiconductor has, for example, functions described below, and various devices using them, have been proposed. As exemplary applications, for example, application to light-emitting devices is possible by utilizing the function of converting electric energy to light energy, and application to light-receiving devices is possible by utilizing the function of converting light energy to electric energy. Furthermore, application to optical composite devices is also possible by using a light-emitting device and a light-receiving device in combination. Moreover, application to devices for optical communications becomes possible by using light for communications.

Specific examples of the optical semiconductor device include light-emitting diodes (LEDs), semiconductor lasers, photodiodes, phototransistors, CCD/CMOS sensors, photocouplers, photorelays, photointerrupters, solar cells, and devices for optical communications.

[Luminaire]

The luminaire according to the present embodiment is not particularly limited as long as being an appliance that illuminates a particular location for some purpose by utilizing various types of light sources. The luminaire has, for example, a light bulb, a fluorescent lamp, a lamp, LED, or organic EL.

The coating material, the organic-inorganic composite film, the microstructure, and the thermoplastic composition according to the present embodiment may contain various types of organic resins, coloring agents, leveling agents, lubricants, surfactants, silicone-based compounds, reactive diluents, unreactive diluents, antioxidants, light stabilizers. Moreover, substances generally supplied as additives for resins (plasticizers, flame retardants, stabilizers, antistatic agents, impact strength modifiers, foaming agents, antibacterial/fungicidal agents, fillers, anti-fogging agents, cross-linking agents, etc.) may be compounded. Additional substances may be contained. Examples of the additional substances include solvents, fat and oil, fat and oil processed products, natural resins, synthetic resins, pigments, soluble dyes, dyes, removers, antiseptics, adhesives, deodorizers, flocculants, detergents, deodorizers, pH adjusters, photosensitive materials, inks, electrodes, plating solutions, catalysts, resin modifiers, plasticizers, softening agents, agricultural chemicals, insecticides, bactericides, pharmaceutical raw materials, emulsifiers/surfactants, rust inhibitors, metal compounds, fillers, cosmetic/pharmaceutical raw materials, dehydrators, desiccants, antifreezes, adsorbents, coloring agents, rubbers, foaming agents, coloring agents, abrasives, mold release agents, flocculants, antifoaming agents, curing agents, reducing agents, flux agents, coating agents, casting raw materials, minerals, acids/alkalis, shot agents, antioxidants, surface coating agents, additives, oxidizing agents, gun powders, fuels, bleaching agents, light-emitting elements, perfumes, concrete, fibers (carbon fiber, carbon nanotube, aramid fiber, glass fiber, etc.), glass, metals, excipients, disintegrants, binders, fluidizing agents, gelling agents, stabilizers, preservatives, buffers, suspending agents, and viscosity modifiers.

The organic resins are not particularly limited, and examples thereof include epoxy resin, phenol resin, melamine resin, urea resin, unsaturated polyester resin, polyurethane resin, diallyl phthalate resin, silicon resin, alkyd resin, acrylic resin, polyester resin, polypropylene resin, polystyrene resin, AS resin, ABS resin, polycarbonate resin, polylactic acid resin, polyacetal resin, polyimide resin, polyphenylene sulfide resin, polyether ether ketone resin, polyamide-imide resin, polyamide resin, polyphthalamide resin, polysulfone resin, polyarylate resin, polyethersulfone resin, polyetherimide resin, polyphenylsulfone resin, modified polyphenylene ether resin, vinyl chloride resin, synthetic rubbers, polyethylene terephthalate resin, liquid crystal polymers, polytetrafluoroethylene, polychlorotrifluoroethylene resin, polyvinylidene fluoride resin, and vinyl ether copolymers.

The coloring agents are not particularly limited as long as being substances that are used for the purpose of coloring, and examples thereof include: various types of organic dyes such as phthalocyanine, azo, disazo, quinacridone, anthraquinone, flavanthrone, perinone, perylene, dioxazine, condensed azo, and azomethine-based dyes; and inorganic pigments such as titanium oxide, lead sulfate, chrome yellow, zinc yellow, chrome vermilion, colcothar, cobalt purple, ferric hexacyanoferrate, ultramarine blue, carbon black, chrome green, chromium oxide, and cobalt green. These coloring agents may be used alone or in combination of a plurality.

The leveling agents are not particularly limited, and examples thereof include silicone-based leveling agents (dimethylpolysiloxane, organic modified polysiloxane, etc.), acrylate-based leveling agents (ethyl acrylate, butyl acrylate, 2-ethylhexyl acrylate, fluorine-modified acrylate, silicone-modified acrylate, etc.), epoxidized soybean fatty acid, epoxidized abietyl alcohol, hydrogenated castor oil, and titanium-based coupling agents. These leveling agents may be used alone or in combination of a plurality.

The lubricants are not particularly limited, and examples thereof include: hydrocarbon-based lubricants such as paraffin wax, microwax, and polyethylene wax; higher fatty acid-based lubricants such as lauric acid, myristic acid, palmitic acid, stearic acid, arachidic acid, and behenic acid; higher fatty acid amide-based lubricants such as stearylamide, palmitylamide, oleylamide, methylene bis-stearamide, and ethylene bis-stearamide; higher fatty acid ester-based lubricants such as hydrogenated castor oil, butyl stearate, ethylene glycol monostearate, and pentaerythritol (mono-, di-, tri-, or tetra-)stearate; alcohol-based lubricants such as cetyl alcohol, stearyl alcohol, polyethylene glycol, and polyglycerol; metallic soaps which are salts of metals, such as magnesium, calcium, cadmium, barium, zinc, and lead, of lauric acid, myristic acid, palmitic acid, stearic acid, arachidic acid, behenic acid, ricinoleic acid, naphthenic acid, or the like; and natural waxes such as carnauba wax, candelilla wax, beeswax, and montan wax. These lubricants may be used alone or in combination of a plurality.

The surfactants refer to amphiphilic substances having, in their molecules, hydrophobic groups that do not have affinity for a solvent and philic groups (usually hydrophilic groups) that have affinity for the solvent. Moreover, the types thereof are not particularly limited, and examples thereof include silicone-based surfactants and fluorine-based

surfactants. The surfactants may be used alone or in combination of a plurality.

The silicone-based compounds are not particularly limited, and examples thereof include silicone resin, silicone condensates, silicone partial condensates, silicone oil, silane coupling agents, silicone oil, and polysiloxane, and one that has been modified by introducing an organic group to both ends, one end, or a side chain thereof is also included. A method for the modification is not particularly limited, and examples thereof include amino modification, epoxy modification, alicyclic epoxy modification, carbinol modification, methacrylic modification, polyether modification, mercapto modification, carboxyl modification, phenol modification, silanol modification, polyether modification, polyether/methoxy modification, and diol modification.

The reactive diluents are not particularly limited, and examples thereof include alkyl glycidyl ether, monoglycidyl ether of alkylphenol, neopentyl glycol diglycidyl ether, 1,6-hexanediol diglycidyl ether, alkanoic acid glycidyl ester, ethylene glycol diglycidyl ether, and propylene glycol diglycidyl ether; and the unreactive diluents are not particularly limited, and examples thereof include high-boiling point solvents such as benzyl alcohol, butyl diglycol, and propylene glycol monomethyl ether.

The antioxidants are not particularly limited, and examples thereof include: organic phosphorus-based antioxidants such as triphenyl phosphate and phenylisodecyl phosphite; organic sulfur-based antioxidants such as distearyl-3,3'-thiodipropionate; and phenol-based antioxidants such as 2,6-di-tert-butyl-p-cresol.

The light stabilizers are not particularly limited, and examples thereof include benzotriazole-based, benzophenone-based, salicylate-based, cyanoacrylate-based, nickel-based, and triazine-based UV absorbers, and hindered amine-based light stabilizers.

The applications of the organic-inorganic composite, the coating material, and the organic-inorganic composite film according to the present embodiment are not limited to optical applications. They may be used as, for example, electronic materials (casting and circuit units of insulators, interchange transformers, switching devices, etc., packages for various types of components, sealants for IC/LED/semiconductor, etc., rotating machine coils for power generators, motors, etc., winding impregnation, printed circuit boards, insulating boards, medium-sized insulators, coils, connectors, terminals, various types of cases, electric components, etc.), paints (corrosion-resistant paints, maintenance, ship coating, corrosion-resistant linings, primers for automobiles/home electric appliances, drink/beer cans, exterior lacquers, extruded tube coating, general corrosion-proof coating, maintenance coating, lacquers for wooden products, electrodeposition primers for automobiles, other industrial electrodeposition coatings, interior lacquers for drink/beer cans, coil coating, internal coating for drums/cans, acid-proof linings, wire enamels, insulating paints, primers for automobiles, decorative and anti-proof coating for various types of metallic products, internal and external coating of pipes, insulating coating of electric components, heat ray-shielding materials, etc.), composite materials (pipes/tanks for chemical plants, aircraft materials, automobile members, various types of sports goods, carbon fiber composite materials, aramid fiber composite materials, etc.), civil engineering and construction materials (floor materials, pavement materials, membranes, anti-slip and thin surfacing, concrete joints/raising, anchor installation and bonding, precast concrete connection, tile bonding, repair of cracks in concrete structures, base grouting/leveling, corrosion-proof/water-proof coating of water and sewerage facilities, corrosion-resistant multilayer linings for tanks, corrosion-proof coating of iron structures, mastic coating of the exterior walls of architectural structures, etc.), adhesives (adhesives for materials of the same type or different types such as metals/glass/ceramics/cement concrete/wood/plastics, adhesives for assembly of automobiles/railroad vehicles/aircrafts, etc., adhesives for composite panel manufacturing for prehab, etc.: including one-component types, two-component types, and sheet types), aircraft/automobile/plastic molding tooling (press types, resin types such as stretched dies and matched dies, molds for vacuum molding/blow molding, master models, patterns for castings, multilayer tooling, various types of tools for examination, etc.), and modifiers/stabilizers (resin processing of fibers, stabilizers for polyvinyl chloride, adhesives for synthetic rubbers, etc.).

The organic-inorganic composite and the organic-inorganic composite film according to the present embodiment may be used in applications such as substrate materials, die bond materials, chip coating materials, laminate plates, optical fibers, optical waveguides, optical filters, adhesives for electronic components, coating materials, sealing materials, insulating materials, photoresists, encapsulation materials, potting materials, light transmissive layers or interlayer insulating layers for optical disks, printed circuit boards, laminate plates, light guide plates, and antireflection films.

## Examples

Hereinafter, Examples that describe the present embodiment more specifically will be shown. However, the present invention is not limited to Examples below.

The evaluation of physical properties in Examples and Comparative Examples was performed by the following procedures.

<HR-STEM imaging of inorganic compound particle>

(1) 0.1 g of an organic-inorganic composite and 9.9 g of chloroform (manufactured by Wako Pure Chemical Industries, Ltd.) were weighed into a sample bottle, and a rotor was placed therein. The contents were stirred with a stirrer for 30 minutes and then subjected to sonication for 30 minutes to obtain a sample solution. In the case where the organic-inorganic composite is difficult to disperse in chloroform, a solvent of good dispersibility was appropriately selected and used instead of chloroform.

(2) The sample solution was added dropwise to a grid (manufactured by Okenshoji Co., Ltd., "STEM100 Cu Grid") and air-dried to form a film of the organic-inorganic composite (organic-inorganic composite film).

(3) The organic-inorganic composite on the grid was observed in a transmission mode of HR-STEM, and images were taken. An appropriate measurement magnification was selected according to the size or shape of particles.

<Degree of circularity of inorganic compound particle>

(4) HR-STEM images taken by a method similar to (1) to (3) described above were processed with image analysis software (manufactured by Asahi Kasei Engineering Corp., "A-Zou Kun"), and the "equivalent circle diameters" and "circumferences" of the inorganic compound particles (outer diameters of particles) were calculated. In the present specification, the "equivalent circle diameter" refers to the diameter of a circle having an area equal to the area of a particle.

On the basis of the calculated equivalent circle diameters and circumferences, the respective degrees of circularity of 200 particles were determined according to the following formula:

$$\text{Degree of circularity} = (\text{Circumferential length determined from the equivalent circle diameter}) / (\text{Circumference}) \ldots (10)$$

In this context, (Circumferential length determined from the equivalent circle diameter) = (Equivalent circle diameter) $\times \pi$.

(5) Of the degrees of circularity of 200 particles, the numeric values of top 5% and bottom 5% were removed while an average value of the remaining 90% was determined, and the value was defined as the degree of circularity of the inorganic compound particles. Moreover, of the equivalent circle diameters of 200 particles, the numeric values of top 5% and bottom 5% were removed while an average value of the remaining 90% was determined, and the value was defined as the average particle size of the inorganic compound particles.

<L/D of inorganic compound particle>

(6) HR-STEM images taken by a method similar to (1) to (3) described above were processed with the image analysis software, and the "maximum lengths" and "minimum widths" of the respective outer diameters of 200 particles were calculated. Figure 4 is a schematic diagram showing a method for calculating the maximum length and minimum width of each particle. As shown in Figure 4, the "maximum length" refers to the maximum value of the distance between any two points on the circumference of the particle in the HR-STEM image, and the "minimum width" refers to the width of the particle in a direction perpendicular to a direction in which the particle exhibits the maximum length.

(7) The determined maximum length L and minimum width D were substituted into the following formula to determine the respective L/D of 200 particles:

$$L/D = (\text{Maximum length}) / (\text{Minimum width}) \ldots (11)$$

(8) Of L/D of 200 particles, the numeric values of top 5% and bottom 5% were removed while an average value of the remaining 90% was determined, and the value was defined as L/D of the inorganic compound particles.

<Outer shell thickness of hollow particle>

(9) HR-STEM images taken by a method similar to (1) to (3) described above were processed with the image analysis software, and the equivalent circle diameter of the inner diameter of each hollow particle was determined for 200 hollow particles.

(10) Of the equivalent circle diameters of 200 particles, the numeric values of top 5% and bottom 5% were removed while an average value of the remaining 90% was determined, and the value was defined as the "average inner diameter of the hollow particles".

(11) From the average particle size of the inorganic compound particles and the average inner diameter of the hollow particles determined above, the outer shell thickness of the hollow particles was calculated according to the following formula:

Outer shell thickness of the hollow particles = (Average particle size of the inorganic compound particles - Average inner diameter of the hollow particles) / 2 ... (6)

<Cavity ratio of hollow particle>

(12) Subsequently, from the average inner diameter of the hollow particles, the inner cavity radius a of the hollow particles was determined according to the following formula:

Inner cavity radius a of the hollow particles = Average inner diameter of the hollow particles / 2 ... (7)

(13) From the average particle size of the inorganic compound particles, the radius b of the inorganic compound particles was determined according to the following formula:

Radius b of the inorganic compound particles = Average particle size of the inorganic compound particles / 2 ... (8)

(14) The inner cavity radius a of the hollow particles and the radius b of the inorganic compound particles determined in (12) to (13) described above were substituted into the following formula to determine the cavity ratio of the inorganic compound particles:

$$\text{Cavity ratio (\%)} = (4\pi a^3/3) / (4\pi b^3/3) \times 100 \ldots (9)$$

<Refractive index of inorganic compound particle>

The refractive index of the inorganic compound particles was determined by the following method with use of a standard refractive solution (manufactured by Cargill, Inc.). However, in the case where a standard refractive solution with the desired refractive index cannot be obtained, a reagent with a known refractive index was used instead.

(1) A dispersion solution of the inorganic compound particles was collected into an evaporator, and the dispersion medium was evaporated.

(2) This was dried in a vacuum drying machine of 120°C to prepare a powder.

(3) Two to three droplets of the standard refractive solution with a known refractive index were added dropwise onto a glass plate, and the powder was mixed into this.
(4) The operation of (3) was performed for various standard refractive solutions, and a refractive index of the standard refractive solution when a mixed solution became transparent was defined as the refractive index of the inorganic compound particles.

<Measurement of halogen content of surface-modified inorganic compound particle>

The halogen content of surface-modified inorganic compound particles was determined by the following procedures by combustion treatment and an ion chromatograph method subsequent thereto:

(1) A sample was burned in an oxygen stream with use of a quartz combustion tube, and generated gas was absorbed into an absorbing solution (3% aqueous hydrogen peroxide solution).
(2) The absorbing solution was appropriately diluted, and the amount of bromine ions and chlorine ions in the absorbing solution was measured with an ion chromatograph (manufactured by Dionex Corp., "ICS-2000").
(3) From the measured total amount of bromine ions and chlorine ions, the total amount of bromine ions and chlorine ions with respect to the mass of the surface-modified inorganic compound was determined as a halogen content.

<Specific gravity of free polymer>

Measurement was performed according to ASTM D792.

<Molecular weight and molecular weight distribution of polymer>

The molecular weight and degree of molecular weight dispersion of polymers were determined by a "decomposition method" or an "addition method". In the case where the organic-inorganic composite is highly dispersible in toluene, measurement was performed by the "decomposition method"; and in the case of being poorly soluble, measurement was performed by the "addition method".

[Decomposition method]

(Pretreatment)

As pretreatment for the molecular weight measurement of the polymers attached to the inorganic compound particles, the organic-inorganic composite was subjected to hydrofluoric acid treatment (hereinafter, referred to as "HF treatment") according to the following procedures:

(1) To a container made of Teflon (registered trademark) or made of an arbitrary resin in which a rotor made of Teflon (registered trademark) was placed, 2 mL of toluene (manufactured by Wako Pure Chemical Industries, Ltd.) and 15 mg of a phase transfer catalyst (manufactured by Aldrich Co. LLC., "Aliquat 336") are added, and stirred to obtain a solution in which the phase transfer catalyst is dissolved in toluene.
(2) 200 mg of an organic-inorganic composite sample is added to the solution and dissolved by stirring.
(3) To the obtained solution, 2 mL of hydrofluoric acid (manufactured by Wako Pure Chemical Industries, Ltd., concentration: 46 to 48%) is further added, and stirred at room temperature for 24 hours to separate the polymers from the inorganic compound particles.
(4) The solution is neutralized with an aqueous solution of calcium carbonate (manufactured by Wako Pure Chemical Industries, Ltd.). In this regard, in the case where phase separation is difficult, a solution further supplemented with 2 mL of toluene and centrifuged may be used.

(Molecular weight measurement)

As to the sample solution obtained by the pretreatment, measurement of gel permeation chromatography (GPC) was performed under conditions described below. From the measurement results, the polymethyl methacrylate-based number-average molecular weight (Mn) and weight-average molecular weight (Mw) of a main peak were determined on the basis of a calibration curve prepared using a polymethyl methacrylate standard (manufactured by Sowa Science Corp.).
Apparatus: manufactured by Tosoh Corp., "HLC-8220GPC"
Detector: RI detector

Mobile phase: tetrahydrofuran
Flow rate: 0.35 mL/min.
Column: one in which two columns of "TSKgel GMHXL" manufactured by Tosoh Corp. were connected was used.
Column temperature: 40°C

(Molecular weight distribution)

The polymethyl methacrylate-based number-average molecular weight (Mn) and weight-average molecular weight (Mw) were substituted into the following formula to determine the molecular weight distribution of the polymers. The case where the molecular weight distribution was 2.31 or less was determined as "A" while the case where the degree of dispersion in the molecular weight distribution exceeded 2.31 was determined as "B".

$$\text{Molecular weight distribution} = Mw/Mn \ldots (12)$$

[Addition method]

Pretreatment was performed by the following method, and "molecular weight measurement" and "molecular weight distribution" were determined by a method similar to the "decomposition method" mentioned above.

(Pretreatment)

The "molecular weight" and "molecular weight distribution" of the polymers attached to the inorganic compound particles were determined according to the following procedures. Aside from Examples, an organic-inorganic composite in a state supplemented with a free polymerization initiator (for example, EBIB) was synthesized as a sample for molecular weight measurement, polymers secondarily produced by the addition of the polymerization initiator were measured, and this was regarded as the "molecular weight" and "molecular weight distribution" of the polymers attached to the inorganic compound particles.
The above-described decomposition method is a method of decomposing the inorganic compound particles by the HF treatment of the organic-inorganic composite and directly measuring only the polymers. By contrast, this addition method is a method of indirectly estimating the molecular weight of the polymers attached to the organic-inorganic composite. Specifically, because the polymerization of the present Examples is living radical polymerization, the molecular weights of a polymer extended from a polymerization initiating group bonded to the inorganic compound particle and a polymer extended from a free polymerization initiator compounded by pretreatment in the addition method can be considered almost equal. Accordingly, if the molecular weight of a polymer extended from a free polymerization initiator is measured, the molecular weight of a polymer extended from a polymerization initiating group bonded to the inorganic compound particle can be indirectly estimated.

(1) Synthesis of sample for molecular weight measurement

(1-1) A solution containing raw materials for an organic-inorganic composite was prepared by a method similar to Examples.
(1-2) To the solution, a polymerization initiator was added at monomer:polymerization initiator = 100:(0.01 to 0.25) (molar ratio). The polymerization initiator was compounded at a bromine content of approximately 10 to 20% with respect to a bromine content in the polymerization solution of Examples.
Polymerization initiator: ethyl 2-bromoisobutyrate (EBIB): manufactured by Aldrich Co. LLC.
(1-3) A catalyst solution was added to the solution, and a sample for measurement (mixture of the organic-inorganic composite and by-product polymers) was polymerized by a method similar to Examples.
(1-4) The flask was rapidly cooled by dipping in an ice bath, then added to hexane, stirred, and left standing. Then, the supernatant solution was discarded.
(1-5) To the remaining precipitate, hexane was added again, and left standing, and the supernatant solution was discarded. This operation was further repeated 8 times, and the remaining precipitate was dried by a method similar to Examples.

(2) To 1 g of the sample for molecular weight measurement obtained in (1) described above, 10 mL of a solvent (for example, MIBK) was added, and stirred for 24 hours.
(3) A solution in which an appropriate amount of THF was added to the above-described solution and further stirred

for 1 hour was centrifuged.
(4) The supernatant solution after the centrifugation was measured by a method similar to the "decomposition method" mentioned above to determine the "molecular weight" and the "degree of molecular weight dispersion".

<Amount of "polymer attached to inorganic compound particle" in organic-inorganic composite>

(1) 10 g of the organic-inorganic composite was weighed into a sample bottle and brought to 100 mL by adding MIBK, then a rotor was placed, and the contents were stirred for 24 hours with a stirrer.
(2) 10 mL of the above-described solution was weighed into another sample bottle and diluted into 100 mL by adding THF, then a rotor was placed, and the contents were further stirred for 24 hours with a stirrer.
(3) The solution was transferred to a centrifugal tube and treated at 6600 rpm for 30 minutes in a centrifuging machine.
(4) As to the supernatant solution after the centrifugation, measurement of gel permeation chromatography (GPC) was performed under conditions described below to measure free polymers in the organic-inorganic composite. From the measurement results, the polymethyl methacrylate-based peak top molecular weight (Mp) of a main peak was determined on the basis of a calibration curve prepared using a polymethyl methacrylate standard (manufactured by Sowa Science Corp.).
Apparatus: manufactured by Tosoh Corp., "HLC-8220GPC"
Detector: RI detector
Mobile phase: tetrahydrofuran
Flow rate: 0.35 mL/min.
Column: one in which two columns of "TSKgel GMHXL" manufactured by Tosoh Corp. were connected was used.
Column temperature: 40°C
(5) The peak of Mp > 800 obtained above was quantified as free polymers. In the quantification, a calibration curve was prepared by selecting a "quantitative standard substance" most similar in Mp from among the followings, and the amount (% by mass) of free polymers in the organic-inorganic composite was calculated on the basis of the quantitative standard substance. Moreover, in the case where there were a plurality of peaks, the total amount of them was determined and defined as the amount (% by mass) of free polymers.
(5-1) Quantitative standard substance: polymethyl methacrylate (manufactured by Sowa Science Corp.)
Polymethyl methacrylate "PMMA850 (Mp = 860)"
Polymethyl methacrylate "PMMA2K (Mp = 2,000)"
Polymethyl methacrylate "PMMA7K (Mp = 7,500)"
Polymethyl methacrylate "PMMA11K (Mp = 11,800)"
Polymethyl methacrylate "PMMA21K (Mp = 20,850)"
Polymethyl methacrylate "PMMA30K (Mp = 33,500)"
Polymethyl methacrylate "PMMA45K (Mp = 46,300)"
Polymethyl methacrylate "PMMA85K (Mp = 87,800)"
Polymethyl methacrylate "PMMA110K (Mp = 107,000)"
Polymethyl methacrylate "PMMA135K (Mp = 130,000)"
Polymethyl methacrylate "PMMA135K (Mp = 130,000)"
Polymethyl methacrylate "PMMA190K (Mp = 185,000)"
Polymethyl methacrylate "PMMA225K (Mp = 240,000)"
Polymethyl methacrylate "PMMA320K (Mp = 322,000)"
Polymethyl methacrylate "PMMA680K (Mp = 670,000)"
(6) Measurement of amount of polymers (amount of inorganic compound-attached polymer and free polymer) in organic-inorganic composite
Mass reduction (% by mass) when the organic-inorganic composite was heated under the following conditions was measured at n = 3 by a thermogravimetric measurement apparatus, and an average value thereof was defined as the "amount of polymers (inorganic compound-attached polymer and free polymer) in the organic-inorganic composite".
Apparatus: Shimadzu Corp., "TGA-50"
Atmosphere: 1% oxygen-containing nitrogen stream
Sample container: aluminum pan
Temperature program: starting at 25 °C → temperature rising at 20°C/min. → reaching 500°C → keeping at 500°C for 1 hour
(7) From the "amount (% by mass) of free polymers" and the "amount of polymers (amount of inorganic compound-attached polymer and free polymer) (% by mass) in the organic-inorganic composite" obtained above, the "amount

(% by mass) of the polymers attached to the inorganic compound particles" was calculated according to the following formula:

$$\text{Amount (\% by mass) of the polymers attached to the inorganic compound particles} = (A - B) / A \times 100 \ldots (13)$$

In this context, A: the amount of polymers (amount of inorganic compound-attached polymer and free polymer) (% by mass) in the organic-inorganic composite, and B: the amount (% by mass) of free polymers.

<Amount of reactive double bond in polymer>

The amount of reactive double bonds in the polymers was measured according to the following procedures:

(1) The molar quantity of monomers (for example, 2-hydroxyethyl methacrylate) containing hydroxy groups as functional groups in the polymers was determined from each monomer conversion rate. The monomer conversion rate was determined by gas chromatography (GC) under conditions described below.
Apparatus: manufactured by Shimadzu Corp., "GC-14B"
Detector: FID
Column temperature: 50°C → 200°C (temperature rising rate: 20°C/min.), keeping at 250°C
GC inlet temperature: 230°C
Detector temperature: 280°C
Carrier gas: helium
(2) The addition reaction of monomers containing hydroxy groups as functional groups and monomers (for example, 2-isocyanatoethyl methacrylate) containing isocyanate groups as functional groups was performed, and the amount of hydroxy groups in the monomers containing hydroxy groups as functional groups remaining in the products was determined. The measurement of the amount of hydroxy groups was determined by a nuclear magnetic resonance apparatus (NMR) under conditions described below.
Apparatus: manufactured by Bruker Corp., "DPX-400"
Solvent: deuterated form of N,N-dimethylformamide

<Measurement of Tg of organic-inorganic composite>

Tg of the organic-inorganic composite was determined by a differential scanning calorimeter (DSC) under the following conditions:

Apparatus: manufactured by PerkinElmer, Inc., "Diamond DSC"
Temperature program: starting at -40°C → keeping for 20 minutes → temperature rising at 20°C/min. → 200°C

<Measurement of halogen content of organic-inorganic composite>

The halogen content of the organic-inorganic composite was determined by a method similar to "Measurement of halogen content of surface-modified inorganic compound particle" mentioned above.

<Measurement of copper content of organic-inorganic composite>

The copper content was determined by the following procedures by acid decomposition and an ICP emission analysis method subsequent thereto:

(1) A sample was decomposed with sulfuric acid (manufactured by Wako Pure Chemical Industries, Ltd.), nitric acid (manufactured by Wako Pure Chemical Industries, Ltd.), and hydrofluoric acid (manufactured by Wako Pure Chemical Industries, Ltd.).
(2) Furthermore, heating and dissolution were performed with nitric acid (1+2).
(3) The solution was diluted and measured with an ICP emission analysis apparatus (manufactured by Shimadzu Corp., "ICPS-8100").

<Measurement of fluorine content of organic-inorganic composite>

The fluorine content was determined by the following procedures by combustion treatment and an ion chromatograph method subsequent thereto:

(1) A sample was burned under oxygen stream with use of a quartz combustion tube. In this regard, the sample may be used after being dissolved and/or diluted, if necessary.
(2) Gas generated by the combustion was absorbed into an ice-cooled absorbing solution (0.2% aqueous NaOH solution).
(3) The absorbing solution was appropriately diluted, and the amount of fluorine ions in the absorbing solution was measured with an ion chromatograph (manufactured by Dionex Corp., "ICS-2000"). From the measured amount of fluorine ions, the amount of fluorine ions with respect to the mass of the organic-inorganic composite was determined as a fluorine content.

<Measurement of inorganic compound content of organic-inorganic composite>

Mass reduction when the organic-inorganic composite was heated under the following conditions was determined by a thermogravimetric measurement apparatus:

Apparatus: Shimadzu Corp., "TGA-50"
Atmosphere: 1% oxygen-containing nitrogen stream
Sample container: aluminum pan
Temperature program: starting at 25 °C → temperature rising at 20°C/min. → reaching 500°C → keeping at 500°C for 1 hour

The measurement was performed at n = 3, and an average value thereof was defined as the inorganic compound content of the organic-inorganic composite. The values of % by mass and % by volume were calculated as described below.

(1) % by mass
The measured mass reduction (% by mass) was substituted into the following formula to calculate the content (% by mass) of the inorganic compound:

$$\text{Inorganic compound content (\% by mass)} = 100 - \text{Mass reduction (\% by mass)}$$

(2) % by volume

(2-1) Calculation of mass and volume of polymer
The measured mass reduction (mg) was regarded as the mass (mg) of polymers, and the value was substituted into the following formula to calculate the volume (μL) of polymers:

$$\text{Volume } (\mu L) \text{ of polymers} = \{\text{Mass (mg) of polymers}\} / \{\text{Specific gravity of polymers}\}$$

(2-2) Calculation of mass and volume of inorganic compound
The measured mass reduction (mg) was substituted into the following formula to calculate the mass (mg) of the inorganic compound:

$$\text{Mass (mg) of the inorganic compound} = \text{Amount (mg) of the sample} - \text{Mass reduction (mg)}$$

The mass of the inorganic compound was substituted into the following formula to calculate the volume (μL) of the inorganic compound:

$$\text{Volume } (\mu\text{L}) \text{ of the inorganic compound} = \{\text{Mass (mg) of the inorganic compound}\} / \{\text{Density } (\text{g/cm}^3) \text{ of the inorganic compound}\}$$

(2-3) Calculation of inorganic compound content (% by volume)
The values obtained as described above were substituted into the following formula to calculate the inorganic compound content (% by volume):

$$\text{Inorganic compound particle content (\% by volume)} = \{\text{Volume } (\mu\text{L}) \text{ of the inorganic compound particles} \times 100\} / \{(\text{Volume } (\mu\text{L})) \text{ of the inorganic compound particles} + (\text{Volume } (\mu\text{L}) \text{ of polymers})\} \ldots (14)$$

<Preparation of coating material>

An arbitrary organic solvent was added to the organic-inorganic composite, and stirring treatment was performed at room temperature for 24 hours to prepare a solvent dispersion solution of the organic-inorganic composite. Furthermore, a photopolymerization initiator, a curing agent, a curing accelerator, a cross-linking agent, a free polymer, etc. were added, if necessary, and mixed to prepare a coating material. Incidentally, sonication or concentration treatment with an evaporator was applied, if necessary.

<Solid content concentration of coating material>

The solid content concentration of the coating material was determined by the following procedures:

(1) The coating material was weighed into a weighing bottle, and the mass (mass A) of the contents was recorded.
(2) The weighing bottle was air-dried under nitrogen stream until the flowability of the contents was lost.
(3) The weighing bottle was dried under vacuum at 105°C for 24 hours and then cooled to room temperature in a desiccator.
(4) The mass of the weighing bottle was measured, and the mass (mass B) of the contents was recorded.
(5) The solid content was determined according to the following formula:

$$\text{Solid content (\% by mass)} = (\text{Mass B}) / (\text{Mass A}) \times 100$$

<Preparation of organic-inorganic composite film (coating film)>

An organic-inorganic composite film (coating film) was prepared by the following procedures:

(1) An appropriate amount of the coating material mentioned above was weighed.
(2) The coating material of (1) was placed on a PET film or a TAC film and immediately applied with a bar coater. However, the bar coater was appropriately selected so that a coating film thickness after drying became on the order of 1.5 to 2 μm.
PET film: manufactured by Toyobo Co., Ltd., "Cosmoshine 4100" (thickness: 100 μm, total light transmittance: 90%, haze: 0.9%)
TAC film: manufactured by Fujifilm Corp. (thickness: 80 μm, total light transmittance: 93%, haze: 0.7%)
(3) After air drying for 10 minutes, drying was performed for 10 minutes in an explosion-proof-type blow drying machine of 80°C, and then, light curing or thermal curing was performed, if necessary, to obtain an "organic-inorganic composite film (coating film)".

Light curing: the coating film after the drying was irradiated with UV light at a light quantity of 600 mJ/cm$^2$ by a

high-pressure mercury lamp from the organic-inorganic composite film side under nitrogen.

Thermal curing: heating was performed for 5 hours in an explosion-proof-type blow drying machine of 100°C.

<Appearance of organic-inorganic composite film (coating film)>

The organic-inorganic composite film (coating film) was visually observed, and the case where the aggregation of particles was not substantially seen was determined as pass ("A") while the case where the aggregation of particles was seen was determined as "B".

<Refractive index measurement of organic-inorganic composite film (coating film) or molded product>

The refractive index was measured under conditions described below using a refractive index measurement apparatus.

Apparatus: manufactured by Metricon Corp., "MODEL 2010 PRISM COUPLER"
Mode: single film mode or bulk mode
Measurement wavelength: 633 nm

<Measurement of total light transmittance and haze of organic-inorganic composite film (coating film) or molded product>

The total light transmittance and haze of the coating film or a molded product were measured according to "JIS K7105: Testing methods for optical properties of plastics" using a haze meter (manufactured by Nippon Denshoku Industries Co., Ltd., "NDH 5000W").

<Measurement of pencil hardness of organic-inorganic composite film (coating film)>

The pencil hardness of the coating film was measured at a load of 500 g according to "JIS K5600-5-4: General testing methods for paints - Part 5: Mechanical properties of the coating film - Section 4: Scratch hardness (pencil method)" using Electric System Pencil Scratch Hardness Tester (manufactured by Yasuda Seiki Seisakusho Ltd.).

<Adhesion of organic-inorganic composite film (coating film)>

A tape peeling test was carried out according to "JIS-K5600" using Cross Cut Guide (CCI-1, manufactured by COTEC Corp.) to judge adhesion. An organic-inorganic composite film that was not peeled off was determined as A while an organic-inorganic composite film that was peeled off was determined as B.

<Solvent resistance of organic-inorganic composite film (coating film)>

A cured film was prepared on glass by a method similar to "Preparation of organic-inorganic composite film", and the cured film was dipped in a tetrahydrofuran solution and covered with a lid. After being left in this state for 3 days, the state of the cured film in a portion dipped in the solution was confirmed. The state where the film remained was determined as A while the state where the film was dissolved or swollen was determined as B.

<Measurement of contact angle of organic-inorganic composite film (coating film) or molded product>

The water contact angle (contact angle against water) and oil contact angle (contact angle against n-hexadecane) of the coating film or a molded product were measured by a sessile drop method using a contact angle meter (manufactured by Kyowa Interface Science Co., Ltd.).

<Calculated refractive index of organic-inorganic composite film>

The Maxwell-Garnett formula was used in order to determine the calculated refractive index of the obtained organic-inorganic composite film. The refractive index of polymers was determined by synthesizing polymers of the same composition as in the polymers in the organic-inorganic composite and measuring the refractive index thereof.

The value of a refractive index measured by the method of <Refractive index measurement of organic-inorganic composite film (coating film), molded product, or inorganic compound particle> mentioned above was used as the refractive index of inorganic compound particles, and a value in which the value of an inorganic compound particle content (% by volume) measured according to <Measurement of inorganic compound content of organic-inorganic composite> mentioned above was divided by 100 was used as the volume fraction of inorganic compound particles.

<Maxwell-Garnett formula>

$$(n_a^2 - n_m^2) / (n_a^2 + 2n_m^2) = q(n_p^2 - nm^2) / (n_p^2 + 2n_m^2) \quad ... (5)$$

In formula (5), $n_a$ represents the calculated refractive index of the organic-inorganic composite film, $n_m$ represents the refractive index of polymers, $n_p$ represents the refractive index of inorganic compound particles, and q represents the volume fraction of inorganic compound particles.

The typical calculated values of inorganic compound particles and organic polymers in a curable composition are shown below. A photopolymerization initiator was in a very small amount and was therefore excluded from calculation.

MMA polymer; refractive index: 1.490, specific gravity: 1.19

Copolymer consisting of MMA and reactive double bond; the refractive indexes and specific gravities of copolymers differing in molar ratio were determined from the following values and a linear approximation formula obtained from the MMA polymer:

Copolymer in which the molar ratio between MMA and the reactive double bond is 77/23; refractive index: 1.508, specific gravity: 1.21
Copolymer in which the molar ratio between MMA and the reactive double bond is 45/55; refractive index: 1.529, specific gravity: 1.23
Copolymer in which the molar ratio between ethyl methacrylate and the reactive double bond is 67/33; refractive index: 1.514, specific gravity: 1.16
Copolymer in which the molar ratio between butyl acrylate and the reactive double bond is 60/40; refractive index: 1.519, specific gravity: 1.20
Copolymer in which the molar ratio between butyl acrylate and the reactive double bond is 73/27; refractive index: 1.510, specific gravity: 1.19
Copolymer in which the molar ratio between ethyl acrylate and the reactive double bond is 48/52; refractive index: 1.526, specific gravity: 1.24
Copolymer with 55/45 mol% ratio of 2,2,2-trifluoroethyl methacrylate and the reactive double bond; refractive index: 1.522, specific gravity: 1.32
20-nm spherical silica, 50-nm spherical silica, 100-nm spherical silica, and beaded silica; refractive index: 1.450, specific gravity: 2.20
48-nm hollow silica; refractive index: 1.300, specific gravity: 1.73
64-nm hollow silica; refractive index: 1.250, specific gravity: 1.55

<Voidage of organic-inorganic composite film, molded product>

The actually measured refractive index of an organic-inorganic composite film having voids agrees with a value in which the product of the refractive index and volume fraction of the voids (refractive index of air: 1.00) was added to the product of the refractive index and volume fraction of the organic-inorganic composite. Therefore, the voidage was calculated according to the following formula:

$$\text{Voidage } (\%) = (n_a - n_b) / (n_a - 1) \times 100 \quad ... (4)$$

In formula (4), $n_a$ represents the calculated refractive index of the organic-inorganic composite, and $n_b$ represents the actually measured refractive index of the organic-inorganic composite film.

The voidage of a molded product can also be determined in a similar way.

<Degree of particle dispersion of organic-inorganic composite film or molded product>

The degree of particle dispersion of the organic-inorganic composite film was measured according to the following procedures:

(1) A thermoplastic composition was vacuum hot-pressed under the following conditions using a compression molding machine to thereby prepare a sample with a thickness of approximately 100 μm:

Apparatus: manufactured by SHINTO Metal Industries Corp., "SFV-30"

Temperature: 150 to 255°C

(2) An ultrathin section was prepared from the sample.
(3) The ultrathin section was observed in a scanning mode of a high-resolution scanning transmission electron microscope HR-SEM, and images were taken. However, an appropriate measurement magnification was selected according to the size or shape of particles.
(4) The HR-STEM images were processed with image analysis software (manufactured by Asahi Kasei Engineering Corp., "A-Zou Kun"), each degree of particle dispersion was determined for 500 particles according to the following formula by a distance-between-centroid method, and an average value thereof was defined as the degree of particle dispersion of the molded product. A smaller degree of particle dispersion means that particles are more uniformly dispersed.

Degree of particle dispersion = (Average deviation of the distance between centroids of adjacent particles) / (Distance between centroids of adjacent particles) ... (3)

The degree of particle dispersion of the molded product can also be determined in a similar way.

<Measurement of relative permittivity of organic-inorganic composite film (molded product)>

Since the relative permittivity of the organic-inorganic composite film formed on a substrate cannot be directly measured because of being influenced by the substrate, the relative permittivity of a molded product was measured under the following conditions and regarded as the relative permittivity of the organic-inorganic composite film.

(1) The organic-inorganic composite was vacuum hot-pressed under the following conditions using a compression molding machine to thereby prepare a molded product with a thickness of approximately 50 to 100 μm:

Apparatus: manufactured by SHINTO Metal Industries Corp., "SFV-30"

Temperature: 100 to 255°C

(2) The relative permittivity of the molded product was measured under the following conditions:

Apparatus: manufactured by Agilent Technologies, Inc., 4284A PRECISION LCR METER
Frequency: 1 MB
Voltage: 1 V

<Preparation of microstructure>

A coating film or molded product for microstructure preparation was prepared according to the following procedures.

(1-a) Preparation of coating film for microstructure preparation
The coating film was prepared by the following procedures:

(1-1) An appropriate amount of the coating material mentioned above was weighed.
(1-2) The coating material of (1) was placed on a PET film (PET film: manufactured by Toyobo Co., Ltd., "Cosmoshine A4100", thickness: 100 μm, total light transmittance: 90%, haze: 0.9%)) as a support and immediately applied with a bar coater. However, the bar coater was appropriately selected so that a coating film thickness after drying became on the order of 3 μm.
(1-3) After air drying for 1 hour, drying was performed for 1 hour in an explosion-proof-type blow drying machine of 100°C to prepare a coating film.

(1-b) Preparation of molded product for microstructure preparation

The organic-inorganic composite was vacuum hot-pressed under the following conditions using a compression molding machine to thereby prepare a molded product with a thickness of approximately 50 μm:

Apparatus: manufactured by SHINTO Metal Industries Corp., "SFV-30"
Temperature: 100 to 255°C

(2) Preparation of microstructure

The surface of the coating film or molded product obtained above was hot-pressed under the following conditions to thereby obtain a microstructure.
Size of shaping surface of die: 10 cm × 10 cm
Structure of die: one in which cone-shaped projections with a distance between pitches of 300 nm and a height of approximately 300 nm were regularly arranged.
Heating conditions: temperature was raised from room temperature to 220°C, and a fine structure was shaped by hot press for 1 minute, followed by cooling to 30°C.
Pressing pressure: 0.5 MPa

<Morphological observation of microstructure cross-section and dimensional measurement

The cross-section of the microstructure was morphologically observed by HR-STEM mentioned above to measure 200 projections and depressions in the fine structure. The case where the number of critical damages in projections and depressions is 10 or less (/200 individuals) was determined as pass ("A") while the case of 11 or more was determined as ("B").
Moreover, the dispersibility of the inorganic compound particles was observed, and the case of being uniform was determined as pass ("A") while the case of being nonuniform was determined as ("B").
Furthermore, 200 projections and depressions were measured, and the distance (X) between apexes of adjacent projections and the depth (Y) of the depressions were calculated from an average value thereof. A schematic diagram of the measured site is shown in Figure 3.

<Measurement of transmittance of microstructure>

Transmittance (%) before fine structure transfer and transmittance (%) after transfer were measured by the following method, and their respective average values at a wavelength of 530 to 570 nm were determined.
Apparatus: spectrocolorimeter (manufactured by Nippon Denshoku Industries Co., Ltd., "SD-5000")
Measurement wavelength: 380 to 780 nm (5 nm intervals)
Transmittance in the case where the microstructure was irradiated with light from the backside (from the backside of the substrate in the case where the fine structure was transferred to the coating film) was measured.

<Measurement of contact angle of microstructure>

The water contact angle (contact angle against water) of the coating film was measured by a sessile drop method using a contact angle meter (manufactured by Kyowa Interface Science Co., Ltd.).

<Reflectance of microstructure>

The minimum reflectance was measured by the following procedures using a spectrophotometer:

(1) The backside of the support in the antireflection film was lightly scraped with sandpaper and then coated with matte black spray paint.
(2) The reflectance was measured at a wavelength in the range of 380 to 700 nm with a spectrophotometer.
Apparatus: manufactured by Hitachi, Ltd., "U-3410": with a large-size sample compartment and an integrating sphere
Reference: the reflectance of a vapor deposited aluminum film was defined as 100%.
(3) The lowest reflectance among the wavelengths of 450 to 650 nm was defined as the minimum reflectance.
(4) The case where the minimum reflectance of the microstructure after fine structure (projections and depressions) transfer was smaller than the minimum reflectance before fine structure (projections and depressions) transfer was determined as pass ("A") while the case where the minimum reflectance was equivalent or larger was determined

as fail ("B").

<Abrasion resistance of microstructure>

A sample was fixed with a cellophane tape, and the surface after being reciprocally frictioned the predetermined number of times at a stroke width of 23 mm and a rate of 20 mm/min. under a predetermined load on cloth (manufactured by Toray Industries, Inc., "Toraysee") was observed by HR-STEM mentioned above. The microstructure comprising the organic-inorganic composite and a microstructure of an organic polymer (reference) that did not comprise inorganic compound particles were compared, and the case where the degree of a damage in the fine structure was smaller than the reference shown in Table 16 was determined as pass ("A") while the case of being equal to or larger than the reference was determined as fail ("B").

<Preparation of antireflection film>

Conditions under which the thickness of a high-refractive index layer after drying and curing became approximately 5 μm and the thickness of a low-refractive index layer became approximately 110 nm were selected, and an antireflection film of three-layer constitution or four-layer constitution was prepared by the following procedures:

(1) The following two types of coating materials were prepared by the method mentioned above, respective coating films were prepared on a support (PET film or TAC film + hard coat layer), and the refractive index was measured by the method mentioned above.

(1-1) Coating material A
(1-2) Coating material B
In this context, the relationship [Refractive index of the coating film of the coating material A] > [Refractive index of the coating film of the coating material B] holds.

(2) An appropriate amount of the coating material A was weighed, and the coating material A was placed on a support (PET film or TAC film + hard coat layer), immediately applied with a bar coater, and air-dried. However, the coater was appropriately selected so as to produce the desired film thickness.
PET film: manufactured by Toyobo Co., Ltd., "Cosmoshine A4100" (thickness: 100 μm, total light transmittance: 90%, haze: 0.9%)
TAC film: manufactured by Fujifilm Corp. (thickness: 80 μm, total light transmittance: 93%, haze: 0.7%)
(3) After further drying for 2 minutes in an explosion-proof-type blow drying machine of 90°C, UV curing or thermal curing was performed, if necessary, and a high-refractive index layer was formed on the support.
(4) The coating material B was further placed on the high-refractive index layer, and a low-refractive index layer was formed by performing operation similar to (2) to (3) described above to prepare an antireflection film of three-layer constitution or four-layer constitution.

<Appearance of antireflection film>

The antireflection film was visually observed, and the case where the aggregation of particles was not substantially seen was determined as pass ("A") while the case where the aggregation of particles was seen was determined as fail ("B").

<Glare of antireflection film>

Glare in the antireflection film was evaluated by the following procedures:

(1) The backside of the support in the antireflection film was lightly scraped with sandpaper and then coated with matte black spray paint.
(2) The antireflection film was irradiated with the light of a fluorescent lamp from the surface (antireflection film side), and the case where glare compared with the reference shown in Tables 10 and 11 was small was determined as pass ("A") while the case where glare was equivalent or larger was determined as fail ("B").

<Measurement of minimum reflectance of antireflection film>

The minimum reflectance was measured by the following procedures using a spectrophotometer:

(1) The backside of the support in the antireflection film was lightly scraped with sandpaper and then coated with matte black spray paint.

(2) The reflectance was measured at a wavelength in the range of 380 to 700 nm with the following spectrophotometer:

Apparatus: manufactured by Hitachi, Ltd., "U-3410": with a large-size sample compartment and an integrating sphere

Reference: the reflectance of a vapor deposited aluminum film was defined as 100%.

(3) The lowest reflectance among the wavelengths of 450 to 650 nm was defined as the minimum reflectance.

<Preparation of optical lens and evaluation of appearance>

An optical lens with a diameter of approximately 1 cm was prepared according to the following procedures:

(1) The organic-inorganic composite or a thermoplastic composition was dried under vacuum at 80°C for 4 hours.

(2) The dried organic-inorganic composite was molded into an optical lens using an injection molding machine. The conditions were as follows and were appropriately adjusted according to a sample within the following range:

Cylinder temperature: 220 to 260°C
Mold clamping pressure: 50 t
Die temperature: 70 to 110°C
Injection pressure: 60 to 80 MPa

(3) The appearance of the obtained optical lens was visually judged, and the case where the appearance was transparent and uniform was determined as pass ("A") while the case where the appearance was opaque or nonuniform (a mass of particles, etc., was confirmable) was determined as fail ("B").

<Preparation of sample for measurement of refractive index, total light transmittance, yellowness index, and degree of particle dispersion of optical lens>

The organic-inorganic composite or a thermoplastic composition was vacuum hot-pressed under the following conditions using a compression molding machine to thereby prepare a sample with a thickness of approximately 100 μm:

Apparatus: manufactured by SHINTO Metal Industries Corp., "SFV-30"

Temperature: 150 to 255°C

<Measurement of total light transmittance of optical lens>

Measurement was performed according to "JIS K7105: Testing methods for optical properties of plastics" using a haze meter (manufactured by Nippon Denshoku Industries Co., Ltd., "NDH 5000W").

<Measurement of yellowness index (YI) of optical lens>

The measurement of yellowness index (YI) was performed using a spectrocolorimeter (manufactured by Nippon Denshoku Industries Co., Ltd., "SD-5000"), and the case where YI was smaller than the reference was determined as pass ("A") while the case of being equivalent to or larger than the reference was determined as fail ("B").

<Raw material>

The contents of raw materials used in Examples and Comparative Examples are shown below in (1) to (8).

(1) Inorganic matter particle solution

(1-1) 20-nm spherical silica solution

Trade name: manufactured by Nissan Chemical Industries, Ltd., "MIBK-ST"
$SiO_2$ content: 30% by mass

Cavity ratio: 0%
Refractive index: 1.45
L/D: 1.1

(1-2) 100-nm spherical silica solution

Trade name: manufactured by Nissan Chemical Industries, Ltd., "MEK-ST-ZL"
$SiO_2$ content: 30% by mass
Cavity ratio: 0%
Refractive index: 1.45
L/D: 1.1

(1-3) Beaded silica solution

Trade name: manufactured by Nissan Chemical Industries, Ltd., "MIBK-ST-UP"
20% by mass of beaded silica particle/MIBK solution
Cavity ratio: 0%
Refractive index: 1.45

A long-chain structure in which spherical silica particles were connected in a form of beads. A TEM photograph of the beaded inorganic matter particle is shown in Figure 2.

(1-4) Hollow silica solution

Trade name: manufactured by JGC C&C, "Sluria 2320"
20% by mass of hollow silica particle/MIBK solution
Average particle size: 48 nm, outer shell thickness: 8.5 nm
Cavity ratio: 27%
Refractive index: 1.30
L/D: 1.1

(1-5) Zirconia solution-1

Trade name: manufactured by Nissan Chemical Industries, Ltd.
Zirconia composite particle content: 30% by mass
30% by mass of zirconia composite particle/MIBK solution (zirconia composite particle: composite particle of zirconia, silica, and tin oxide)
Refractive index: 1.90 to 1.99
L/D: 1.5
Density: 5.1 g/$cm^3$

(1-6) Zirconia solution-2

Trade name: manufactured by Nissan Chemical Industries, Ltd.
Zirconia composite particle content: 30% by mass
30% by mass of zirconia composite particle/MEK solution(zirconia composite particle: composite particle of zirconia, silica, and tin oxide)
Refractive index: 1.90 to 1.99
L/D: 1.5
Density: 5.1 g/$cm^3$

(1-7) Titania solution

Trade name: manufactured by JGC C&C
Titania particle content: 20% by mass
20% by mass of titania particle/MIBK solution
Refractive index: 1.90 to 1.99
L/D: 2.1
Density of inorganic compound particle: 4.1 g/$cm^3$

(2) Silane compound

(2-1) 3-(2-Bromoisobutyloxy)propyldimethylchlorosilane (hereinafter, referred to as "BPS")

BPS represented by the following chemical formula (10) was synthesized with reference to a heretofore known method (JP 2006-063042 A, etc.):

[Chemical Formula 9]

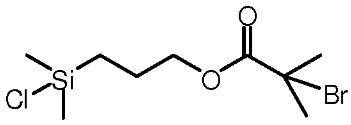

・・・ (10)

(2-2) (3-(2-Bromoisobutyryl)propyl)dimethylethoxysilane (hereinafter, referred to as "BIDS")

BIDS represented by the following chemical formula (11) was synthesized with reference to a heretofore known method (JP 2006-257308 A):

[Chemical Formula 10]

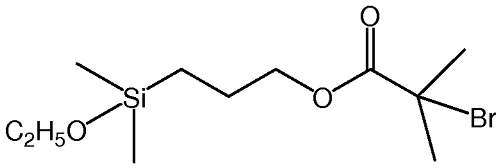

・・・ (11)

(2-3) 1,1,1,3,3,3-Hexamethyldisilazane (hereinafter, referred to as "HMDS"): manufactured by Tokyo Chemical Industry Co., Ltd.
(2-4) 3-Methacryloxypropyldimethylmethoxysilane (hereinafter, referred to as "MS"): manufactured by Gelest, Inc.

(3) Polymerization catalyst

(3-1) Copper (I) bromide (CuBr): manufactured by Wako Pure Chemical Industries, Ltd.
(3-2) Copper (II) bromide ($CuBr_2$): manufactured by Wako Pure Chemical Industries, Ltd.

(4) Ligand

(4-1) N,N,N',N",N"-pentamethyldiethylenetriamine (hereinafter, referred to as "PMDETA"): manufactured by Aldrich Co. LLC.
(4-2) 4,4'-Di(5-nonyl)-2,2'-dipyridine (hereinafter, referred to as "dNbpy"): manufactured by Aldrich Co. LLC.

(5) Monomer

The following monomers other than (5-13) and (5-14) were used after removing a polymerization inhibitor through an alumna column, then performing nitrogen bubbling for 1 hour or more, and performing deoxidation treatment. In the case where the alumina column cannot be used, the polymerization inhibitor may be removed by a heretofore known method such as distillation.

(5-1) Methyl methacrylate (hereinafter, also referred to as "MMA"): manufactured by Tokyo Chemical Industry Co., Ltd.
(5-2) Ethyl methacrylate (hereinafter, also referred to as "EMA"): manufactured by Tokyo Chemical Industry Co., Ltd.

(5-3) n-Butyl acrylate (hereinafter, also referred to as "nBA"): manufactured by Tokyo Chemical Industry Co., Ltd.
(5-4) Ethyl acrylate (hereinafter, also referred to as "EA"): manufactured by Tokyo Chemical Industry Co., Ltd.
(5-5) Methyl acrylate (hereinafter, also referred to as "MA"): manufactured by Tokyo Chemical Industry Co., Ltd.
(5-6) 2,2,2-Trifluoroethyl methacrylate (hereinafter, also referred to as "TFEMA"): manufactured by Tokyo Chemical Industry Co., Ltd.
(5-7) 2,2,3,3,3-Pentafluoropropyl methacrylate (hereinafter, also referred to as "PFPMA"): manufactured by Daikin Industries, Ltd.
(5-8) 2-Hydroxyethyl methacrylate (hereinafter, also referred to as "HEMA"): manufactured by Tokyo Chemical Industry Co., Ltd.
(5-9) Glycidyl methacrylate (hereinafter, also referred to as "GMA"): manufactured by Tokyo Chemical Industry Co., Ltd.
(5-10) Methacryl-modified silicone oil (hereinafter, also referred to as "SiMA"): manufactured by Shin-Etsu Chemical Co., Ltd. (Shin-Etsu Silicone), "X-22-2475"
(5-11) Benzyl methacrylate (hereinafter, also referred to as "BzMA"): manufactured by Tokyo Chemical Industry Co., Ltd.
(5-12) Styrene (hereinafter, also referred to as "St"): manufactured by Tokyo Chemical Industry Co., Ltd.
(5-13) 2-Isocyanatoethyl methacrylate (hereinafter, also referred to as "MOI"): Showa Denko K.K.
(5-14) 2-Isocyanatoethyl acrylate (hereinafter, also referred to as "AOI"): Showa Denko K.K.

(6) Solvent, etc.

(6-1) Methanol: manufactured by Wako Pure Chemical Industries, Ltd.
(6-2) Methyl isobutyl ketone (hereinafter, referred to as "MIBK"): manufactured by Wako Pure Chemical Industries, Ltd.
(6-3) Methyl ethyl ketone (hereinafter, referred to as "MEK"): manufactured by Wako Pure Chemical Industries, Ltd.
(6-4) Tetrahydrofuran (hereinafter, referred to as "THF"): manufactured by Wako Pure Chemical Industries, Ltd.
(6-5) Dimethylformamide (hereinafter, referred to as "DMF"): manufactured by Wako Pure Chemical Industries, Ltd.
(6-6) Hexane: manufactured by Wako Pure Chemical Industries, Ltd.
(6-7) Cyclohexanone: manufactured by Wako Pure Chemical Industries, Ltd.

(7) Methanol-water mixed solution

(7-1) Methanol-water mixed solution - 1: mixed solution containing 77% by volume of methanol and 23% by volume of ion-exchanged water
(7-2) Methanol-water mixed solution-2: mixed solution containing 80% by volume of methanol and 20% by volume of ion-exchanged water

(8) Polymerization initiator

(8-1) Ethyl 2-bromoisobutyrate (hereinafter, also referred to as "EBIB"): manufactured by Aldrich Co. LLC.
(8-2) Azobisisobutyronitrile (hereinafter, also referred to as "AIBN") :manufactured by Wako Pure Chemical Industries, Ltd.

(9) Addition reaction catalyst

Dibutyltin dilaurate (hereinafter, referred to as DBTDL): manufactured by Wako Pure Chemical Industries, Ltd.

(10) Polymerization inhibitor

2,6-Di-tert-butylphenol: manufactured by Tokyo Chemical Industry Co., Ltd.

(11) Photo-radical initiator

(11-1) 1-Hydroxy-cyclohexyl-phenyl-ketone (Irgacure 184): manufactured by Chiba Japan Co., Ltd.
(11-2) 2-Methyl-1-(4-methylthiophenyl)-2-morpholinopropan-1-one (Irgacure 907): manufactured by Chiba Japan Co., Ltd.

(12) Photo-acid-generating agent

CPI-100P (brand name): manufactured by San-Apro Ltd.

(13) Curing agent

(13-1) "4-Methylhexahydrophthalic anhydride/hexahydrophthalic anhydride = 70/30"
Trade name: manufactured by New Japan Chemical Co., Ltd., "Rikacid MH-700G"
(13-2) Maleic acid: manufactured by Wako Pure Chemical Industries, Ltd.

(14) Curing accelerator

(14-1) Amine-based compound
Trade name: manufactured by San-Apro Ltd., "U-CAT 18X"
(14-2) Triethylamine (hereinafter, referred to as TEA): manufactured by Wako Pure Chemical Industries, Ltd.

(15) Cross-linking agent

(15-1) (3',4'-Epoxycyclohexane)methyl-3,4-epoxycyclohexane carboxylate (hereinafter, also referred to as "Celloxide 2021P"): Daicel Corp.
(15-2) Dipentaerythritol pentaacrylate: manufactured by Sigma-Aldrich Co. LLC.

<Synthesis of surface-modified inorganic compound particle-1 (synthesis of BPS-modified 20-nm spherical silica particle)>

BPS-modified 20-nm spherical silica particles (20-nm spherical silica particles in which BPS was attached to the surface) were synthesized according to the following procedures:

(1) The inside of a two-neck flask in which a cooling tube was connected and a rotor was placed was nitrogen-substituted.
(2) 84% by volume of a 20-nm spherical silica solution was introduced into the flask under nitrogen, and further 8% by volume of BPS was introduced, and stirring was started.
(3) The flask was dipped in an oil bath of 85°C, and reaction was performed for 36 hours with stirring.
(4) The reaction solution was cooled to room temperature, and then, 8% by volume of HMDS was introduced under nitrogen.
(5) After stirring at room temperature for 2 hours, reaction was performed by stirring at 80°C for 8 hours, and the reaction solution was cooled to room temperature.
(6) The reaction solution was transferred to a centrifugal tube, and centrifugation was performed at 10000 rpm at 10°C for 30 minutes using a centrifuging machine (manufactured by Kubota Seisakusho Ltd, model: 7700).
(7) The supernatant solution in the centrifugal tube was added to methanol-water mixed solution-2, mixed, and left standing, and then, the supernatant solution was discarded.
(8) Nitrogen was blown into the precipitate to volatilize residual liquids, then a small amount of THF was added, and the precipitate was dissolved in THF by stirring.
(9) The solution was added to methanol, stirred, and left standing, and then, the supernatant solution was discarded.

(10) To the remaining precipitate, methanol was added, stirred, and left standing, and then, the supernatant solution was discarded. This operation was further repeated 10 times.
(11) While nitrogen was blown into the precipitate, liquids were volatilized by air drying overnight to obtain solid matter.
(12) The solid matter was dried under vacuum at 80°C for 24 hours to obtain BPS-modified 20-nm spherical silica particles.
(13) The halogen content was 2.4% by mass. Because chlorine was not detected, the bromine content was shown as the halogen content.

<Synthesis of surface-modified inorganic compound particle-2 (synthesis of BPS-modified 100-nm spherical silica particle)>

BPS-modified 100-nm spherical silica particles were synthesized by a method similar to <Synthesis of surface-modified inorganic compound particle-1> mentioned above except that the 20-nm spherical silica solution was changed to a 100-nm spherical silica solution and the compounding amounts were changed as follows:

Compounding amount: 100-nm spherical silica solution (82% by volume), BPS (9% by volume), HMDS (9% by volume)
The halogen content was 0.45% by mass.

<Synthesis of surface-modified inorganic compound particle-3 (synthesis of BPS-modified beaded silica particle)>

BPS-modified beaded silica particles were synthesized by a method similar to <Synthesis of surface-modified inorganic compound particle-1> mentioned above except that the 20-nm spherical silica solution was changed to a beaded silica solution and the compounding amounts were changed as follows:

Compounding amount: beaded silica solution (92.7% by volume), BPS (0.2% by volume), HMDS (7.1% by volume)
The halogen content was 0.18% by mass.

<Synthesis of surface-modified inorganic compound particle-4 (synthesis of BPS-modified zirconia particle)>

BPS-modified zirconia particles were synthesized by a method similar to <Synthesis of surface-modified inorganic compound particle-1> mentioned above except that the 20-nm spherical silica solution was changed to zirconia solution-1 and the compounding amounts were changed as follows:

Compounding amount: zirconia solution-1 (80% by volume), BPS (10% by volume), HMDS (10% by volume)
The halogen content was 1.6% by mass.

<Synthesis of surface-modified inorganic compound particle-5 (synthesis of BPS-modified titania particle)>

BPS-modified titania particles were synthesized by a method similar to <Synthesis of surface-modified inorganic compound particle-1> mentioned above except that the zirconia solution was changed to a titania solution.
The halogen content was 0.6% by mass.

<Synthesis of surface-modified inorganic compound particle-6 (synthesis of BPS-modified 50-nm hollow silica particle)>

BPS-modified 50-nm hollow silica particles (50-nm hollow silica particles in which BPS was attached to the surface) were synthesized by a method similar to Synthesis of surface-modified inorganic compound particle-1 described above by changing the compounding amounts to a hollow silica solution (average particle size: 48 nm) (86% by volume), BPS (7% by volume), and HMDS (7% by volume).
The halogen content of the BPS-modified 50-nm hollow silica particles was 1.0% by mass. Because chlorine was not detected, the bromine content was shown as the halogen content.

[Example 1]

Organic-inorganic composite A was manufactured by the following procedures according to the composition of Table 1. The concentration of each component is a numeric value with respect to the total amount of each component. Evaluation results of the obtained organic-inorganic composite A are shown in Table 2.

(1) 2.61% by mass of BPS-modified $ZrO_2$ particles, 0.045% by mass of CuBr, 0.007% by mass of $CuBr_2$, and 0.288% by mass of dNbpy were added to a Schlenk flask in which a rotor was placed.
(2) A cooling tube was connected to the Schlenk flask, and operation of subjecting the inside of the flask to vacuum treatment and then performing nitrogen substitution was repeated three times to deoxidize the inside of the flask.
(3) 97.05% by mass of MMA was introduced to the flask under nitrogen and stirred to prepare a reaction solution.
(4) The flask was dipped in an oil bath of 60°C, and the reaction solution was stirred for 45 minutes to perform polymerization reaction.
(5) The flask was rapidly cooled by dipping in an ice bath, then added to 2-propanol, stirred, and left standing. Then, the supernatant solution was discarded.
(6) To the remaining precipitate, 2-propanol was added again, and left standing, and the supernatant solution was discarded. This operation was further repeated 8 times.
(7) While nitrogen was blown into the remaining precipitate, liquids were volatilized by air drying overnight to obtain solid matter.
(8) The solid matter was dried under vacuum at 60°C for 24 hours to obtain organic-inorganic composite A.
(9) Tg of the organic-inorganic composite A was measured by the method mentioned above and consequently was 115°C.
(10) The halogen content of the organic-inorganic composite A was measured by the method mentioned above and consequently was 1.2% by mass. Because chlorine was not detected, the bromine content was shown as the halogen content.
(11) The copper content of the organic-inorganic composite A was measured by the method mentioned above and consequently was 0.09% by mass.
(12) The number-average molecular weight (Mn) and weight-average molecular weight (Mw) of polymers constituting the organic-inorganic composite A were measured by the method mentioned above and consequently were Mn = 11900 and Mw = 14800. Furthermore, the degree of molecular weight dispersion (Mw/Mn) was calculated and consequently was Mw/Mn = 1.24($\leq$ 2.3), demonstrating that polymer chains having a uniform chain length were attached to inorganic compound particles.
(13) The amount of free polymers in the organic-inorganic composite A was measured and consequently was 2% by mass, and the amount of polymers attached to the inorganic compound was 98% by mass.
(14) The average particle size of the inorganic compound particles in the organic-inorganic composite A was determined and consequently was 17 nm.
(15) The degree of circularity of the inorganic compound particles in the organic-inorganic composite A was determined and consequently was degree of circularity = 0.76 ($\leq$ 0.92).
(16) L/D of the inorganic compound particles in the organic-inorganic composite A was determined and consequently was L/D = 1.5 ($\geq$ 1.2).
(17)As a result of measuring the inorganic compound content of the organic-inorganic composite A by the method mentioned above, the inorganic compound content was 68% by mass (2 to 96% by mass) and 33% by volume (1 to 85% by volume). However, the specific gravity of polymers employed the value of polymethyl methacrylate resin (hereinafter, referred to as "pMMA") of Comparative Example 1.
(18) The organic-inorganic composite A was mixed at 10% by mass with MIBK, and a coating material was obtained by the method mentioned above.
(19) Application to a PET film, drying, and then vacuum hot press at 230°C were performed by the method mentioned above using the coating material to obtain an organic-inorganic composite film (coating film). As a result of visually confirming the appearance of the obtained coating film, the aggregation of particles was not seen, and transparency was maintained.
(20) As a result of measuring the total light transmittance and haze of the organic-inorganic composite film by the method mentioned above, the total light transmittance was 89%, and the haze was 2.8%.
(21) The refractive index of a coating film obtained by application to the following substrate (one in which a hard coat layer was formed on a TAC film) and drying was measured by the method mentioned above and consequently was 1.61, and the refractive index rose by 0.12 compared with pMMA of Comparative Example 1. From this, it turned out that the refractive index of the coating film can be controlled by the formation of the organic-inorganic composite. The substrate was used as a substrate instead of the PET film by forming a hard coat layer on a TAC film (manufactured by Fujifilm Corp., thickness: 80 $\mu$m) by the following method:

(21-1) 100 g of urethane acrylate oligomers (manufactured by The Nippon Synthetic Chemical Industry Co., Ltd., "Purple Light UV-7640B") was mixed with 100 g of MEK.
(21-2) 5 g of "Irgacure 184" and 1 g of "Irgacure 907" were further added as photopolymerization initiators and mixed to prepare a hard coat solution.
(21-3) The hard coat solution was applied onto a TAC film with a bar coater and dried for 2 minutes in an

explosion-proof-type blow drying machine of 90°C. Furthermore, UV irradiation was performed at a cumulative light quantity of 500 mJ/$cm^2$ under air with use of a UV curing apparatus (manufactured by Sen Engineering Co., Ltd.) to form a hard coat layer with a thickness of approximately 5 μm.

(22) Furthermore, the pencil hardness of the organic-inorganic composite film measured by the method mentioned above was F, which was equivalent to the pencil hardness (F) of a coating film of pMMA of Comparative Example 1 and was sufficient strength.
(23) As a result of evaluating the adhesion of the organic-inorganic composite film by the method mentioned above, it was pass ("A").
(24) As a result of evaluating the contact angle of the organic-inorganic composite film by the method mentioned above, the water contact angle was 71°.
(25) The organic-inorganic composite A was molded by the method mentioned above to obtain a molded product. As a result of visually confirming the appearance of the obtained molded product, the aggregation of particles was not seen, and transparency was maintained. Furthermore, the refractive index was measured by the method mentioned above and consequently was 1.61, and the refractive index rose by 0.12 compared with pMMA of Comparative Example 1. From this, it turned out that the refractive index of the molded product can be controlled by the formation of the organic-inorganic composite.
(26) The degree of particle dispersion of the molded product was calculated by the method mentioned above and consequently was degree of particle dispersion = 0.27 (≤ 0.8), and the dispersibility of the particles was confirmed to be favorable.
(27) The relative permittivity of the molded product was measured and consequently was 6.3%.

Evaluation results of the coating material, the organic-inorganic composite film, and the molded product are shown in Tables 3 and 4. Incidentally, "Comprehensive judgment" in Table 4 represents judgment in which the evaluations of the coating material and the organic-inorganic composite film in Table 3 and the molded product in Table 4 were put together.

[Example 2]

Organic-inorganic composite B was manufactured by a method similar to Example 1 according to the composition of Table 1 except that the conditions of polymerization reaction were set to 70°C and 1 hour. Evaluation results of the obtained organic-inorganic composite B, a coating material, an organic-inorganic composite film, and a molded product are shown in Tables 2 to 4.

The organic-inorganic composite B was mixed with MIBK, and a coating material and an organic-inorganic composite film (coating film) were obtained by a method similar to Example 1. As a result of visually confirming the appearance of the obtained organic-inorganic composite film, the aggregation of particles was not seen, and transparency was maintained. The refractive index of the obtained coating film was measured and consequently was 1.55, and the refractive index rose by 0.06 compared with pMMA of Comparative Example 1. From this, it turned out that the refractive index of the coating film can be controlled by the formation of the organic-inorganic composite.

Furthermore, the organic-inorganic composite B was molded by the method mentioned above to obtain a molded product. As a result of visually confirming the appearance of the obtained molded product, the aggregation of particles was not seen, and transparency was maintained. Furthermore, the refractive index was measured by the method mentioned above and consequently was 1.55, and the refractive index rose by 0.06 compared with pMMA of Comparative Example 1. From this, it turned out that the refractive index of the molded product can be controlled by the formation of the organic-inorganic composite. The degree of particle dispersion of the molded product was calculated by the method mentioned above and consequently was degree of particle dispersion = 0.25 (≤ 0.8), and the dispersibility of the particles was confirmed to be favorable.

[Example 3]

Organic-inorganic composite C was manufactured by a method similar to Example 1 according to the composition of Table 1 except that polymerization reaction conditions were set to 90°C and 7 hours. Evaluation results of the obtained organic-inorganic composite C, a coating material, an organic-inorganic composite film, and a molded product are shown in Tables 2 to 4.

The organic-inorganic composite C was mixed with anisole, and a coating material was obtained by the method mentioned above. An organic-inorganic composite film (coating film) was obtained by a method similar to Example 1 using the coating material. As a result of visually confirming the appearance of the obtained coating film, the aggregation of particles was not seen, and transparency was maintained. The refractive index of the obtained coating film was

measured and consequently was 1.70, and the refractive index rose by 0.21 compared with pMMA of Comparative Example 1. From this, it turned out that the refractive index of the organic-inorganic composite film can be controlled by the formation of the organic-inorganic composite.

The organic-inorganic composite C was molded by the method mentioned above to obtain a molded product. As a result of visually confirming the appearance of the obtained molded product, the aggregation of particles was not seen, and transparency was maintained. Furthermore, the refractive index was measured by the method mentioned above and consequently was 1.70, and the refractive index rose by 0.21 compared with pMMA of Comparative Example 1. From this, it turned out that the refractive index of the molded product can be controlled by the formation of the organic-inorganic composite. The degree of particle dispersion of the molded product was calculated by the method mentioned above and consequently was degree of particle dispersion = 0.29 (≤ 0.8), and the dispersibility of the particles was confirmed to be favorable.

The theoretical refractive index of free polymer p(St-co-BA) having the same composition as in the polymer moiety of the organic-inorganic composite C was determined by calculation and consequently was 1.52. The refractive index 1.70 of the coating film and the molded product using the organic-inorganic composite C rose by 0.18 compared with the refractive index 1.52 of p(St-co-BA), it turned out that the refractive index can be controlled.

[Example 4]

Organic-inorganic composite D was manufactured by a method similar to Example 1 according to the composition of Table 1 except that BPS-modified titania particles were used instead of the BPS-modified zirconia particles and the polymerization reaction time was set to 3 hours. Evaluation results of the organic-inorganic composite D, a coating material, an organic-inorganic composite film, and a molded product are shown in Tables 2 to 4.

The organic-inorganic composite D was mixed with MIBK, and a coating material was obtained by the method mentioned above. An organic-inorganic composite film (coating film) was obtained by a method similar to Example 1 using the coating material. As a result of visually confirming the appearance of the obtained organic-inorganic composite film, the aggregation of particles was not seen, and transparency was maintained. The refractive index of the obtained organic-inorganic composite film was measured and consequently was 1.54, and the refractive index rose by 0.05 compared with pMMA of Comparative Example 1. From this, it turned out that the refractive index of the organic-inorganic composite film can be controlled by the formation of the organic-inorganic composite.

The organic-inorganic composite D was molded by the method mentioned above to obtain a molded product. As a result of visually confirming the appearance of the obtained molded product, the aggregation of particles was not seen, and transparency was maintained. Furthermore, the refractive index was measured by the method mentioned above and consequently was 1.54, and the refractive index rose by 0.05 compared with pMMA of Comparative Example 1. From this, it turned out that the refractive index of the molded product can be controlled by the formation of the organic-inorganic composite. The degree of particle dispersion of the molded product was calculated by the method mentioned above and consequently was degree of particle dispersion = 0.29 (≤ 0.8), and the dispersibility of the particles was confirmed to be favorable.

[Example 5]

Organic-inorganic composite E was manufactured by a method similar to Example 1 according to the composition of Table 1 and evaluated except that the polymerization reaction conditions were set to 90°C and 50 minutes. Evaluation results of the organic-inorganic composite E, a coating material, an organic-inorganic composite film, and a molded product are shown in Tables 2 to 4.

The organic-inorganic composite E was mixed with MIBK, and a coating material was obtained by the method mentioned above. An organic-inorganic composite film (coating film) was obtained by a method similar to Example 1 using the coating material. As a result of visually confirming the appearance of the obtained organic-inorganic composite film, the aggregation of particles was not seen, and transparency was maintained. The refractive index of the obtained organic-inorganic composite film was measured and consequently was 1.37, and the refractive index decreased by 0.12 compared with pMMA of Comparative Example 1. From this, it turned out that the refractive index of the organic-inorganic composite film can be controlled by the formation of the organic-inorganic composite.

The organic-inorganic composite E was molded by the method mentioned above to obtain a molded product. As a result of visually confirming the appearance of the obtained molded product, the aggregation of particles was not seen, and transparency was maintained. Furthermore, the refractive index was measured by the method mentioned above and consequently was 1.37, which decreased by 0.07 compared with p(TFEMA-co-BA) of Comparative Example 6. From this, it turned out that the refractive index of the molded product can be controlled by the formation of the organic-inorganic composite. The degree of particle dispersion of the molded product was calculated by the method mentioned above and consequently was degree of particle dispersion = 0.14 (≤ 0.8), and the dispersibility of the particles was

confirmed to be favorable.

[Example 6]

Organic-inorganic composite F was manufactured by a method similar to Example 1 according to the composition of Table 1 and evaluated except that the polymerization conditions were set to 60°C and 25 minutes. Evaluation results of the organic-inorganic composite F, a coating material, an organic-inorganic composite film, and a molded product are shown in Tables 2 to 4.

The organic-inorganic composite F and MIBK were mixed, and a coating material was obtained by the method mentioned above. Application to a PET film and drying were performed by the method mentioned above using the coating material to obtain an organic-inorganic composite film (coating film). As a result of visually confirming the appearance of the obtained coating film, the aggregation of inorganic compound particles was not seen, and transparency was maintained.

As a result of measuring the total light transmittance and haze of the coating film by the method mentioned above, the total light transmittance was 91%, and the haze was 0.5%.

The refractive index of the coating film was measured by the method mentioned above and consequently was 1.44, which exhibited a low value compared with the refractive index 1.48 of 20-nm $SiO_2$-g-pMMA of Production Example 2 mentioned later. From this, it turned out that the refractive index can be controlled.

Furthermore, the organic-inorganic composite F was molded by the method mentioned above to obtain a molded product. As a result of visually confirming the appearance of the obtained molded product, the aggregation of inorganic compound particles was not seen, and transparency was maintained. Furthermore, the refractive index of the molded product was measured by the method mentioned above and consequently was 1.44. Moreover, the low value was exhibited compared with the refractive index 1.48 of 20-nm $SiO_2$-g-pMMA of Production Example 2 and the refractive index 1.49 of pMMA of Comparative Example 1. From this, it turned out that the refractive index can be controlled.

The degree of particle dispersion of the molded product was calculated by the method mentioned above and consequently was degree of particle dispersion = 0.14, and the dispersibility of the particles was confirmed to be favorable.

[Example 7]

Organic-inorganic composite G was manufactured by a method similar to Example 1 according to the composition of Table 1 and evaluated except that the polymerization reaction conditions were set to 60°C and 20 hours. Evaluation results of the organic-inorganic composite G and a molded product are shown in Tables 2 and 4.

A molded product was obtained by the method mentioned above using the organic-inorganic composite G. As a result of visually confirming the appearance of the obtained molded product, the aggregation of inorganic compound particles was not seen, and transparency was maintained. Furthermore, the refractive index was measured by the method mentioned above and consequently was 1.39, which exhibited a significantly low value compared with the refractive index 1.48 of 20-nm $SiO_2$-g-pMMA of Production Example 2. From this, it turned out that the refractive index of the molded product can be controlled by the formation of the organic-inorganic composite.

Moreover, water repellency and oil repellency, which are indicators for antifouling properties, were also significantly improved compared with Comparative Example 1. Despite an attempt to write on this molded product surface with an oil ink pen (manufactured by Zebra Co., Ltd., "Mackee"), ink was rejected and writing was impossible. Furthermore, when ink traces were wiped with nonwoven cloth for electronic materials (manufactured by Asahi Kasei Fibers Corp., "Bemcot"), the ink traces were completely wiped off.

[Example 8]

Organic-inorganic composite H was manufactured by a method similar to Example 1 according to the composition of Table 1 and evaluated except that the polymerization reaction conditions were set to 75°C and 15 hours. Evaluation results of the organic-inorganic composite H, a coating material, an organic-inorganic composite film, and a molded product are shown in Tables 2 to 4.

The organic-inorganic composite H was used, a solvent (MEK:cyclohexanone = 8:2 in terms of volume ratio) was added, and a coating film was obtained by the method mentioned above. As a result of visually confirming the appearance of the obtained coating film, the aggregation of inorganic compound particles was not seen, and transparency was maintained. Furthermore, the refractive index was measured by the method mentioned above and consequently was 1.43, which exhibited a significantly low value compared with the refractive index 1.48 of beaded $SiO_2$-g-pMMA of Production Example 9 mentioned later. From this, it turned out that the refractive index of the coating film can be controlled by the formation of the organic-inorganic composite.

Furthermore, the organic-inorganic composite H was molded by the method mentioned above to obtain a

molded product. As a result of visually confirming the appearance of the obtained molded product, the aggregation of inorganic compound particles was not seen, and transparency was maintained. Furthermore, the refractive index of the molded product was measured by the method mentioned above and consequently was 1.43. Moreover, the low value was exhibited compared with the refractive index 1.48 of beaded $SiO_2$-g-pMMA of Production Example 9. From this, it turned out that the refractive index can be controlled.

Moreover, water repellency and oil repellency, which are indicators for antifouling properties, were also significantly improved compared with Production Example 9.

[Example 9]

(Preparation of photonic crystal (100-nm $SiO_2$-g-pBzMA))

Organic-inorganic composite I was manufactured by a method similar to Example 1 according to the composition of Table 1 and evaluated except that the polymerization reaction conditions were set to 60°C and 8 hours. Evaluation results of the organic-inorganic composite I and a molded product are shown in Tables 2 and 4.

The organic-inorganic composite I was molded by the method mentioned above to obtain a molded product. As a result of visually confirming the appearance of the obtained molded product, the aggregation of inorganic compound particles was not seen, transparency was maintained, and blue-purple color was developed upon irradiation with light. The refractive index was measured and consequently was 1.55.

In order to evaluate the development of blue-purple color, the spectral reflectance was measured under the following conditions:

Apparatus: manufactured by Nippon Denshoku Industries Co., Ltd., spectrocolorimeter, "SD-5000"
Measurement wavelength: 380 to 780 nm
Measurement scheme: reflection measurement (SCE mode)

As a result of measuring the molded product (molded product of 100-nm $SiO_2$-g-pBzMA), the maximum peak was present around 400 nm, and the reflectance exhibited 52%. By contrast, the reflectances at 400 nm of a molded product of pBzMA of Comparative Example 7 and slide glass ($SiO_2$) were both less than 5%.

This molded product was shown to form a photonic crystal and develop blue-purple color by reflecting light with a particular wavelength (around 400 nm).

[Example 10]

BIDS-modified zirconia particle/MEK solution (zirconia in which BIDS was attached to the surface/MEK solution) was synthesized according to the following procedures, and subsequently thereto, organic-inorganic composite J was manufactured according to the composition of Table 1 and evaluated. Evaluation results of the organic-inorganic composite J, a coating material, and an organic-inorganic composite film are shown in Tables 2 and 6.

(1) The inside of a two-neck flask in which a cooling tube was connected and a rotor was placed was nitrogen-substituted.
(2) 98.9% by volume of zirconia particle/MEK was introduced into the flask under nitrogen, and further, 0.1% by volume of BIDS was introduced, and stirring was started.
(3) The flask was dipped in an oil bath of 110°C, and reaction was performed for 24 hours with stirring.
(4) The reaction solution was cooled to room temperature, and then, 1.0% by volume of HMDS was introduced under nitrogen.
(5) After stirring at room temperature for 2 hours, reaction was performed by stirring at 80°C for 8 hours, and one in which the reaction solution was cooled to room temperature was used as BIDS-modified zirconia particle/MEK solution. A portion was washed and dried, and the halogen content was measured and consequently was 0.2% by mass. Because chlorine was not detected, the bromine content was shown as the halogen content.
(6) Subsequently, polymerization was performed at 60°C for 3 hours according to the composition of Table 1, followed by cooling to room temperature to prepare a polymerization solution.
(7) The flask was rapidly cooled by dipping in an ice bath, then added to hexane, stirred, and left standing. In the case where a precipitate hardly settled down, separation was performed by centrifugation.
(8) The supernatant solution was discarded, then the remaining precipitate was redispersed by adding a MEK/methanol mixed solvent in small amounts, then hexane was added and left standing, and the supernatant solution was discarded. This operation was further repeated twice, finally washing was performed with hexane, and the supernatant solution was discarded to thereby remove unreacted monomers.

(9) While nitrogen was blown into the remaining precipitate, liquids were volatilized by air drying to obtain organic-inorganic composite J. Evaluation results are shown in Tables 2.

(10) Furthermore, a solvent (one in which MEK and cyclohexanone were mixed at a volume ratio of 8:2) was added and mixed to the organic-inorganic composite J and a photo-acid-generating agent according to the composition of Table 5, and a coating material and an organic-inorganic composite film were manufactured by a method similar to Example 1. Results of evaluating them are shown in Table 6.

(11) As a result of visually confirming the appearance of the organic-inorganic composite film, the aggregation of inorganic compound particles was not seen, and transparency was maintained. Furthermore, the refractive index was measured by the method mentioned above and consequently was 1.69, demonstrating that the refractive index rose by 0.18 compared with the refractive index 1.51 of pGMA of Comparative Example 8. From this, it turned out that the refractive index of the organic-inorganic composite film can be controlled by the formation of the organic-inorganic composite.

However, the substrate was used as a substrate instead of the PET film by forming a hard coat layer on a TAC film (manufactured by Fujifilm Corp., thickness: 80 μm) by a method similar to Example 1.

(4) An organic-inorganic composite film with a thickness of approximately 4 μm was formed on the hard coat layer by a method similar to Example 1 and evaluated.

[Example 11]

A cross-linking agent ("Celloxide 2021P") and a photo-acid-generating agent were introduced to the organic-inorganic composite J of Example 10 according to the composition of Table 5, and a solvent (one in which MEK:cyclohexanone = 8:2 in terms of volume ratio were mixed) was added so that the solid content concentration became 10% by mass to obtain a coating material.

An organic-inorganic composite film was manufactured by a method similar to Example 10 and evaluated. Evaluation results are shown in Table 6.

As a result of visually confirming the appearance of the organic-inorganic composite film, the aggregation of inorganic compound particles was not seen, and transparency was maintained. Furthermore, as a result of measuring the refractive index by the method mentioned above, the refractive index was shown to significantly rise compared with the refractive index 1.51 of pGMA of Comparative Example 8. From this, it turned out that the refractive index of the organic-inorganic composite film can be controlled by the formation of the organic-inorganic composite.

[Example 12]

A curing agent ("Rikacid MH-700G") and a curing accelerator ("U-CAT 18X") were introduced to the organic-inorganic composite J of Example 10 according to the composition of Table 5, and a solvent (one in which MEK:cyclohexanone = 8:2 in terms of volume ratio were mixed) was added so that the solid content concentration became 10% by mass to obtain a coating material. An organic-inorganic composite film was manufactured by coating a PET film by a method similar to Example 1 followed by heating at 100°C for 6 hours in an explosion-proof-type blow drying machine, and evaluated. Evaluation results are shown in Table 6.

As a result of visually confirming the appearance of the organic-inorganic composite film, the aggregation of inorganic compound particles was not seen, and transparency was maintained. Furthermore, as a result of measuring the refractive index by the method mentioned above, the refractive index was shown to significantly rise compared with the refractive index 1.51 of pGMA of Comparative Example 8. From this, it turned out that the refractive index of the organic-inorganic composite film can be controlled by the formation of the organic-inorganic composite.

[Example 13]

A curing agent (maleic acid) and a curing accelerator (TEA) were introduced to the organic-inorganic composite J of Example 10 according to the composition of Table 5, and a solvent (one in which MEK:cyclohexanone = 8:2 in terms of volume ratio were mixed) was added so that the solid content concentration became 10% by mass to obtain a coating material.

Furthermore, an organic-inorganic composite film was manufactured by coating a PET film by a method similar to Example 1 followed by heating at 100°C for 6 hours in an explosion-proof-type blow drying machine, and evaluated. Evaluation results are shown in Table 6.

As a result of visually confirming the appearance of the organic-inorganic composite film, the aggregation of inorganic compound particles was not seen, and transparency was maintained. Furthermore, as a result of measuring the refractive index by the method mentioned above, the refractive index was shown to significantly rise compared with

the refractive index 1.51 of pGMA of Comparative Example 8. From this, it turned out that the refractive index of the organic-inorganic composite film can be controlled by the formation of the organic-inorganic composite.

[Example 14]

A coating material and an organic-inorganic composite film were manufactured by a method similar to Example 10 and evaluated except that a glass plate was used as the substrate. Evaluation results are shown in Table 6.

As a result of visually confirming the appearance of the organic-inorganic composite film, the aggregation of inorganic compound particles was not seen, and transparency was maintained. Furthermore, as a result of measuring the refractive index by the method mentioned above, the refractive index was shown to significantly rise compared with the refractive index of glass before coating. From this, it turned out that the refractive index of the organic-inorganic composite film can be controlled by the formation of the organic-inorganic composite.

[Example 15]

Organic-inorganic composite K was manufactured by a method similar to Example 10 except that the composition followed Table 1 and the polymerization temperature was set to 70°C. Evaluation results are shown in Table 2.

Furthermore, a coating material was prepared according to the composition of Table 5, and the evaluation of an organic-inorganic composite film was performed by a method similar to Example 10. Evaluation results are shown in Table 6.

As a result of visually confirming the appearance of the organic-inorganic composite film, the aggregation of inorganic compound particles was not seen, and transparency was maintained. Furthermore, as a result of measuring the refractive index by the method mentioned above, the refractive index was shown to significantly rise compared with the refractive index 1.51 of pGMA of Comparative Example 8 mentioned later. From this, it turned out that the refractive index of the organic-inorganic composite film can be controlled by the formation of the organic-inorganic composite.

[Example 16]

BIDS-modified zirconia particle/MIBK solution (zirconia in which BIDS was attached to the surface/MIBK solution) was synthesized according to the following procedures, and subsequently thereto, organic-inorganic composite L was manufactured according to the composition of Table 1 and evaluated.

(1) The inside of a two-neck flask in which a cooling tube was connected and a rotor was placed was nitrogen-substituted.
(2) 98.9% by volume of zirconia solution-1 (zirconia particle/MIBK solution) was introduced into the flask under nitrogen, and further, 0.1% by volume of BIDS was introduced, and stirring was started.
(3) The flask was dipped in an oil bath of 110°C, and reaction was performed for 24 hours with stirring.
(4) The reaction solution was cooled to room temperature, and then, 1.0% by volume of HMDS was introduced under nitrogen.
(5) After stirring at room temperature for 2 hours, reaction was performed by stirring at 80°C for 10 hours, and one in which the reaction solution was cooled to room temperature was used as BIDS-modified zirconia particle/MIBK solution. A portion was washed and dried, and the halogen content was measured and consequently was 0.2% by mass. Because chlorine was not detected, the bromine content was shown as the halogen content.
(6) Subsequently, polymerization was performed at 80°C for 3 hours according to the composition of Tables 1 and 7, followed by cooling to room temperature to prepare a polymerization solution.
(7) Further subsequently, addition reaction was performed at 60°C for 6 hours according to the composition of Table 8, and cooling was performed to room temperature.
(8) The flask was rapidly cooled by dipping in an ice bath, then added to hexane, stirred, and left standing. In the case where a precipitate hardly settled down, separation was performed by centrifugation.
(9) The supernatant solution was discarded, then the remaining precipitate was redispersed by adding a MEK/methanol mixed solvent (mixed at MEK:methanol = 1:1 in terms of volume ratio), then hexane was added and left standing, and the supernatant solution was discarded. This operation was further repeated twice, finally washing was performed with hexane, and the supernatant solution was discarded to thereby remove unreacted monomers.
(10) While nitrogen was blown into the remaining precipitate, liquids were volatilized by air drying to obtain organic-inorganic composite L. Evaluation results are shown in Table 9.
(11) Furthermore, a coating material and an organic-inorganic composite film were manufactured by a method similar to Example 1 except that the organic-inorganic composite L was used and the solvent was changed (one in which MEK and cyclohexanone were mixed at a volume ratio of 8:2). Results of evaluating them are shown in Table

6. A PET film was used as the substrate..

(12) As a result of visually confirming the appearance of the organic-inorganic composite film, the aggregation of inorganic compound particles was not seen, and transparency was maintained. Furthermore, as a result of measuring the refractive index by the method mentioned above, the refractive index was shown to rise by 0.19 compared with the refractive index 1.50 of p(MMA/HEMA/AOI) of Comparative Example 9. From this, it turned out that the refractive index of the organic-inorganic composite film can be controlled by the formation of the organic-inorganic composite.

[Example 17]

The zirconia solution-1 (zirconia particle/MIBK solution) of Example 16 was changed to a beaded silica solution (beaded $SiO_2$ particle/MIBK solution). Organic-inorganic composite M was manufactured by a method similar to Example 16 according to the composition of Tables 8 and 7 except that DMF was added as a polymerization solvent at an outer percentage of 20% by mass with respect to MIBK and the polymerization reaction time was set to 6 hours. Evaluation results are shown in Table 9.

Furthermore, a coating material and an organic-inorganic composite film were manufactured by a method similar to Example 16 using the organic-inorganic composite M. Results of evaluating them are shown in Table 6. The substrate employed one in which a hard coat layer was formed on TAC of Example 10.

The pencil hardness was 2H, demonstrating that strength is improved compared with the organic-inorganic composite film (pencil hardness F) of Comparative Example 9.

[Example 18]

Organic-inorganic composite N was manufactured by a method similar to Example 16 according to the composition of Tables 8 and 7 except that the zirconia solution-1 (zirconia particle/MIBK solution) of Example 16 was changed to a "solution (zirconia particle/MIBK solution):(titania particle/MIBK solution) were mixed at 2:8 (volume ratio)" and the polymerization reaction time was set to 4 hours. Evaluation results are shown in Table 9.

Furthermore, a coating material and an organic-inorganic composite film were manufactured by a method similar to Example 17 using the organic-inorganic composite N. Results of evaluating them are shown in Table 6.

[Production Example 1]

BIDS-modified beaded silica particle/MIBK solution (beaded silica particle in which BIDS was attached to the surface/MIBK solution) was synthesized according to the following procedures, and subsequently thereto, an organic-inorganic composite was manufactured according to the composition of Table 12 and evaluated.

(1) The inside of a two-neck flask in which a cooling tube was connected and a rotor was placed was nitrogen-substituted.

(2) 98.9% by volume of beaded silica solution B ("MIBK-ST-UP") was introduced into the flask under nitrogen, and further, 0.1% by volume of BIDS was introduced, and stirring was started.

(3) The flask was dipped in an oil bath of 110°C, and reaction was performed for 24 hours with stirring.

(4) The reaction solution was cooled to room temperature, and then, 1.0% by volume of HMDS was introduced under nitrogen.

(5) After stirring at room temperature for 2 hours, reaction was performed by stirring at 80°C for 8 hours, and one in which the reaction solution was cooled to room temperature was used as a BIDS-modified beaded silica solution. A portion was washed and dried.

(6) Subsequently, polymerization was performed at 80°C for 3 hours according to the composition of Table 8, followed by cooling to room temperature to prepare a polymerization solution.

(7) Further subsequently, addition reaction was performed at 60°C for 6 hours according to the composition of Table 7, and cooling was performed to room temperature.

(8) The reaction solution was washed and dried by a method similar to Example 13 to obtain an organic-inorganic composite. Evaluation results are shown in Table 9.

(9) Furthermore, a coating material and an organic-inorganic composite film were manufactured by a method similar to Example 13 using the organic-inorganic composite, and the refractive index was measured and consequently was 1.32.

[Example 19]

An antireflection film of four-layer constitution was prepared by forming a low-refractive index layer on one in

which a hard coat layer was formed on a TAC film and further an organic-inorganic composite film (high-refractive index layer) was formed thereon, of Example 10, and evaluated.

(1) The low-refractive index coating material of Production Example 1 was applied onto the organic-inorganic composite film (high-refractive index layer) of Example 10 by the method mentioned above using a bar coater and dried so that the thickness of the low-refractive index layer became approximately 110 nm.
(2) Furthermore, UV irradiation was performed by a method similar to Example 10 to obtain an antireflection film. As a result of visually confirming the appearance of the obtained antireflection film, the aggregation of particles was not seen, and transparency was maintained.
(3) The minimum reflectance of the antireflection film was measured by the method mentioned above and consequently was 0.03%, demonstrating that it has an antireflection effect. Furthermore, as a result of evaluating glare, the glare was lower than that of the antireflection film of Production Example 3 mentioned later and judged as pass ("A") (Table 10).

[Example 20]

An antireflection film of three-layer constitution was prepared by forming a low-refractive index layer on one in which an organic-inorganic composite film (high-refractive index layer) was formed on a PET film, of Example 16, and evaluated.

(1) The low-refractive index coating material of Production Example 1 was applied onto the organic-inorganic composite film (high-refractive index layer) of Example 16 by the method mentioned above using a bar coater and dried so that the thickness of the low-refractive index layer became approximately 110 nm.
(2) Furthermore, UV irradiation was performed by a method similar to Example 16 to obtain an antireflection film. As a result of visually confirming the appearance of the obtained antireflection film, the aggregation of particles was not seen, and transparency was maintained.
(3) The minimum reflectance of the antireflection film was measured by the method mentioned above and consequently was 0.02%, demonstrating that it has an antireflection effect. Furthermore, as a result of evaluating glare, the glare was lower than that of the antireflection film of Production Example 6 mentioned later and judged as pass ("A") (Table 10).

[Example 21]

An antireflection film of four-layer constitution was prepared by forming a low-refractive index layer on one in which a hard coat layer was formed on a TAC film and further an organic-inorganic composite film (high-refractive index layer) was formed thereon, of Example 18, and evaluated.

(1) The low-refractive index coating material of Production Example 1 was applied onto the organic-inorganic composite film (high-refractive index layer) of Example 15 by the method mentioned above using a bar coater and dried so that the thickness of the low-refractive index layer became approximately 110 nm.
(2) Furthermore, UV irradiation was performed by a method similar to Example 18 to obtain an antireflection film. As a result of visually confirming the appearance of the obtained antireflection film, the aggregation of particles was not seen, and transparency was maintained.
(3) The minimum reflectance of the antireflection film was measured by the method mentioned above and consequently was 0.04%, demonstrating that it has an antireflection effect. Furthermore, as a result of evaluating glare, the glare was lower than that of the antireflection film of Production Example 6 mentioned later and judged as pass ("A") (Table 10).

[Example 22]

A polarizing plate was prepared by the following procedures using the antireflection film of Example 19 and installed in a liquid crystal display (LCD), and evaluation was performed.

[Preparation of polarizer]

(1) 0.63% by mass of iodine, 9.44% by mass of potassium iodide, and 89.93% by mass of ion-exchanged water

(100% by mass in total) were mixed to prepare an iodine-potassium iodide aqueous solution.
(2) A polyvinyl alcohol film (manufactured by Kuraray Co., Ltd.) was dipped in the iodine-potassium iodide aqueous solution for 5 minutes.
(3) The film was uniaxially stretched by 4.4 times in the longitudinal axis direction in 4% by mass of an aqueous boric acid solution and dried in the state where the tension was kept to obtain a polarizer.

[Saponification treatment of antireflection film]

(1) A 1.5 mol/L aqueous sodium hydroxide solution was prepared, and one in which the temperature was adjusted to 50°C was used as a saponification solution.
(2) The backside (side on which the antireflection film was not formed) of the support in the antireflection film of Example 19 was subjected to saponification treatment with use of the saponification solution and then sufficiently washed with ion-exchanged water.
(3) The saponification-treated side was further washed with a 0.005 mol/L aqueous sulfuric acid solution, then sufficiently washed with ion-exchanged water, and dried at 100°C for 10 minutes.

[Preparation of polarizing plate]

(1) One side of the polarizer and the saponification-treated side of the antireflection film were bonded together with use of a polyvinyl alcohol-based adhesive.
(2) Furthermore, the other side of the polarizer and a saponification-treated side of a TAC film whose one side was subjected to saponification treatment were bonded together with use of a polyvinyl alcohol-based adhesive to obtain a polarizing plate in which both surfaces of the polarizer were protected.

[Installation in liquid crystal display (LCD)]

(1) A notebook computer equipped with a "liquid crystal display (LCD) of transmissive-type TN mode: one that had a polarization separation film (manufactured by Sumitomo 3M Ltd., "DBFF") between a liquid crystal cell and a backlight" was prepared for evaluation.
(2) A polarizing plate on the visible side of the liquid crystal display (LCD) was removed, and instead, the above-described polarizing plate was bonded so that the antireflection film side became the outermost surface.
(3) When the liquid crystal display (LCD) was activated, a display in which background glare was exceedingly low and image quality was very high was obtained compared with Production Example 4 mentioned later (Table 11).

[Example 23]

The backside (side on which the antireflection film was not formed) of the support in the antireflection film of Example 19 and the glass surface of an organic EL display (ELD) were bonded together via a pressure-sensitive adhesive. When the apparatus was activated, a display with a high level of visibility in which the reflection of a screen was significantly suppressed was obtained compared with Production Example 5 mentioned later (Table 11).

[Example 24]

A polarizing plate was prepared by a method similar to Example 22 using the antireflection film of Example 20 instead of the antireflection film of Example 19 and installed in a liquid crystal display (LCD), and evaluation was performed. When the liquid crystal display (LCD) was activated, a display in which background glare was exceedingly low and image quality was very high was obtained compared with Production Example 7 mentioned later (Table 11).

[Example 25]

The antireflection film of Example 20 was used instead of the antireflection film of Example 19 and bonded together with the glass surface of an organic EL display (ELD) via a pressure-sensitive adhesive by a method similar to

Example 23. When the apparatus was activated, a display with a high level of visibility in which the reflection of a screen was significantly suppressed was obtained compared with Production Example 8 (Table 11).

[Example 26]

Organic-inorganic composite O was manufactured by a method similar to Example 1 according to the composition of Table 12 and evaluated except that the polymerization reaction conditions were set to 60 minutes and 15 minutes. Evaluation results of the obtained organic-inorganic composite O are shown in Table 13.

An optical lens and a sample for evaluation were prepared by the method mentioned above, and results of evaluating them are shown in Table 13. When the optical lens was prepared by the method mentioned above, the appearance was transparent and uniform and was judged as pass ("A"). The refractive index was 1.48, and the total light transmittance was 89%. The yellowness index (YI) was smaller than that of one in which the mixed composition Y of Comparative Example 11 mentioned later was molded, which was the reference, and was judged as pass ("A"). Evaluation results are shown in Table 13.

An ultrathin section of the sample for measurement was prepared by the method mentioned above, and the cross-section was observed by HR-STEM. From the obtained image, the degree of particle dispersion was calculated and consequently was 0.21; thus the particles were uniformly dispersed and the dispersibility was significantly superior to Comparative Examples 10 and 11. From these results, the comprehensive judgment was judged as pass ("A").

[Example 27]

Organic-inorganic composite P was manufactured under conditions similar to Example 26 according to the composition of Table 12 except that the polymerization reaction conditions were set to 90°C and 20 minutes. Evaluation results are shown in Table 13.

An optical lens and a sample for evaluation were prepared by a method similar to Example 26 using the organic-inorganic composite P, and evaluation results are shown in Table 13.

The refractive index of the obtained optical lens was significantly higher than the refractive index (1.49) of pMMA, and an optical lens with a high refractive index was obtained. Moreover, the dispersibility was significantly superior to Comparative Examples 10 and 11. From the above-described results, the comprehensive judgment was judged as pass ("A").

[Example 28]

Organic-inorganic composite Q was manufactured under conditions similar to Example 22 according to the composition of Table 12 except that the polymerization reaction conditions were set to 60°C and 30 minutes. Evaluation results are shown in Table 13.

An optical lens and a sample for evaluation were prepared by a method similar to Example 27 using the organic-inorganic composite Q, and results of evaluating them are shown in Table 13.

The refractive index of the obtained optical lens was significantly higher than the refractive index (1.49) of pMMA, and an optical lens with a high refractive index was obtained. Moreover, the dispersibility was significantly superior to Comparative Examples 10 and 11. From the above-described results, the comprehensive judgment was judged as pass ("A").

[Example 29]

Organic-inorganic composite R was manufactured under conditions similar to Example 22 according to the composition of Table 12 except that the polymerization reaction conditions were set to 60°C and 40 minutes. Evaluation results are shown in Table 13.

An optical lens and a sample for evaluation were prepared by a method similar to Example 27 using the organic-inorganic composite R, and results of evaluating them are shown in Table 13.

The refractive index of the obtained optical lens was significantly lower than the refractive index (1.49) of pMMA, and an optical lens with a low refractive index was obtained. Moreover, the dispersibility was significantly superior to Comparative Examples 10 and 11. From the above-described results, the comprehensive judgment was judged as pass ("A").

[Example 30]

Thermoplastic composition $\alpha$, a molded product, and an optical lens were prepared according to the following

procedures, and results of evaluating them are shown in Table 14.

(1) 67% by mass of commercially available pMMA (manufactured by Aldrich Co. LLC.) was melt-kneaded at 240°C for 5 minutes under nitrogen.
(2) 33% by mass of the organic-inorganic composite O of Example 26 was added, the temperature was raised to 270°C, and kneading was performed for 15 minutes to obtain thermoplastic composition $\alpha$.
(3) Tg of the thermoplastic composition $\alpha$ was measured by the method mentioned above and consequently was 113°C.
(4) As a result of measuring the inorganic compound content of the thermoplastic composition $\alpha$ by the method mentioned above, the inorganic compound content was 25% by mass and 15% by volume.
(5) When a molded product was prepared by hot press at 255°C by the method mentioned above, the appearance was transparent and uniform and was judged as pass ("A").
(6) The refractive index of the molded product measured by the method mentioned above was 1.48, and the total light transmittance was 89%.
(7) The yellowness index (YI) of the molded product was smaller than that of one in which the thermoplastic composition of Comparative Example 11 was molded, which was the reference, and was judged as pass ("A").
(8) An ultrathin section of the molded product was prepared by the method mentioned above, and the cross-section was observed by HR-STEM. From the obtained image, the degree of particle dispersion was calculated and consequently was 0.42, demonstrating that the particles were uniformly dispersed.
(9) When an optical lens was further prepared by the method mentioned above using the thermoplastic composition $\alpha$, an optical lens with favorable appearance was obtained compared with Comparative Examples 10 and 11.

From these results, the comprehensive judgment was judged as pass ("A").

[Example 31]

Thermoplastic composition $\beta$, a coating material, a coating film, a molded product, and an optical lens were prepared according to the following procedures using the organic-inorganic composite P of Example 27, and results of evaluating them are shown in Table 14.

(1) 72% by mass of the organic-inorganic composite P of Example 27 was added to 28% by mass of commercially available poly(benzyl methacrylate) (manufactured by Aldrich Co. LLC.) and mixed.
(2) Anisole was further added so that the solid content became approximately 10% by mass, and after stirring for 24 hours with a rotor, sonication was performed for 1 hour.
(3) Next, the solvent was removed from the solution with use of an evaporator.
(4) The obtained solid content was air-dried and then dried under vacuum at 80°C for 24 hours to obtain thermoplastic composition $\beta$.
(5) A molded product was prepared by the method mentioned above using the thermoplastic composition $\beta$ and evaluated. The refractive index was 1.55 and significantly high compared with the refractive index (1.49) of pMMA, demonstrating that the refractive index control is possible.
(6) When an optical lens was further prepared by the method mentioned above using the thermoplastic composition $\beta$, an optical lens with favorable appearance was obtained.
(7) Anisole was added to the thermoplastic composition $\beta$, and a coating material was prepared by the method mentioned above.
(8) The coating material was applied onto a PET film and dried by the method mentioned above to prepare a coating film, which was then evaluated and consequently had favorable appearance.

From these results, the comprehensive judgment was judged as pass ("A").

[Example 32]

Thermoplastic composition $\gamma$, a molded product, and an optical lens were prepared according to the following procedures using the organic-inorganic composite Q of Example 28, and results of evaluating them are shown in Table 14.

(1) 80% by mass of the organic-inorganic composite Q of Example 28 was added to 20% by mass of pMMA of Example 30 and mixed.
(2) MIBK was further added so that the solid content became approximately 10% by mass, and after stirring for 24 hours with a rotor, sonication was performed for 1 hour. Then, thermoplastic composition $\gamma$ was prepared by a

method similar to Example 2 and evaluated.

(3) A molded product was prepared by the method mentioned above using the thermoplastic composition γ, and results of evaluating it are shown in Table 14. The refractive index was 1.56 and significantly high compared with the refractive index (1.49) of pMMA, demonstrating that the refractive index control is possible.

(4) When an optical lens was further prepared by the method mentioned above using the thermoplastic composition γ, an optical lens with favorable appearance was obtained compared with Comparative Examples 10 and 11.

From the above-described results, the comprehensive judgment was judged as pass ("A").

[Example 33]

Thermoplastic composition γ, a molded product, and an optical lens were prepared according to the following procedures using the organic-inorganic composite R of Example 29, and results of evaluating them are shown in Table 14.

Thermoplastic composition θ, a coating material, a coating film, and an antireflection film were prepared according to the following procedures, and results of evaluating them are shown in Table 14.

(1) 80% by mass of the organic-inorganic composite R of Example 29 was added to commercially available poly(2,2,2-trifluoroethyl methacrylate) (hereinafter, referred to as pTFEMA) and mixed.

(2) MIBK was further added so that the solid content became approximately 10% by mass, and after stirring for 24 hours with a rotor, sonication was performed for 1 hour. Then, thermoplastic composition θ was prepared by a method similar to Example 30 and evaluated.

(3) Furthermore, a coating material and a coating film were prepared by a method similar to Example 31 and evaluated except that the thermoplastic composition θ was used and the solvent was changed from anisole to MIBK.

(4) Furthermore, an antireflection film of two-layer constitution was prepared by forming a coating film at a thickness of approximately 110 nm on a PET film by the method mentioned above using the coating material, and evaluated.

(5) As a result, an antireflection film in which reflectance and glare were significantly suppressed compared with the antireflection film of Comparative Example was obtained.

From the above-described results, the comprehensive judgment was judged as pass ("A").

[Example 34]

Organic-inorganic composite S was manufactured by a method similar to Example 26 and evaluated except that the BPS-modified 20-nm spherical silica particles of Example 26 were changed to BPS-modified beaded silica particles and the polymerization reaction conditions were set to 60°C and 10 minutes according to the composition of Table 12. Evaluation results of the obtained organic-inorganic composite S are shown in Table 13.

Furthermore, thermoplastic composition λ, a molded product, and an optical lens were prepared by a method similar to Example 30, and results of evaluating them are shown in Table 14.

As a result of measuring the inorganic compound content of the thermoplastic composition λ by the method mentioned above, the inorganic compound content was 25% by mass and 15% by volume. When a molded product was prepared by hot press at 255°C by the method mentioned above, the appearance was transparent and uniform and was judged as pass ("A").

The refractive index of the molded product measured by the method mentioned above was 1.48, and the total light transmittance was 90%. The yellowness index (YI) of the molded product was smaller than that of one in which the thermoplastic composition of Comparative Example 11 was molded, which was the reference, and was judged as pass ("A").

When an optical lens was further prepared by the method mentioned above using the thermoplastic composition λ, an optical lens with favorable appearance was obtained.

From these results, the comprehensive judgment was judged as pass ("A").

[Example 35]

Organic-inorganic composite T was manufactured by a method similar to Example 1 according to the composition of Table 12 except that the polymerization conditions were set to 60°C and 1 hour and 15 minutes. Evaluation results are shown in Tables 15.

As a result of measuring the inorganic compound content of the organic-inorganic composite T by the method mentioned above, the inorganic compound content was 66% by mass and 50% by volume.

Furthermore, a microstructure was prepared by the following method, and results of evaluating it are shown in

Table 16.

(1) The organic-inorganic composite W and MIBK were mixed so that the solid content became approximately 10% by mass, and a coating material was obtained by the method mentioned above.
(2) Application to a PET film and drying were performed by the method mentioned above using the coating material to obtain a coating film. As a result of visually confirming the appearance of the obtained coating film, the aggregation of particles was not seen, and transparency was maintained. The transmittance was measured by the method mentioned above and consequently was 89%, and the water contact angle was 68°C.
(3) A fine structure (projections and depressions) was shaped on the coating film by the method mentioned above to obtain a microstructure. The obtained microstructure emitted blue light when irradiated in an angled position with light, suggesting that the fine structure was correctly shaped.
As a result of observing the surface of the fine structure by HR-STEM, the surface shape of the microstructure was the same as in the arrangement a of Figure 2. Moreover, as a result of measuring the dimension of the fine structure (projections and depressions), the distance (X) between apexes of the projections was 272 nm, and the depth (Y) of the depressions was 167 nm.
(4) As a result of observing the microstructure cross-section, a critical defect in the projections and depressions was 0/200 individuals and was judged as pass ("A"). Moreover, as shown in Figure 5, the inorganic compound particles were uniformly dispersed and judged as pass ("A").
(5) The transmittance of the microstructure was measured by the method mentioned above and consequently was 91%; thus, the transmittance was improved compared with before transfer and light extraction efficiency was improved.
(6) The reflectance of the microstructure was measured by the method mentioned above and consequently was 0.05% after transfer compared with before transfer; thus the reflectance considerably decreased. Specifically, it was also excellent as an antireflection film and was judged as pass ("A").
(7) As a result of evaluating the abrasion resistance of the microstructure by the method mentioned above, the abrasion resistance was improved compared with a microstructure of pMMA of Comparative Example 13, which was the reference, and judged as pass ("A").
(8) The water contact angle of the microstructure was 105°C, and water repellency was significantly improved compared with before transfer.

Form these results, the comprehensive judgment was judged as pass ("A").

[Example 36]

Organic-inorganic composite U was manufactured under conditions similar to Example 1 according to the composition of Table 12 except that the polymerization reaction conditions were set to 90°C and 30 minutes. Evaluation results are shown in Tables 15.

A microstructure was prepared by a method similar to Example 34 except that the organic-inorganic composite U was used and the solvent for coating material preparation was changed from MIBK to anisole, and results of evaluating it are shown in Table 16.

The transmittance, reflectance, and water contact angle of the obtained microstructure were improved compared with before transfer and exhibited favorable results, and it was also excellent as an antireflection film. Moreover, the abrasion resistance was also improved compared with a microstructure of pBzMA of Comparative Example 14 mentioned later, which was the reference, and the comprehensive judgment was judged as pass ("A").

[Example 37]

Organic-inorganic composite V was manufactured under conditions similar to Example 1 according to the composition of Table 12 except that the polymerization reaction conditions were set to 90°C and 1 hour. Evaluation results are shown in Tables 15.

A microstructure was prepared by a method similar to Example 34 except that the organic-inorganic composite V was used and the solvent for coating material preparation was changed from MIBK to anisole, and results of evaluating it are shown in Table 16.

The transmittance, reflectance, and water contact angle of the obtained microstructure were improved compared with before transfer, and it was also excellent as an antireflection film. Moreover, the abrasion resistance was also improved compared with a microstructure of pBzMA of Comparative Example 14 mentioned later, which was the reference, and the comprehensive judgment was judged as pass ("A").

[Example 38]

Organic-inorganic composite W was manufactured under conditions similar to Example 11 according to the composition of Table 12 except that the polymerization reaction conditions were set to 60°C and 2 hours. Evaluation results are shown in Tables 15.

A microstructure was prepared by a method similar to Example 34 using the organic-inorganic composite W, and results of evaluating it are shown in Table 16.

The transmittance, reflectance, and water contact angle of the obtained microstructure were improved compared with before transfer, and it was also excellent as an antireflection film. Moreover, the abrasion resistance was also improved compared with a microstructure of pMMA of Comparative Example 13, which was the reference, and the comprehensive judgment was judged as pass ("A").

[Example 39]

The organic-inorganic composite of Example 16 was dispersed by adding methylcellosolve to prepare a coating material, and an organic-inorganic composite film was formed on one side of a PMMA sheet (manufactured by ASAHIKASEI TECHNOPLUS Co., Ltd.). Furthermore, a microstructure was prepared by a method similar to Example 34.

The PMMA sheet processed with the fine structure was placed at a position of 5 cm before a commercially available straight-type LED fluorescent lamp (manufactured by Optiled Lighting Ltd.) so that the backside became the light source side.

When the straight-type LED fluorescent lamp was turned on, illumination was felt brighter than the case of using a PMMA sheet that was not processed with the fine structure.

[Comparative Example 1]

pMMA was synthesized by the following procedures according to the composition of Table 12 by performing polymerization reaction without compounding inorganic compound particles. Evaluation results of the obtained pMMA, a coating material, an organic-inorganic composite film (coating film), and a molded product are shown in Tables 2 to 4.

(1) CuBr, $CuBr_2$, and dNbpy were added to a Schlenk flask in which a rotor was placed.
(2) A cooling tube was connected to the Schlenk flask, and operation of subjecting the inside of the flask to vacuum treatment and then performing nitrogen substitution was repeated three times to deoxidize the inside of the flask.
(3) MIBK and MMA were introduced to the flask under nitrogen and stirred to prepare a reaction solution.
(4) EBIB was further added, the flask was dipped in an oil bath of 60°C, the reaction solution was stirred for 90 minutes to perform polymerization reaction, pMMA was manufactured according to procedures similar to (5) of Example 1 and the subsequent procedures, and evaluation was performed.
(5) However, the polymer was recovered by adding the polymerization solution to hexane instead of 2-propanol, which was then stirred and left standing, followed by washing/drying of a precipitate.
(6) Moreover, the molecular weight of pMMA was measured by GPC by omitting HF treatment. As a result, it was Mn = 27200 and Mw/Mn = 1.43 (≤ 2.3), demonstrating that polymer chains having a uniform chain length were formed.

The pMMA was mixed with MIBK, and a coating material was obtained by the method mentioned above. The coating material was used and applied to a PET film, and a coating film was obtained by a method similar to Example 1. The refractive index of the obtained coating film was 1.49.

The pMMA was molded by the method mentioned above to obtain a molded product. Furthermore, the refractive index was measured by the method mentioned above and consequently was 1.49, and the specific gravity was 1.19.

[Comparative Example 2]

The BPS-modified zirconia particles were added in the same amount as the inorganic content of Example 1 to one in which pMMA manufactured by Comparative Example 1 was dissolved in MIBK, and stirred, and a coating material was prepared in the same way as in Example 1. Furthermore, an organic-inorganic composite film (coating film) and a molded product were prepared, and results of evaluating them are shown in Tables 2 to 4.

Both the coating film and the molded product had poor appearance and were in the state where a portion in which particles aggregated was confirmable even visually. As a result of observing the molded product by HR-STEM, the degree of particle dispersion could not be calculated because of many masses of particles and being very nonuniform. Moreover, the values of transmittance and haze were also poor and were determined as fail "B".

[Comparative Example 3]

pMMA manufactured by Comparative Example 1 and MIBK were added to zirconia solution-1 (zirconia particle/MIBK dispersion solution) and stirred, and a coating material was prepared so as to have the same amount as the inorganic content of Example 1. Furthermore, an organic-inorganic composite film (coating film) and a molded product were prepared in the same way as in Example 1, and results of evaluating them are shown in Tables 2 to 4.

Both the coating film and the molded product had poor appearance. Particles were bled out to the surface and were in the state where a portion in which particles aggregated was confirmable even visually. As a result of observing the molded product by HR-STEM, the degree of particle dispersion could not be calculated because of many masses of particles and being very nonuniform. Moreover, the values of transmittance and haze were also poor and were determined as fail "B".

[Comparative Example 4]

Organic-inorganic composite α was manufactured in the same way as in Example 1 with the same composition as in Example 1 except that the polymerization time was set to 5 minutes, and results of evaluating it are shown in Tables 2 to 4.

The organic-inorganic composite α was mixed with MIBK, and a coating material was obtained by the method mentioned above. Although the preparation of an organic-inorganic composite film (coating film) was attempted by a method similar to Example 1 by coating a PET film using the coating material, a film was not correctly formable and the film broke.

Moreover, although molding was attempted by the method mentioned above, the organic-inorganic composite α was not melted and was impossible to mold.

[Comparative Example 5]

Organic-inorganic composite β was synthesized by free radical polymerization according to the following procedures:

(1) 97.2% by mass of zirconia solution-1 (327.9 g) and 2.8% by mass of MS were introduced to a nitrogen-substituted two-neck flask and stirred at room temperature for 24 hours to thereby obtain a solution containing MS-modified zirconia particles (zirconia particles in which MS was attached to the surface).
(2) 0.3% by mass of AIBN was added to a two-neck flask connected with a cooling tube, and the operation of vacuum treatment and nitrogen substitution was repeated three times to deoxidize the inside of the flask.
(3) 48.6% by mass of butyl acetate and 46.0% by mass of MMA were added to the flask under nitrogen, then 5.1% by mass of the solution containing MS-modified zirconia particles was added, the flask was dipped in an oil bath of 80°C, and reaction was performed for 3 hours.
(4) The flask after the reaction was rapidly cooled by dipping in an ice bath, then the reaction solution was added to 2-propanol, stirred, and left standing, and then, the supernatant solution was discarded.
(5) To the remaining precipitate, 2-propanol was added again, and left standing, and the supernatant solution was discarded. This operation was further repeated 8 times.
(6) While nitrogen was blown into the precipitate, liquids were volatilized by air drying overnight to obtain solid matter.
(7) The solid matter was dried under vacuum at 80°C for 24 hours to obtain organic-inorganic composite β.
(8) As a result of determining the molecular weight and degree of molecular weight dispersion of polymers constituting the organic-inorganic composite β by a method similar to Example 1, it had a large peak of high-molecular-weight forms and was Mn = 28600, Mw = 93000, Mw/Mn = 3.26 (> 2.3), demonstrating that the uniformity of chain lengths of the polymers was low.
(9) MIBK was added to the organic-inorganic composite β, and a coating film was obtained by a method similar to Comparative Examples. A plurality of sites that seemed to be the aggregation of inorganic compound particles were present in the coating film, and the appearance was poor.
(10) Furthermore, the organic-inorganic composite β was molded by the method mentioned above to obtain a molded product. As a result of visually confirming the appearance of the obtained molded product, the aggregation of particles partially occurred, a whitish and nonuniform state was present, and a transparent molded product was not obtained.
(11) As a result of observing the molded product by HR-STEM, the degree of particle dispersion could not be calculated because of many masses of particles. From these results, the comprehensive judgment was determined as fail ("B").

These evaluation results are shown in Tables 2 to 4.

[Comparative Example 6]

p(TFEMA-co-BA) was manufactured in the same way as in Example 5 by adding an appropriate amount of EBIB instead of the BPS-modified 50-nm hollow silica particles of Example 6. Evaluation results are shown in Tables 2 to 4.

[Production Example 2]

20-nm $SiO_2$-g-pMMA was manufactured by a method similar to Example 1 except that a 20-nm spherical silica solution was used instead of the zirconia solution-1 (zirconia particle/MIBK solution) of Example 1 and the polymerization time was changed to 2 hours. Evaluation results are shown in Tables 2 to 4.

[Comparative Example 7]

pBzMA was manufactured in the same way as in Example 9 by adding an appropriate amount of EBIB instead of the BPS-modified 100-nm silica particles of Example 9, and a molded product was prepared. Evaluation results are shown in Tables 2 to 4.

[Comparative Example 8]

pGMA was manufactured by a method similar to Comparative Example 7 according to the composition of Table 12 except that the polymerization conditions were set to 40°C and 2 hours, and results of evaluating it are shown in Table 2. Moreover, a coating material and a coating film were prepared by a method similar to Example 10 using the pGMA. Evaluation results are shown in Table 3.

[Comparative Example 9]

p(MMA/HEMA/AOI) was manufactured by the following procedures and evaluated.

(1) The inside of a two-neck flask in which a cooling tube was connected and a rotor was placed was nitrogen-substituted, and polymerization was performed at 80°C for 2 hours according to the composition of Table 12, followed by cooling to room temperature to prepare a polymerization solution.
(2) Subsequently, addition reaction was performed at 60°C for 6 hours according to the composition of Table 8, and cooling was performed to room temperature.
(3) The flask was rapidly cooled by dipping in an ice bath, then added to hexane, stirred, and left standing. In the case where a precipitate hardly settled down, separation was performed by centrifugation.
(4) The supernatant solution was discarded, then the remaining precipitate was redispersed by adding a MEK/methanol mixed solvent (mixed at MEK:methanol = 1:1 in terms of volume ratio), then hexane was added and left standing, and the supernatant solution was discarded. This operation was further repeated twice, finally washing was performed with hexane, and the supernatant solution was discarded to thereby remove unreacted monomers.
(5) While nitrogen was blown into the remaining precipitate, liquids were volatilized by air drying to obtain p(MMA/HEMA/AOI). Evaluation results are shown in Tables 2.
(6) Furthermore, a coating material and a coating film were manufactured by a method similar to Example 16 except that p(MMA/HEMA/AOI) was used, and results of evaluating them are shown in Table 3. The substrate employed two type of ones in which a hard coat layer was disposed on a PET film or on a TAC film.

[Production Example 3]

An antireflection film (corresponding to Figure 2(d)) was prepared by forming a low-refractive index layer on one in which a hard coat layer was formed on a TAC film by a method similar to Example 10 and further the coating layer of pGMA of Comparative Example 8 was formed thereon by a method similar to Example 19, and evaluated. The minimum reflectance of the antireflection film was measured by the method mentioned above and consequently was 0.5.

[Production Example 4]

A polarizing plate was prepared by procedures similar to Example 22 using the antireflection film of Production Example 3 and installed in a liquid crystal display (LCD), and evaluation was performed. Glare was conspicuous when compared with the liquid crystal display (LCD) of Example 22.

[Production Example 5]

The backside (side on which the antireflection film was not formed) of the support in the antireflection film of Production Example 3 and the glass surface of an organic EL display (ELD) were bonded together via a pressure-sensitive adhesive. When the apparatus was activated, the reflection of a screen was slightly conspicuous compared with Example 23.

[Production Example 6]

An antireflection film (corresponding to Figure 2(d)) was prepared by forming a low-refractive index layer on one in which a hard coat layer was formed on a TAC film by a method similar to Example 10 and further the coating layer of p(MMA/HEMA/AOI) of Comparative Example 9 was formed thereon by a method similar to Example 20, and evaluated. The minimum reflectance of the antireflection film was measured by the method mentioned above and consequently was 0.4%.

[Production Example 7]

A polarizing plate was prepared by procedures similar to Example 22 using the antireflection film of Production Example 6 and installed in a liquid crystal display (LCD), and evaluation was performed. Glare was conspicuous when compared with the liquid crystal display (LCD) of Example 24.

[Production Example 8]

The backside (side on which the antireflection film was not formed) of the support in the antireflection film of Production Example 6 and the glass surface of an organic EL display (ELD) were bonded together via a pressure-sensitive adhesive. When the apparatus was activated, the reflection of a screen was slightly conspicuous compared with Example 25.

[Production Example 9]

Beaded $SiO_2$-g-pMMA was manufactured by a method similar to Example 1 except that a beaded silica solution was used instead of the zirconia solution-1 (zirconia particle/MIBK solution) of Example 1 and the polymerization time was changed to 1 hour. Evaluation results are shown in Tables 2 and 3.

[Comparative Example 10]

Commercially available pMMA (manufactured by Aldrich Co. LLC.) was dissolved in MIBK and heated to 80°C to prepare 20% by mass of a pMMA solution. The 20-nm spherical silica solution mentioned above was added to the pMMA solution so that the solid content-based mass ratio between silica particles and pMMA became 55:45, and stirred at 80°C for 15 minutes.

Next, the solvent in this solution was removed with use of an evaporator, and then, drying was further performed under vacuum at 100°C for 12 hours to obtain mixed composition X. Evaluation results are shown in Table 13.

An optical lens and a sample for evaluation were prepared by a method similar to Example 26 using the mixed composition X instead of the organic-inorganic composite of Example 26. In the optical lens, visually found masses of particles were present at a plurality of sites, the appearance was poor, and judgment was made as fail ("B").

Moreover, as a result of observing the cross-section of the sample for evaluation by HR-STEM, the degree of particle dispersion could not be calculated because of many masses of particles. From these results, the comprehensive judgment was determined as fail ("B"). The evaluation results are shown in Table 14.

[Comparative Example 11]

pMMA of Comparative Example 10 was melt-kneaded at 240°C for 5 minutes under nitrogen. Hydrophobic fumed silica (manufactured by Nippon Aerosil Co., Ltd., "AEROSIL R8200") was further added so that the solid content-based mass ratio between $SiO_2$ particles and pMMA became 55:45, then the temperature was raised to 270°C, and kneading was performed for 15 minutes to obtain mixed composition Y. Evaluation results are shown in Table 13.

An optical lens and a sample for evaluation were prepared by a method similar to Example 26 using the mixed composition Y of Comparative Example 11 instead of the organic-inorganic composite of Example 26. Although the optical lens had transparency, yellowing was severe, the appearance was poor, and judgment was made as fail("B").

Moreover, as a result of observing the cross-section of the sample for evaluation by HR-STEM, the degree of particle dispersion was 0.83; thus the dispersibility of particles was poor compared with Examples 26 to 29. From these results, the comprehensive judgment was determined as fail ("B"). The evaluation results are shown in Table 14.

[Comparative Example 12]

MIBK was added to pMMA of Comparative Example 1 and stirred, and a coating solution was prepared by the method mentioned above.

An antireflection film of two-layer constitution using a PET film was prepared by a method similar to Example 33 with this coating solution, and as a result of evaluating it, the antireflection effect was shown to be significantly poor compared with Example 33. The evaluation results are shown in Table 14.

[Comparative Example 13]

A coating film was prepared on a PET film by a method similar to Example 35 using pMMA of Comparative Example 1, and a microstructure was manufactured by a method similar to Example 35. Results of evaluating them are shown in Tables 15 and 16.

As a result of observing the cross-section of the obtained microstructure, a large number of critical defects were seen in projections and depressions in the fine structure and judged as fail ("B"). Moreover, the abrasion resistance was also poor compared with Example 35, and the comprehensive judgment was made as fail ("B").

[Comparative Example 14]

A microstructure was manufactured by a method similar to Example 36 using commercially available poly(benzyl methacrylate) (hereinafter, referred to as pBzMA) (manufactured by Aldrich Co. LLC.) instead of the organic-inorganic composite T of Example 35, and results of evaluating it are shown in Table 16. Moreover, results of evaluating pBzMA by a method similar to Example 1 are shown in Table 15.

As a result of observing the cross-section of the obtained microstructure, a large number of critical defects were seen in projections and depressions in the fine structure and judged as fail ("B"). Moreover, the abrasion resistance was also poor compared with Examples 36 and 37, and the comprehensive judgment was made as fail ("B").

[Comparative Example 15]

Organic-inorganic composite a was manufactured by free radical polymerization according to the following procedures, and results of evaluating it are shown in Table 15.

(1) 97.2% by mass of a 20-nm spherical silica solution (327.9 g) and 2.8% by mass of MS were introduced to a nitrogen-substituted two-neck flask and stirred at room temperature for 24 hours to thereby obtain a solution containing MS-modified 20-nm spherical silica particles (20-nm spherical particles in which MS was attached to the surface).
(2) 0.3% by mass of AIBN was added to a two-neck flask connected with a cooling tube, and the operation of vacuum treatment and nitrogen substitution was repeated three times to deoxidize the inside of the flask.
(3) 48.6% by mass of MIBK and 46.0% by mass of MMA were added to the flask under nitrogen, then 5.1% by mass of the solution containing MS-modified 20-nm spherical silica particles was added, the flask was dipped in an oil bath of 80°C, and reaction was performed for 3 hours.
(4) The flask after the reaction was rapidly cooled by dipping in an ice bath, then the reaction solution was added to methanol, stirred, and left standing, and then, the supernatant solution was discarded.
(5) To the remaining precipitate, methanol was added again, and left standing, and the supernatant solution was discarded. This operation was further repeated 8 times.
(6) While nitrogen was blown into the precipitate, liquids were volatilized by air drying overnight to obtain solid matter.
(7) The solid matter was dried under vacuum at 80°C for 24 hours to obtain organic-inorganic composite $\alpha$.
(8) As a result of determining the molecular weight and degree of molecular weight dispersion of polymers constituting the organic-inorganic composite a by a method similar to Example 1, it had a large peak of high-molecular-weight forms and the molecular weight distribution was Mw/Mn = 2.93 (> 2.3), demonstrating that the uniformity of chain lengths of the polymers was low.
(9) Furthermore, a microstructure was manufactured by a method similar to Example 35 using the organic-inorganic composite a instead of the organic/inorganic composite T of Example 35, and results of evaluating it are shown in Table 16.

A large number of visually identifiable masses were present in the obtained coating material while white masses were present in the coating film (before transfer), and the appearance was poor. The microstructure obtained from the coating film merely very slightly emitted blue light even when irradiated in an angled position with light. Moreover, as a result of observing the cross-section of the microstructure, the projections and depressions of the fine structure were not correctly formed with more than 50 critical defects, and were judged as fail ("B"). Moreover, the dispersion of inorganic particles was nonuniform and was judged as fail ("B"). Moreover, because the projections and depressions of the fine structure were not correctly formed, evaluation items impossible to measure were present and were judged as fail ("B") in comprehensive judgment.

[Table 1]

| Substance name | | Mass ratio (%) | | | | | | | | | | | |
|---|---|---|---|---|---|---|---|---|---|---|---|---|---|
| | | Example 1 | Example 2 | Example 3 | Example 4 | Example 5 | Example 6 | Example 7 | Example 8 | Example 9 | Example 10 | Example 15 | Example 16 |
| Monomer | MMA | 97.05 | 90.00 | 0.00 | 97.05 | 0.00 | 17.60 | 0.00 | 2.20 | 0.00 | 0.00 | 0.00 | 3.23 |
| | EA | 0.00 | 7.05 | 0.00 | 0.00 | 0.00 | 0.00 | 0.00 | 0.90 | 0.00 | 0.00 | 0.00 | 0.00 |
| | St | 0.00 | 0.00 | 22.62 | 0.00 | 0.00 | 0.00 | 0.00 | 0.00 | 0.00 | 0.00 | 0.00 | 0.00 |
| | nBA | 0.00 | 0.00 | 64.95 | 0.00 | 36.60 | 0.00 | 0.00 | 0.00 | 0.00 | 0.00 | 0.00 | 0.00 |
| | TFEMA | 0.00 | 0.00 | 0.00 | 0.00 | 32.00 | 29.50 | 0.00 | 18.80 | 0.00 | 0.00 | 0.50 | 0.00 |
| | PFPMA | 0.00 | 0.00 | 0.00 | 0.00 | 0.00 | 0.00 | 28.00 | 0.00 | 0.00 | 0.00 | 0.00 | 0.00 |
| | BzMA | 0.00 | 0.00 | 0.00 | 0.00 | 0.00 | 0.00 | 0.00 | 0.00 | 28.33 | 0.00 | 0.00 | 0.00 |
| | GMA | 0.00 | 0.00 | 0.00 | 0.00 | 0.00 | 0.00 | 0.00 | 0.00 | 0.00 | 4.03 | 3.03 | 0.00 |
| | EMA | 0.00 | 0.00 | 0.00 | 0.00 | 0.00 | 0.00 | 0.00 | 0.00 | 0.00 | 0.00 | 0.50 | 0.00 |
| | HEMA | 0.00 | 0.00 | 0.00 | 0.00 | 0.00 | 0.00 | 0.00 | 0.00 | 0.00 | 0.00 | 0.00 | 1.80 |
| Surface-modified inorganic compound particle | BPS-modified zirconia particle | 2.61 | 2.61 | 2.34 | 0.00 | 0.00 | 0.00 | 0.00 | 0.00 | 0.00 | 0.00 | 0.00 | 0.00 |
| | BPS-modified titania particle | 0.00 | 0.00 | 0.00 | 2.61 | 0.00 | 0.00 | 0.00 | 0.00 | 0.00 | 0.00 | 0.00 | 0.00 |
| | BPS-modified 50-nm hollow silica particle | 0.00 | 0.00 | 0.00 | 0.00 | 3.80 | 0.00 | 0.00 | 0.00 | 0.00 | 0.00 | 0.00 | 0.00 |
| | BPS-modified 20-nm spherical silica particle | 0.00 | 0.00 | 0.00 | 0.00 | 0.00 | 5.70 | 2.10 | 0.00 | 0.00 | 0.00 | 0.00 | 0.00 |
| | BPS-modified 100-nm spherical silica particle | 0.00 | 0.00 | 0.00 | 0.00 | 0.00 | 0.00 | 0.00 | 0.00 | 2.47 | 0.00 | 0.00 | 0.00 |
| | BPS-modified beaded silica particle | 0.00 | 0.00 | 0.00 | 0.00 | 0.00 | 0.00 | 0.00 | 12.30 | 0.00 | 0.00 | 0.00 | 0.00 |
| | BIDS-modified zirconia particle/MIBK solution | 0.00 | 0.00 | 0.00 | 0.00 | 0.00 | 0.00 | 0.00 | 0.00 | 0.00 | 0.00 | 0.00 | 32.14 |
| | BIDS-modified zirconia particle/MEK solution | 0.00 | 0.00 | 0.00 | 0.00 | 0.00 | 0.00 | 0.00 | 0.00 | 0.00 | 32.14 | 32.14 | 0.00 |
| Initiator | EBIB | 0.00 | 0.00 | 0.00 | 0.00 | 0.00 | 0.00 | 0.00 | 0.00 | 0.00 | 0.00 | 0.00 | 0.00 |
| Solvent | Anisole | 0.00 | 0.00 | 8.78 | 0.00 | 0.00 | 0.00 | 0.00 | 0.00 | 69.16 | 0.00 | 0.00 | 0.00 |
| | MIBK | 0.00 | 0.00 | 0.00 | 0.00 | 27.51 | 47.14 | 0.00 | 65.77 | 0.00 | 0.00 | 0.00 | 62.82 |
| | MEK | 0.00 | 0.00 | 0.00 | 0.00 | 0.00 | 0.00 | 69.87 | 0.00 | 0.00 | 63.82 | 63.82 | 0.00 |
| Ligand | dNbpy | 0.288 | 0.288 | 0.000 | 0.288 | 0.000 | 0.000 | 0.000 | 0.000 | 0.000 | 0.000 | 0.000 | 0.000 |
| | PMDETA | 0.000 | 0.000 | 0.837 | 0.000 | 0.057 | 0.038 | 0.019 | 0.018 | 0.024 | 0.006 | 0.006 | 0.006 |
| Catalyst | CuBr | 0.045 | 0.045 | 0.422 | 0.045 | 0.028 | 0.019 | 0.010 | 0.011 | 0.014 | 0.003 | 0.003 | 0.003 |
| | $CuBr_2$ | 0.007 | 0.007 | 0.051 | 0.007 | 0.005 | 0.003 | 0.001 | 0.001 | 0.002 | 0.001 | 0.001 | 0.001 |
| | Total | 100.00 | 100.00 | 100.00 | 100.00 | 100.00 | 100.00 | 100.00 | 100.00 | 100.00 | 100.00 | 100.00 | 100.00 |

[Table 2]

| Example or Comparative Example | Inorganic compound particle | | | | | | | | Organic-inorganic composite or polymer | | | | | | | | | | | |
|---|---|---|---|---|---|---|---|---|---|---|---|---|---|---|---|---|---|---|---|---|
| | Cavity ratio (%) | | Particle size (nm) | Degree of circularity | L/D | Outer shell thickness (nm) | Density ($g/cm^3$) | Refractive index | Inorganic compound content | | Double bond | Number-average molecular weight | Molecular weight distribution (Mw/Mn) | | Tg (°C) | Free polymer (wt%) | Halogen content (wt%) | Copper content (wt%) | Fluorine content (wt%) |
| | Actually measured value | Judgment | | Actually measured value | | | | | (wt%) | (vol%) | (mol%) | Mn | Actually measured value | Judgment | | | | | |
| Example 1 | - | - | 17 | 0.76 | 1.5 | - | 5.1 | 1.92 | 68 | 33 | - | 11,900 | 1.24 | A | 115 | 2 | 1.2 | 0.09 | 0 |
| Example 2 | - | - | 19 | 0.78 | 1.5 | - | 5.1 | 1.92 | 39 | 13 | - | 12,900 | 1.23 | A | 102 | 1 | 0.5 | 0.08 | 0 |
| Example 3 | - | - | 18 | 0.78 | 1.6 | - | 5.1 | 1.98 | 79 | 49 | - | 10,200 | 1.54 | A | 15 | 3 | 0.8 | 0.08 | 0 |
| Example 4 | - | - | 14 | 0.80 | 2.0 | - | 4.1 | 1.96 | 32 | 12 | - | 20,100 | 1.30 | A | 110 | 7 | 0.2 | 0.09 | 0 |
| Example 5 | 27 | A | 48 | 0.95 | 1.1 | 8.5 | 1.7 | 1.30 | 50 | 42 | - | 24,800 | 1.85 | A | 25 | 2 | 0.5 | 0.01 | 9 |
| Example 6 | - | - | 18 | 0.96 | 1.0 | - | 2.2 | 1.45 | 55 | 42 | - | 23,500 | 1.48 | A | 83 | 0 | 1.0 | 0.02 | 6 |
| Example 7 | - | - | 18 | 0.96 | 1.0 | - | 2.2 | 1.45 | 12 | 8 | - | 112,000 | 1.80 | A | 63 | - | 0.2 | <0.01 | 38 |
| Example 8 | - | - | - | - | 14 | - | 2.2 | 1.45 | 60 | 49 | - | 52,000 | 1.56 | A | 63 | 0 | 0.1 | <0.01 | 11 |
| Example 9 | - | - | 96 | 0.91 | 1.1 | - | 2.2 | 1.45 | 26 | 18 | - | 78,000 | 1.63 | A | 60 | - | 0.1 | 0.08 | 0 |
| Example 10 | - | - | 18 | 0.78 | 1.6 | - | 5.1 | 1.98 | 76 | 42 | - | 55,000 | 1.88 | A | - | 2 | 0.1 | <0.01 | 0 |
| Example 15 | - | - | 17 | 0.78 | 1.5 | - | 5.1 | 1.95 | 70 | 35 | - | 62,000 | 2.13 | A | - | 3 | 0.1 | <0.01 | 2 |
| Production Example 2 | - | - | 18 | 0.96 | 1.0 | - | 2.2 | 1.45 | 32 | 20 | - | 21,000 | 1.24 | A | 115 | 3 | 0.7 | 0.10 | 0 |
| Production Example 9 | - | - | - | - | 18 | - | 2.2 | 1.45 | 60 | 45 | - | 38,000 | 1.29 | A | 118 | 3 | 0.1 | 0.10 | 0 |
| Comp. Ex. 1 | - | - | - | - | - | - | - | - | 0 | 0 | - | 27,200 | 1.43 | A | 111 | - | - | - | 0 |

(continued)

| | Inorganic compound particle | | | | | | | | Organic-inorganic composite or polymer | | | | | | | | | | | |
|---|---|---|---|---|---|---|---|---|---|---|---|---|---|---|---|---|---|---|---|---|
| Example or Comparative Example | Cavity ratio (%) | | Particle size (nm) | Degree of circularity | L/D | Outer shell thickness (nm) | Density ($g/cm^3$) | Refractive index | Inorganic compound content | | Double bond | Number-average molecular weight | Molecular weight distribution (Mw/Mn) | | Tg (°C) | Free polymer (wt%) | Halogen content (wt%) | Copper content (wt%) | Fluorine content (wt%) |
| | Actually measured value | Judgment | | Actually measured value | | | | | (wt%) | (vol%) | (mol%) | Mn | Actually measured value | Judgment | | | | | |
| Comp. Ex. 2 | - | - | 17 | 0.76 | 1.5 | - | 5.1 | 1.92 | 68 | 33 | - | 12,800 | 1.20 | A | 110 | - | - | - | 0 |
| Comp. Ex. 3 | - | - | 17 | 0.76 | 1.5 | - | 5.1 | 1.92 | 68 | 33 | - | 12,800 | 1.20 | A | 110 | - | - | - | 0 |
| Comp. Ex. 4 | - | - | 17 | 0.76 | 1.5 | - | 5.1 | 1.92 | 97 | 86 | - | 2,100 | 1.19 | A | - | - | 2.1 | 0.10 | 0 |
| Comp. Ex. 5 | - | - | 17 | 0.76 | 1.5 | - | 5.1 | 1.92 | 65 | 31 | - | 28,600 | 3.26 | B | - | - | 3.1 | 0.10 | 0 |
| Comp. Ex. 6 | - | - | - | - | - | - | - | - | 0 | 0 | - | 28,300 | 1.85 | A | - | - | - | - | 18 |
| Comp. Ex. 7 | - | - | - | - | - | - | - | - | 0 | 0 | - | 82,100 | 1.77 | A | - | - | - | - | 0 |
| Comp. Ex. 8 | - | - | - | - | - | - | - | - | 0 | 0 | - | 52,800 | 2.13 | A | - | - | - | - | 0 |
| Comp. Ex. 9 | - | - | - | - | - | - | - | - | 0 | 0 | - | 28,500 | 2.13 | A | - | - | - | - | 0 |

[Table 3]

| | Coating material | Organic-inorganic composite film | | | | | | | | | | | |
|---|---|---|---|---|---|---|---|---|---|---|---|---|---|
| Example or Comparative Example | Solid content (wt%) | Substrate | Appearance | Total light transmittance (%) | Haze (%) | Refractive index | | Void ratio (%) | Pencil hardness | Adhesion | Solvent resistance | Water contact angle (°) | Oil contact angle (°) |
| | | | Judgment | | | Calculated value (theoretical value) | Actually measured value | | | Judgment | Judgment | | |
| Example 1 | 10.0 | PET | A | 89 | 2.5 | - | - | - | F | A | - | 71 | - |
| | | TAC+HC | A | - | - | 1.62 | 1.61 | 2 | - | - | - | - | - |
| Example 2 | 12.2 | PET | A | 89 | 2.3 | 1.55 | 1.55 | 0 | F | A | - | 70 | - |
| Example 3 | 14.2 | PET | A | 89 | 3.8 | 1.70 | 1.70 | 0 | F | A | - | 82 | - |
| Example 4 | 8.9 | PET | A | 89 | 4.6 | 1.54 | 1.54 | 0 | F | A | - | 70 | - |
| Example 5 | 10.2 | PET | A | 91 | 0.5 | 1.37 | 1.37 | 0 | H | A | - | 98 | 39 |
| Example 6 | 10.7 | PET | A | 91 | 0.5 | 1.44 | 1.44 | 0 | F | A | - | 105 | 40 |
| Example 7 | - | - | - | - | - | - | - | - | - | - | - | - | - |
| Example 8 | 12.0 | PET | A | 92 | 1.5 | 1.43 | 1.43 | 0 | F | A | A | 101 | 49 |
| Example 9 | - | - | - | - | - | - | - | - | - | - | - | - | - |
| Production Example 2 | 10.3 | PET | A | 91 | 0.5 | 1.48 | 1.48 | 0 | F | A | - | 66 | 14 |
| Production Example 9 | 9.9 | PET | A | 91 | 0.6 | 1.48 | 1.48 | 0 | F | A | - | 68 | 15 |
| Comp. Ex. 1 | 10.2 | PET | A | 91 | 0.5 | 1.49 | 1.49 | 0 | F | A | - | 68 | 14 |
| Comp. Ex. 2 | 10.2 | PET | B | 72 | 12.3 | Immeasurable | Immeasurable | Immeasurable | Immeasurable | Immeasurable | - | - | - |
| Comp. Ex. 3 | 10.0 | PET | B | 76 | 15.3 | Immeasurable | Immeasurable | Immeasurable | Immeasurable | Immeasurable | - | - | - |
| Comp. Ex. 4 | 10.0 | PET | B | Immeasurable | Immeasurable | Immeasurable | Immeasurable | Immeasurable | Immeasurable | Immeasurable | - | - | - |

(continued)

| | Coating material | Organic-inorganic composite film | | | | | | | | | | | |
|---|---|---|---|---|---|---|---|---|---|---|---|---|---|
| Example or Comparative Example | Solid content (wt%) | Substrate | Appearance | Total light transmittance (%) | Haze (%) | Refractive index | | Void ratio (%) | Pencil hardness | Adhesion | Solvent resistance | Water contact angle (°) | Oil contact angle (°) |
| | | | Judgment | | | Calculated value (theoretical value) | Actually measured value | | | Judgment | Judgment | | |
| Comp. Ex. 5 | 11.0 | PET | B | 71 | 18.0 | Immeasurable | Immeasurable | Immeasurable | Immeasurable | Immeasurable | - | - | - |
| Comp. Ex. 6 | 10.8 | PET | A | 91 | 0.5 | 1.44 | 1.44 | 0 | H | A | - | 102 | 33 |
| Comp. Ex. 7 | 10.4 | PET | A | 90 | 1.2 | 1.57 | 1.57 | 0 | F | A | - | - | - |
| Comp. Ex. 8 | 9.9 | TAC+HC | - | 90 | 0.9 | 1.51 | 1.51 | 0 | F | A | - | - | - |
| Comp. Ex. 9 | 10.3 | PET | A | 89.0 | 1.0 | 1.50 | 1.50 | 0 | F | A | - | - | - |
| | | TAC+HC | A | 90.1 | 0.8 | 1.50 | 1.50 | 0 | F | A | - | - | - |

[Table 4]

| Example or Comparative Example | Molded product | | | | | | | | Comprehensive judgment |
|---|---|---|---|---|---|---|---|---|---|
| | Appearance | Degree of particle dispersion | Refractive index | | Void ratio (%) | Water contact angle (°) | Oil contact angle (°) | Relative permittivity (%) | |
| | Judgment | | Calculated value (theoretical value) | Actually measured value | | | | | |
| Example 1 | A | 0.27 | 1.62 | 1.62 | 0 | 73 | - | 6.3 | A |
| Example 2 | A | 0.25 | 1.55 | 1.55 | 0 | 68 | - | 4.5 | A |
| Example 3 | A | 0.29 | 1.70 | 1.70 | 0 | 75 | - | 6.9 | A |
| Example 4 | A | 0.29 | 1.54 | 1.54 | 0 | 73 | - | 4.6 | A |
| Example 5 | A | 0.14 | 1.37 | 1.37 | 0 | 103 | 35 | 3.2 | A |
| Example 6 | A | 0.14 | 1.44 | 1.44 | 0 | 106 | 39 | 3.5 | A |
| Example 7 | A | 0.12 | 1.39 | 1.39 | 0 | 106 | 62 | 3.3 | A |
| Example 8 | A | - | 1.43 | 1.43 | 0 | 101 | 49 | 3.7 | A |
| Example 9 | A | 0.11 | 1.55 | 1.55 | 0 | 63 | - | - | A |
| Production Example 2 | A | 0.14 | 1.48 | 1.48 | 0 | 62 | - | 3.6 | - |
| Comp. Ex. 1 | A | - | 1.49 | 1.49 | 0 | 67 | 16 | 3.5 | - |
| Comp. Ex. 2 | B | Immeasurable | Immeasurable | Immeasurable | Immeasurable | Immeasurable | - | - | B |
| Comp. Ex. 3 | B | Immeasurable | Immeasurable | Immeasurable | Immeasurable | Immeasurable | - | - | B |
| Comp. Ex. 4 | B | Immeasurable | Immeasurable | Immeasurable | Immeasurable | Immeasurable | - | - | B |
| Comp. Ex. 5 | B | Immeasurable | Immeasurable | Immeasurable | Immeasurable | Immeasurable | - | - | B |
| Comp. Ex. 6 | A | - | 1.44 | 1.44 | 0 | 98 | - | - | - |
| Comp. Ex. 7 | A | - | 1.57 | 1.57 | 0 | - | - | - | - |
| Comp. Ex. 8 | - | - | - | - | - | - | - | - | - |
| Comp. Ex. 9 | - | - | - | - | - | - | - | - | - |

[Table 5]

| | Compounding ratio of coating material (% by mass) | | | | |
|---|---|---|---|---|---|
| | Organic-inorganic composite | Cross-linking agent | Curing agent | Curing accelerator | Photo-acid-generating agent |
| Example 10 | 99.1 | 0.0 | 0.0 | 0.0 | 0.9 |
| Example 11 | 94.0 | 5.3 | 0.0 | 0.0 | 0.7 |
| Example 12 | 92.8 | 0.0 | 6.5 | 0.7 | 0.0 |
| Example 13 | 93.4 | 0.0 | 6.0 | 0.6 | 0.0 |
| Example 14 | 99.1 | 0.0 | 0.0 | 0.0 | 0.9 |
| Example 15 | 99.0 | 0.0 | 0.0 | 0.0 | 1.0 |

[Table 6]

| | Coating material | Organic-inorganic composite film | | | | | | | | | | | | Comprehensive judgment |
|---|---|---|---|---|---|---|---|---|---|---|---|---|---|---|
| Example or Comparative Example | Solid content (wt%) | Substrate | Appearance | Total light transmittance (%) | Haze (%) | Refractive index | | Void ratio (%) | Pencil hardness | Adhesion | Solvent resistance | Water contact angle (°) | Oil contact angle (°) | |
| | | | Judgment | | | Calculated value (theoretical value) | Actually measured value | | | Judgment | Judgment | | | |
| Example 10 | 10.9 | TAC+HC | A | 91 | 1.6 | 1.70 | 1.69 | 2 | H | - | A | 92 | - | A |
| Example 11 | 10.5 | TAC+HC | A | 91 | 1.8 | 1.68 | 1.68 | 0 | H | - | A | 83 | - | A |
| Example 12 | 10.6 | PET | A | 90 | 2.8 | 1.69 | 1.68 | 2 | H | A | A | 81 | - | A |
| Example 13 | 10.2 | PET | A | 91 | 2.1 | 1.69 | 1.68 | 2 | H | A | A | - | - | A |
| Example 14 | 10.9 | Glass | A | 91 | 1.2 | 1.70 | 1.69 | 2 | H | A | A | - | - | A |
| Example 15 | 9.6 | TAC+HC | A | 90 | 1.9 | 1.64 | 1.64 | 0 | H | A | A | 98 | 48 | A |
| Example 16 | 9.9 | PET | A | 89 | 0.9 | 1.70 | 1.69 | 2 | H | A | A | 82 | - | A |
| Example 17 | 10.6 | TAC+HC | A | 92 | 0.5 | 1.48 | 1.48 | 0 | 2H | A | A | 78 | - | A |
| Example 18 | 10.2 | TAC+HC | A | 89 | 1.4 | 1.68 | 1.67 | 2 | F | A | A | 73 | - | A |

[Table 7]

| Example or Comparative Example | Inorganic compound particle | | | | | | | | Monomer | | | |
|---|---|---|---|---|---|---|---|---|---|---|---|---|
| | Cavity ratio (%) | | Particle size (nm) | Degree of circularity | L/D | Outer shell thickness (nm) | Density (g/cm$^3$) | Refractive index | Type | | Addition ratio | |
| | Actually measured value | Judgment | | Actually measured value | | | | | M1 | M2 | M1 | M2 |
| Example 16 | - | - | 18 | 0.78 | 1.6 | - | 5.1 | 1.98 | MMA | HEMA | 70 | 30 |
| Example 17 | - | - | - | - | 12 | - | 2.2 | 1.45 | MMA | HEMA | 50 | 50 |
| Example 18 | - | - | - | - | - | - | - | 1.95 | MMA | HEMA | 80 | 20 |
| Production Example 1 | - | - | - | - | 18 | - | 2.2 | 1.45 | MMA | HEMA | 70 | 30 |

[Table 8]

| Substance name | | Mass ratio (%) | | | | |
|---|---|---|---|---|---|---|
| | | Example 16 | Example 17 | Example 18 | Production Example 1 | Comparative Example 9 |
| Polymerization solution | | 95.66 | 95.45 | 95.66 | 95.66 | 82.41 |
| Monomer | MOI | 0.00 | 0.00 | 4.29 | 0.00 | 0.00 |
| | AOI | 4.29 | 4.50 | 0.00 | 4.29 | 17.45 |
| Polymerization inhibitor | | 0.003 | 0.003 | 0.003 | 0.003 | 0.010 |
| Catalyst | DBTDL | 0.047 | 0.047 | 0.047 | 0.047 | 0.130 |
| Total | | 100.00 | 100.00 | 100.00 | 100.00 | 100.00 |

[Table 9]

| | Organic-inorganic composite or polymer | | | | | | | | | | |
|---|---|---|---|---|---|---|---|---|---|---|---|
| Example or Comparative Example | Inorganic compound content | | Double bond | Number-average molecular weight | Molecular weight distribution (Mw/Mn) | | Tg (°C) | Free polymer (wt%) | Halogen content (wt%) | Copper content (wt%) | Fluorine content (wt%) |
| | (wt%) | (vol%) | (mol%) | Mn | Actually measured value | Judgment | | | | | |
| Example 16 | 75 | 41 | 40 | 45,600 | 2.15 | A | - | 3 | 0.2 | - | 0 |
| Example 17 | 50 | 35 | 55 | 73,500 | 2.28 | A | - | 1 | 0.1 | - | 0 |
| Example 18 | 74 | 39 | 26 | 39,500 | 1.71 | A | - | 2 | 0.2 | - | 0 |
| Production Example 1 | 84 | 74 | 40 | 58,200 | 1.93 | A | - | - | 0.1 | - | 0 |

[Table 10]

| Example or Comparative Example | Antireflection film | | Reference to be compared | Comprehensive judgment |
|---|---|---|---|---|
| | Glare | Minimum reflectance | | |
| | Judgment | (%) | | |
| Example 19 | A | 0.03 | Production Example 3 | A |
| Example 20 | A | 0.02 | Production Example 6 | A |
| Example 21 | A | 0.04 | Production Example 6 | A |
| Production Example 3 | Reference for Example 19 | 0.5 | - | - |
| Production Example 6 | Reference for Example 20<br>Reference for Example 21 | 0.4 | - | - |

[Table 11]

| Example or Comparative Example | Display | Reference to be compared | Comprehensive judgment |
|---|---|---|---|
| | Glare | | |
| | Judgment | | |
| Example 22 | A | Production Example 4 | A |
| Example 23 | A | Production Example 5 | A |
| Example 24 | A | Production Example 7 | A |
| Example 25 | A | Production Example 8 | A |
| Production Example 4 | Reference for Example 22 | - | - |
| Production Example 5 | Reference for Example 23 | - | - |
| Production Example 7 | Reference for Example 24 | - | - |
| Production Example 8 | Reference for Example 25 | - | - |

[Table 12]

| Substance name | | Mass ratio (%) | | | | | | | | | | | | |
|---|---|---|---|---|---|---|---|---|---|---|---|---|---|---|
| | | Example 26 | Example 27 | Example 28 | Example 29 | Example 34 | Example 35 | Example 36 | Example 37 | Example 38 | Production Example 1 | Comp. Ex. 1 | Comp. Ex. 8 | Comp. Ex. 9 |
| Monomer | MMA | 68.30 | 23.40 | 68.30 | 68.30 | 68.30 | 46.15 | 0.00 | 0.00 | 46.15 | 3.23 | 49.30 | 0.00 | 10.17 |
| | EA | 0.00 | 0.00 | 0.00 | 0.00 | 0.00 | 0.00 | 0.00 | 0.00 | 0.00 | 0.00 | 0.00 | 0.00 | 0.00 |
| | St | 0.00 | 0.00 | 0.00 | 0.00 | 0.00 | 0.00 | 0.00 | 0.00 | 0.00 | 0.00 | 0.00 | 0.00 | 0.00 |
| | nBA | 0.00 | 0.00 | 0.00 | 0.00 | 0.00 | 0.00 | 0.00 | 0.00 | 0.00 | 0.00 | 0.00 | 0.00 | 0.00 |
| | TFEMA | 0.00 | 0.00 | 0.00 | 0.00 | 0.00 | 0.00 | 0.00 | 0.00 | 0.00 | 0.00 | 0.00 | 0.00 | 0.00 |
| | PFPMA | 0.00 | 0.00 | 0.00 | 0.00 | 0.00 | 0.00 | 0.00 | 0.00 | 0.00 | 0.00 | 0.00 | 0.00 | 0.00 |
| | BzMA | 0.00 | 41.20 | 0.00 | 0.00 | 0.00 | 0.00 | 69.61 | 69.61 | 0.00 | 0.00 | 0.00 | 0.00 | 0.00 |
| | GMA | 0.00 | 0.00 | 0.00 | 0.00 | 0.00 | 0.00 | 0.00 | 0.00 | 0.00 | 0.00 | 0.00 | 19.24 | 0.00 |
| | EMA | 0.00 | 0.00 | 0.00 | 0.00 | 0.00 | 0.00 | 0.00 | 0.00 | 0.00 | 0.00 | 0.00 | 0.00 | 0.00 |
| | HEMA | 0.00 | 0.00 | 0.00 | 0.00 | 0.00 | 0.00 | 0.00 | 0.00 | 0.00 | 1.80 | 0.00 | 0.00 | 6.49 |
| Surface-modified inorganic compound particle | BPS-modified zirconia particle | 0.00 | 3.00 | 0.00 | 0.00 | 0.00 | 0.00 | 2.55 | 2.55 | 0.00 | 0.00 | 0.00 | 0.00 | 0.00 |
| | BPS-modified titania particle | 0.00 | 0.00 | 4.40 | 0.00 | 0.00 | 0.00 | 0.00 | 0.00 | 7.43 | 0.00 | 0.00 | 0.00 | 0.00 |
| | BPS-modified 50-nm hollow silica particle | 0.00 | 0.00 | 0.00 | 4.40 | 0.00 | 0.00 | 0.00 | 0.00 | 0.00 | 0.00 | 0.00 | 0.00 | 0.00 |
| | BPS-modified 20-nm spherical silica particle | 4.40 | 0.00 | 0.00 | 0.00 | 0.00 | 7.43 | 0.00 | 0.00 | 0.00 | 0.00 | 0.00 | 0.00 | 0.00 |
| | BPS-modified 100-nm spherical silica particle | 0.00 | 0.00 | 0.00 | 0.00 | 0.00 | 0.00 | 0.00 | 0.00 | 0.00 | 0.00 | 0.00 | 0.00 | 0.00 |
| | BPS-modified beaded silica particle | 0.00 | 0.00 | 0.00 | 0.00 | 4.40 | 0.00 | 0.00 | 0.00 | 0.00 | 0.00 | 0.00 | 0.00 | 0.00 |
| | BIDS-modified zirconia particle/MIBK solution | 0.00 | 0.00 | 0.00 | 0.00 | 0.00 | 0.00 | 0.00 | 0.00 | 0.00 | 32.14 | 0.00 | 0.00 | 0.00 |
| | BIDS-modified zirconia particle/MEK solution | 0.00 | 0.00 | 0.00 | 0.00 | 0.00 | 0.00 | 0.00 | 0.00 | 0.00 | 0.00 | 0.00 | 0.00 | 0.00 |
| Initiator | EBIB | 0.00 | 0.00 | 0.00 | 0.00 | 0.00 | 0.00 | 0.00 | 0.00 | 0.00 | 0.00 | 0.19 | 0.04 | 0.03 |
| Solvent | Anisole | 0.00 | 32.30 | 0.00 | 0.00 | 0.00 | 0.00 | 27.75 | 27.75 | 0.00 | 0.00 | 0.00 | 0.00 | 0.00 |
| | MIBK | 27.20 | 0.00 | 27.20 | 27.20 | 27.20 | 46.35 | 0.00 | 0.00 | 46.35 | 62.82 | 49.30 | 0.00 | 83.28 |
| | MEK | 0.00 | 0.00 | 0.00 | 0.00 | 0.00 | 0.00 | 0.00 | 0.00 | 0.00 | 0.00 | 0.00 | 80.70 | 0.00 |
| Ligand | dNbpy | 0.000 | 0.000 | 0.000 | 0.000 | 0.000 | 0.000 | 0.000 | 0.000 | 0.000 | 0.000 | 1.006 | 0.000 | 0.000 |
| | PMDETA | 0.063 | 0.063 | 0.063 | 0.063 | 0.063 | 0.044 | 0.057 | 0.057 | 0.044 | 0.006 | 0.000 | 0.013 | 0.017 |
| Catalyst | CuBr | 0.032 | 0.032 | 0.032 | 0.032 | 0.032 | 0.023 | 0.029 | 0.029 | 0.023 | 0.003 | 0.176 | 0.007 | 0.012 |
| | $CuBr_2$ | 0.005 | 0.005 | 0.005 | 0.005 | 0.005 | 0.003 | 0.004 | 0.004 | 0.003 | 0.001 | 0.028 | 0.000 | 0.001 |
| | Total | 100.00 | 100.00 | 100.00 | 100.00 | 100.00 | 100.00 | 100.00 | 100.00 | 100.00 | 100.00 | 100.00 | 100.00 | 100.00 |

[Table 13]

| Production Example or Comparative Production Example | Organic-inorganic composite or mixed composition | | | | | Optical lens | | | | | | Comprehensive judgment |
|---|---|---|---|---|---|---|---|---|---|---|---|---|
| | Inorganic compound content | | Molecular weight distribution (Mw/Mn) | | Tg | Appearance | Refractive index | Total light transmittance | Yellowness Index (YI) | Degree of particle dispersion | | |
| | (wt%) | (vol%) | Actually measured value | Judgment | (°C) | Judgment | | (%) | Judgment | Dispersion degree | Judgment | |
| Example 26 | 55 | 40 | 1.34 | A | 118 | A | 1.48 | 89 | A | 0.21 | A | A |
| Example 27 | 52 | 21 | 1.49 | A | 88 | A | 1.60 | 88 | - | 0.25 | A | A |
| Example 28 | 44 | 19 | 1.63 | A | 115 | A | 1.56 | 88 | - | 0.31 | A | A |
| Example 29 | 38 | 30 | 1.56 | A | 116 | A | 1.43 | 89 | - | 0.29 | A | A |
| Example 34 | 75 | 62 | 1.24 | A | 112 | A | 1.48 | 90 | - | - | - | A |
| Comparative Example 10 | 55 | 40 | - | - | 103 | B | 1.48-1.49 | 85-89 | A | Immeasurable | B | B |
| Comparative Example 11 | 55 | 40 | - | - | 104 | B | 1.48 | 89 | Reference | 0.83 | B | B |

[Table 14]

| Example or Comparative Example | Molded product or coating film | | | | | | | Antireflection film | | Optical lens | Comprehensive judgment |
|---|---|---|---|---|---|---|---|---|---|---|---|
| | Sample | Appearance | Refractive index | Total light transmittance | Yellowness Index (YI) | Degree of particle dispersion | | Glare | Minimum reflectance | Appearance | |
| | | Judgment | | (%) | Judgment | Dispersion degree | Judgment | Judgment | (%) | Judgment | |
| Example 30 | Molded product | A | 1.48 | 89 | A | 0.42 | A | - | - | A | A |
| Example 31 | Molded product | A | 1.55 | 87 | - | 0.48 | A | - | - | A | A |
| | Coating film | A | 1.55 | 91 | - | - | - | - | - | - | |
| Example 32 | Molded product | A | 1.56 | 86 | - | 0.59 | A | - | - | A | A |
| Example 33 | Coating film | A | 1.42 | 91 | - | - | - | A | 2.3 | - | A |
| Example 34 | Molded product | A | 1.29 | 91 | A | - | - | - | - | A | A |
| Comparative Example 10 | Molded product | B | 1.48-1.49 | 85-89 | A | Immeasurable | B | - | - | - | B |
| Comparative Example 11 | Molded product | B | 1.48 | 89 | Reference | 0.83 | B | - | - | - | B |
| Comparative Example 12 | Coating film | B | 1.49 | 90 | A | - | - | B | 4.2 | - | B |

[Table 15]

| Production Example or Comparative Production Example/Polymer | Organic-inorganic composite or polymer | | | | | |
|---|---|---|---|---|---|---|
| | Inorganic oxide content | | Degree of molecular weight dispersion (Mw/Mn) | | Tg (°C) | Free polymer (wt%) |
| | (wt%) | (vol%) | Actually measured value | Judgment | | |
| Example 35 | 66 | 50 | 1.25 | A | 110 | 0 |
| Example 36 | 42 | 14 | 1.35 | A | 63 | 3 |
| Example 37 | 10 | 2 | 1.42 | A | 63 | 2 |
| Example 38 | 40 | 16 | 1.41 | A | 105 | 2 |
| Comparative Example 13 | 0 | 0 | 1.20 | A | 105 | - |
| Comparative Example 14 | 0 | 0 | 1.19 | A | 58 | 0 |
| Comparative Example 15 | 66 | 50 | 2.93 | B | 108 | 8 |

[Table 16]

| Example or Comparative Example | Coating material: Solid content (wt%) | Microstructure: Shape and dimension of fine structure: Arrangement of fine structure | Distance between apexes of projections (X) (nm) | Depth of depression (Y) (nm) | Critical damage in fine structure (The number of damages) | Critical damage in fine structure Judgment | Dispersibility of inorganic oxide particle Judgment | Transmittance (%) Before transfer | Transmittance (%) After transfer | Transmittance (%) Judgment | Minimum reflectance (%) After transfer | Abrasion resistance Judgment | Water contact angle(°) Before transfer | Water contact angle(°) After transfer | Water contact angle(°) Judgment | Comprehensive judgment |
|---|---|---|---|---|---|---|---|---|---|---|---|---|---|---|---|---|
| Example 35 | 10.6 | Arrangement a | 272 | 167 | 0 | A | A | 89 | 91 | A | <0.1 | A | 68 | 105 | A | A |
| Example 36 | 15.2 | Arrangement a | 181 | 173 | 0 | A | A | 87 | 91 | A | <0.1 | A | 82 | 101 | A | A |
| Example 37 | 10.0 | Arrangement a | 181 | 170 | 0 | A | A | 87 | 91 | A | <0.1 | A | 79 | 100 | A | A |
| Example 38 | 10.8 | Arrangement a | 283 | 170 | 0 | A | A | 86 | 91 | A | <0.1 | A | 69 | 108 | A | A |
| Comparative Example 13 | 10.6 | Arrangement a | 263 | 148 | 18 | B | A | 90 | 91 | A | Immeasurable | Reference for Example 35 Reference for Example 38 | 62 | 98 | A | B |
| Comparative Example 14 | 9.8 | Arrangement a | 265 | 150 | 32 | B | A | 89 | 91 | A | Immeasurable | Reference for Example 36 Reference for Example 37 | 80 | 99 | A | B |
| Comparative Example 15 | 9.5 | Arrangement a | Immeasurable | Immeasurable | 50< | B | B | 85 | Immeasurable | B | Immeasurable | B | 63 | Immeasurable | B | B |

**Industrial Applicability**

The organic-inorganic composite, the coating material, the organic-inorganic composite film, the microstructure, and the thermoplastic composition according to the present invention are useful as, for example, optical materials and optical members.

**Claims**

1. An organic-inorganic composite comprising an inorganic compound particle and a polymer attached to the inorganic compound particle, wherein
a molecular weight distribution of the polymer is 2.3 or less, wherein the molecular weight distribution is determined by Mw/Mn from a weight average molecular weight and a number-average molecular weight, and wherein Mn and Mw are poly(methyl methacrylate)-based values that are measured by gel permeation chromatography, and
a content of the inorganic compound particle is 96% by mass or less with respect to a total mass of the organic-inorganic composite;
wherein the inorganic compound particle and the polymer are covalently attached via a coupling agent, the coupling agent having a polymerization initiating group represented by formula (1) or (2):

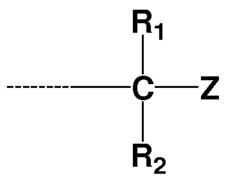

(1)

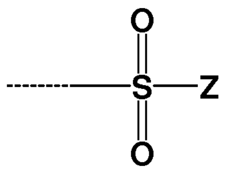

(2)

where $R_1$ and $R_2$ each independently represent a hydrogen atom, an alkyl group with the number of carbon of 1 to 20 which may have a substituent, an allyl group which may have a substituent, an aryl group with the number of carbon of 6 to 20 which may have a substituent, an alkylaryl group, or an alkylaryl group which may have a substituent; and Z represents a halogen atom.

2. The organic-inorganic composite according to claim 1, wherein the inorganic compound particle is an inorganic oxide particle.

3. The organic-inorganic composite according to claim 1 or 2, wherein an average particle size of the inorganic compound particle is 1 to 200 nm, wherein the average particle size is the average value of the outer diameter of the particle and is measured according to the method described herein, and/or
wherein maximum length L and minimum width D of the inorganic compound particle satisfy $L/D \geq 1.2$.

4. The organic-inorganic composite according to any one of claims 1 to 3, wherein a density of the inorganic compound particle is 2.5 to 8 $g/cm^3$, and/or
wherein a refractive index of the inorganic compound particle is 1.6 to 4.5, wherein the refractive index is measured according to the method described herein.

5. The organic-inorganic composite according to any one of claims 1 to 4, wherein the inorganic compound particle is a zirconium oxide particle or a titanium oxide particle, and/or
wherein a cavity ratio of the inorganic compound particle is 5 to 80%, wherein the cavity ratio is defined by the formula: cavity ratio (% by volume) = (Volume of the cavity portion) / (Volume of the whole particle) x 100, and wherein the cavity ratio is measured according to the method described herein and/or
wherein the inorganic compound particle forms a chain structure comprising a plurality of primary particles connected in a form of beads.

**6.** The organic-inorganic composite according to any one of claims 1 to 5, wherein the inorganic compound particle and the polymer are attached via a coupling agent, wherein the coupling agent has a structure represented by the following formula (1):

$$X\text{-}Si(R^1)(R^2)(R^3) \ldots \quad (1)$$

wherein X is a polymerization initiating group; $R^1$ and $R^2$ are each independently an alkyl group in which the number of carbon atoms is 1 to 10; and $R^3$ is an alkoxy group in which the number of carbon atoms is 1 to 9, a hydrogen atom, a hydroxy group, or a halogen atom.

**7.** The organic-inorganic composite according to any one of claims 1 to 6, wherein the polymer is a nonionic polymer, and/or
wherein the polymer comprises methacrylic acid ester or acrylic acid ester as a monomer unit, and/or
wherein the polymer comprises at least one cross-linkable functional group.

**8.** The organic-inorganic composite according to any one of claims 1 to 7, wherein the polymer contains 0.1 to 60% by mass of fluorine with respect to a total mass of the organic-inorganic composite, and/or
wherein number-average molecular weight Mn of the polymer is 5000 to 100000 g/mol, wherein Mn is a poly(methyl methacrylate)-based value that is measured by gel permeation chromatography.

**9.** The organic-inorganic composite according to any one of claims 1 to 8, wherein the content of the inorganic compound particle is 5 to 80% by mass with respect to a total mass of the organic-inorganic composite.

**10.** The organic-inorganic composite according to any one of claims 1 to 9, wherein the content of the inorganic compound particle is 2 to 70% by volume with respect to a total volume of the organic-inorganic composite.

**11.** The organic-inorganic composite according to any one of claims 1 to 10, further comprising a free polymer that is not attached to the inorganic compound particle, wherein a content of the free polymer is 30% by mass or less with respect to a total mass of the free polymer and the polymer attached to the inorganic compound particle.

**12.** A photonic crystal comprising the organic-inorganic composite according to any one of claims 1 to 11.

**13.** An organic-inorganic composite film comprising the organic-inorganic composite according to any one of claims 1 to 11, wherein a degree of particle dispersion is 0.8 or less, wherein the degree of particle dispersion = (average deviation of the distance between centroids of adjacent particles) / (distance between centroids of adjacent particles), and is measured according to the method described herein.

**14.** The organic-inorganic composite film according to claim 13, wherein a relative permittivity is less than 7, wherein the relative permittivity is measured according to the method described herein, or
wherein a ratio of voids in the organic-inorganic composite film is less than 5% by volume with respect to a volume of the film.

**15.** The organic-inorganic composite film according to any one of claims 13 or 14, wherein the organic-inorganic composite is cross-linked.

**16.** The organic-inorganic composite film according to claim 15, wherein the organic-inorganic composite is cross-linked by radical polymerization, and/or
wherein the organic-inorganic composite is further cross-linked by a cross-linking agent.

**17.** The organic-inorganic composite film according to any one of claims 13 to 16, wherein the degree of particle dispersion is 0.6 or less, wherein the degree of particle dispersion = (average deviation of the distance between centroids of adjacent particles) / (distance between centroids of adjacent particles), and is measured according to the method described herein, and/or
wherein a refractive index is 1.55 or more, wherein the refractive index is measured according to the method described herein, and/or
wherein pencil hardness is F or more, wherein the pencil hardness is measured at a load of 500 g according to JIS K5600-5-4, and/or
wherein a water contact angle is 75° or more, wherein the water contact angle is measured by a sessile drop method

using a contact angle meter.

**18.** A coating material comprising the organic-inorganic composite according to any one of claims 1 to 11.

**19.** The coating material according to claim 18, further comprising a photopolymerization initiator or a curing agent, and/or wherein a solid content concentration is 0.2 to 30% by mass.

**20.** A manufacturing method for manufacturing the organic-inorganic composite according to any one of claims 1 to 11, comprising the following step 1 and step 2:

step 1: a step of reacting the inorganic compound particle with a coupling agent having a polymerization initiating group to obtain a surface-modified inorganic compound particle; and
step 2: a step of forming the polymer attached to the inorganic compound particle by living radical polymerization of radical polymerizable monomers initiated by the polymerization initiating group to yield the organic-inorganic composite.

**21.** The method for manufacturing the organic-inorganic composite according to claim 20, further comprising the following step 3 after the step 1 and the step 2:
step 3: a step of attaching a compound comprising a reactive double bond to the organic-inorganic composite after the step 2.

**22.** A manufacturing method for manufacturing the organic-inorganic composite according to any one of claims 1 to 11, comprising the following step 4 and step 5:

step 4: a step of reacting the inorganic compound particle with a coupling agent having a polymerization initiating group and a hydrophobizing agent to obtain a surface-modified inorganic compound particle; and
step 5: a step of forming, after step 4, the polymer attached to the inorganic compound particle by living radical polymerization of radical polymerizable monomers initiated by the polymerization initiating group to yield the organic-inorganic composite.

**23.** The method for manufacturing the organic-inorganic composite according to claim 22, further comprising the following step 6 after the step 4 and the step 5:
step 6: a step of attaching a compound comprising a reactive double bond to the organic-inorganic composite.

**24.** The method for manufacturing the organic-inorganic composite according to any one of claims 20 to 23, wherein the living radical polymerization is atom transfer radical polymerization.

**25.** A manufacturing method for manufacturing the organic-inorganic composite film according to any one of claims 13 to 17, comprising:

a step of obtaining a coating material comprising an organic-inorganic composite comprising the inorganic compound particle and the polymer attached to the inorganic compound particle; and
a step of applying the coating material onto a substrate to form the organic-inorganic composite film.

**26.** The method for manufacturing the organic-inorganic composite film according to claim 25, further comprising a step of cross-linking the organic-inorganic composite by light curing or thermal curing.

**27.** A thermoplastic composition comprising the organic-inorganic composite according to any one of claims 1 to 11 and a thermoplastic resin.

**28.** The thermoplastic composition according to claim 27, wherein a content of the inorganic acid compound is 1 to 60% by volume with respect to a total volume of the thermoplastic composition.

**29.** The thermoplastic composition according to claim 27 or 28, wherein the thermoplastic resin comprises at least one type of polymethacrylic acid ester, polycarbonate, polyamide, and polyolefin.

**30.** A microstructure comprising the organic-inorganic composite according to any one of claims 1 to 11 or the thermoplastic composition according to any one of claims 27 to 29, and

having a fine structure consisting of a plurality of projections and depressions, wherein
a distance between apexes of adjacent projections is 10 to 800 nm, and a depth of the depressions is 10 nm to 1 μm, wherein the distance between apexes of adjacent projections and the depth of the depressions is measured according to the method described herein.

**31.** An optical material comprising at least one type selected from the group consisting of the organic-inorganic composite according to any one of claims 1 to 11, the organic-inorganic composite film according to any one of claims 13 to 17, the thermoplastic composition according to any one of claims 27 to 29, and the microstructure according to claim 30.

**32.** An antireflection member comprising the optical material according to claim 31.

**33.** An optical lens comprising the optical material according to claim 31.

**Patentansprüche**

**1.** Organisch-anorganischer Verbund, umfassend ein Teilchen aus einer anorganischen Verbindung und ein Polymer, das an das Teilchen aus einer anorganischen Verbindung gebunden ist, wobei die Molekulargewichtsverteilung des Polymers 2,3 oder weniger beträgt, wobei die Molekulargewichtsverteilung durch Mw/Mn aus einem gewichtsmittleren Molekulargewicht und einem zahlenmittleren Molekulargewicht bestimmt wird und wobei es sich bei Mn und Mw um durch Gelpermeationschromatographie gemessene Werte auf Basis von Poly(methylmethacrylat) handelt, und
der Gehalt des Teilchens aus einer anorganischen Verbindung 96 Massen-% oder weniger, bezogen auf die Gesamtmasse des organisch-anorganischen Verbunds, beträgt;
wobei das Teilchen aus einer anorganischen Verbindung und das Polymer über ein Kupplungsmittel kovalent gebunden sind, wobei das Kupplungsmittel eine polymerisationsinitiierende Gruppe der Formel (1) oder (2) aufweist:

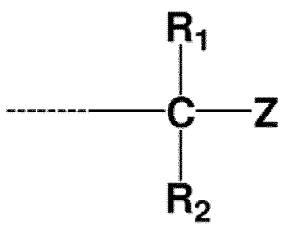

(1)

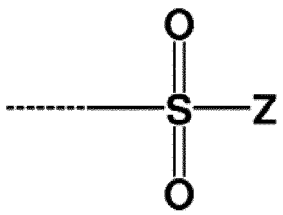

(2)

wobei $R_1$ und $R_2$ jeweils unabhängig für ein Wasserstoffatom, eine Alkylgruppe mit 1 bis 20 Kohlenstoffatomen, die einen Substituenten aufweisen kann, eine Allylgruppe, die einen Substituenten aufweisen kann, eine Arylgruppe mit 6 bis 20 Kohlenstoffatomen, die einen Substituenten aufweisen kann, eine Alkylarylgruppe oder eine Alkylarylgruppe, die einen Substituenten aufweisen kann, stehen und Z für ein Halogenatom steht.

**2.** Organisch-anorganischer Verbund nach Anspruch 1, wobei es sich bei dem Teilchen aus einer anorganischen Verbindung um ein Teilchen aus einem anorganischen Oxid handelt.

**3.** Organisch-anorganischer Verbund nach Anspruch 1 oder 2, wobei die mittlere Teilchengröße des Teilchens aus einer anorganischen Verbindung 1 bis 200 nm beträgt, wobei die mittlere Teilchengröße der Mittelwert des äußeren Durchmessers des Teilchens ist und gemäß der hier beschriebenen Methode gemessen wird, und/oder
wobei die maximale Länge L und minimale Breite D des Teilchens aus einer anorganischen Verbindung L/D ≥ 1,2

erfüllen.

4. Organisch-anorganischer Verbund nach einem der Ansprüche 1 bis 3, wobei die Dichte des Teilchens aus einer anorganischen Verbindung 2,5 bis 8 g/$cm^3$ beträgt und/oder
wobei der Brechungsindex des Teilchens aus einer anorganischen Verbindung 1,6 bis 4,5 beträgt, wobei der Brechungsindex gemäß der hier beschriebenen Methode gemessen wird.

5. Organisch-anorganischer Verbund nach einem der Ansprüche 1 bis 4, wobei es sich bei dem Teilchen aus einer anorganischen Verbindung um ein Zirconiumoxid-Teilchen oder ein Titanoxid-Teilchen handelt und/oder
wobei das Hohlraumverhältnis des Teilchens aus einer anorganischen Verbindung 5 bis 80 % beträgt, wobei das Hohlraumverhältnis durch die Formel: Hohlraumverhältnis (Vol.-%) = (Volumen des Hohlraumanteils) / (Volumen des gesamten Teilchens) x 100 definiert ist und wobei das Hohlraumverhältnis gemäß der hier beschriebenen Methode gemessen wird, und/oder
wobei das Teilchen aus einer anorganischen Verbindung eine Kettenstruktur bildet, die mehrere in Form von Perlen verbundene Primärteilchen umfasst.

6. Organisch-anorganischer Verbund nach einem der Ansprüche 1 bis 5, wobei das Teilchen aus einer organischen Verbindung und das Polymer über ein Kupplungsmittel gebunden sind, wobei das Kupplungsmittel die durch die folgende Formel (1) wiedergegebene Struktur aufweist:

$$X\text{-}Si(R^1)(R^2)(R^3) \ldots \qquad (1)$$

wobei X für eine polymerisationsinitiierende Gruppe steht; $R^1$ und $R^2$ jeweils unabhängig voneinander für eine Alkylgruppe mit 1 bis 10 Kohlenstoffatomen stehen und $R^3$ für eine Alkoxygruppe mit 1 bis 9 Kohlenstoffatomen, ein Wasserstoffatom, eine Hydroxygruppe oder ein Halogenatom steht.

7. Organisch-anorganischer Verbund nach einem der Ansprüche 1 bis 6, wobei es sich bei dem Polymer um ein nichtionisches Polymer handelt und/oder wobei das Polymer Methacrylsäureester oder Acrylsäureester als Monomereinheit umfasst und/oder wobei das Polymer mindestens eine vernetzbare funktionelle Gruppe umfasst.

8. Organisch-anorganischer Verbund nach einem der Ansprüche 1 bis 7, wobei das Polymer 0,1 bis 60 Massen-% Fluor, bezogen auf die Gesamtmasse des organisch-anorganischen Verbunds, enthält und/oder wobei das zahlenmittlere Molekulargewicht Mn des Polymers 5000 bis 100.000 g/mol beträgt, wobei es sich bei Mn um einen durch Gelpermeationschromatographie gemessenen Wert auf Basis von Poly(methylmethacrylat) handelt.

9. Organisch-anorganischer Verbund nach einem der Ansprüche 1 bis 8, wobei der Gehalt des Teilchens aus einer anorganischen Verbindung 5 bis 80 Massen-%, bezogen auf die Gesamtmasse des organisch-anorganischen Verbunds, beträgt.

10. Organisch-anorganischer Verbund nach einem der Ansprüche 1 bis 9, wobei der Gehalt des Teilchens aus einer anorganischen Verbindung 2 bis 70 Vol.-%, bezogen auf das Gesamtvolumen des organisch-anorganischen Verbunds, beträgt.

11. Organisch-anorganischer Verbund nach einem der Ansprüche 1 bis 10, ferner umfassend ein freies Polymer, das nicht an das Teilchen aus einer anorganischen Verbindung gebunden ist, wobei der Gehalt des freien Polymers 30 Massen-% oder weniger, bezogen auf die Gesamtmasse des freien Polymers und des an das Teilchen aus einer anorganischen Verbindung gebundenen Polymers, beträgt.

12. Photonischer Kristall, umfassend den organisch-anorganischen Verbund nach einem der Ansprüche 1 bis 11.

13. Film aus einem organisch-anorganischen Verbund, umfassend den organisch-anorganischen Verbund nach einem der Ansprüche 1 bis 11, wobei der Teilchendispersionsgrad 0,8 oder weniger beträgt, wobei der Teilchendispersionsgrad = (mittlere Abweichung des Abstands zwischen Schwerpunkten benachbarter Teilchen)/(Abstand zwischen Schwerpunkten benachbarter Teilchen) und gemäß der hier beschriebenen Methode gemessen wird.

14. Film aus einem organisch-anorganischen Verbund nach Anspruch 13, wobei die relative Permittivität weniger als 7 beträgt, wobei die relative Permittivität gemäß der hier beschriebenen Methode gemessen wird, oder
wobei das Verhältnis von Hohlräumen in dem Film aus einem organisch-anorganischen Verbund weniger als 5 Vol.-

%, bezogen auf das Volumen des Films, beträgt.

**15.** Film aus einem organisch-anorganischen Verbund nach einem der Ansprüche 13 oder 14, wobei der organisch-anorganische Verbund vernetzt ist.

**16.** Film aus einem organisch-anorganischen Verbund nach Anspruch 15, wobei der organisch-anorganische Verbund durch Radikalpolymerisation vernetzt ist und/oder
wobei der organisch-anorganische Verbund ferner durch ein Vernetzungsmittel vernetzt ist.

**17.** Film aus einem organisch-anorganischen Verbund nach einem der Ansprüche 13 bis 16, wobei der Teilchendispersionsgrad 0,6 oder weniger beträgt,
wobei der Teilchendispersionsgrad = (mittlere Abweichung des Abstands zwischen Schwerpunkten benachbarter Teilchen)/(Abstand zwischen Schwerpunkten benachbarter Teilchen) und gemäß der hier beschriebenen Methode gemessen wird, und/oder
wobei der Brechungsindex 1,55 oder mehr beträgt,
wobei der Brechungsindex gemäß der hier beschriebenen Methode gemessen wird, und/oder
wobei die Bleistifthärte F oder mehr beträgt,
wobei die Bleistifthärte bei einer Last von 500 g gemäß JIS K5600-5-4 gemessen wird, und/oder
wobei der Wasserkontaktwinkel 75° oder mehr beträgt, wobei der Wasserkontaktwinkel nach der Methode des liegenden Tropfens unter Verwendung eines Kontaktwinkelmessgeräts gemessen wird.

**18.** Beschichtungsmaterial, umfassend den organisch-anorganischen Verbund nach einem der Ansprüche 1 bis 11.

**19.** Beschichtungsmaterial nach Anspruch 18, ferner umfassend einen Photopolymerisationsinitiator oder ein Härtungsmittel, und/oder
wobei die Feststoffgehaltskonzentration 0,2 bis 30 Massen-% beträgt.

**20.** Herstellungsverfahren zur Herstellung des organisch-anorganischen Verbunds nach einem der Ansprüche 1 bis 11, das den folgenden Schritt 1 und Schritt 2 umfasst:

Schritt 1: einen Schritt des Umsetzens des Teilchens aus einer anorganischen Verbindung mit einem Kupplungsmittel mit einer polymerisationsinitiierenden Gruppe zum Erhalt eines oberflächenmodifizierten Teilchens aus einer anorganischen Verbindung; und
Schritt 2: einen Schritt des Bildens des an das Teilchen aus einer anorganischen Verbindung gebundenen Polymers durch lebende Radikalpolymerisation von radikalisch polymerisierbaren Monomeren, die durch die polymerisationsinitiierende Gruppe initiiert wird, zum Erhalt des organisch-anorganischen Verbunds.

**21.** Verfahren zur Herstellung des organisch-anorganischen Verbunds nach Anspruch 20, ferner umfassend den folgenden Schritt 3 nach dem Schritt 1 und dem Schritt 2:
Schritt 3: einen Schritt des Bindens einer Verbindung mit einer reaktiven Doppelbindung an den organisch-anorganischen Verbund nach Schritt 2.

**22.** Herstellungsverfahren zur Herstellung des organisch-anorganischen Verbunds nach einem der Ansprüche 1 bis 11, das den folgenden Schritt 4 und Schritt 5 umfasst:

Schritt 4: einen Schritt des Umsetzens des Teilchens aus einer anorganischen Verbindung mit einem Kupplungsmittel mit einer polymerisationsinitiierenden Gruppe und einem Hydrophobierungsmittel zum Erhalt eines oberflächenmodifizierten Teilchens aus einer anorganischen Verbindung; und
Schritt 5: einen Schritt des Bildens des an das Teilchen aus einer anorganischen Verbindung gebundenen Polymers durch lebende Radikalpolymerisation von radikalisch polymerisierbaren Monomeren, die durch die polymerisationsinitiierende Gruppe initiiert wird, zum Erhalt des organisch-anorganischen Verbunds nach Schritt 4.

**23.** Verfahren zur Herstellung des organisch-anorganischen Verbunds nach Anspruch 22, ferner umfassend den folgenden Schritt 6 nach dem Schritt 4 und dem Schritt 5:
Schritt 6: einen Schritt des Bindens einer Verbindung mit einer reaktiven Doppelbindung an den organisch-anorganischen Verbund.

**24.** Verfahren zur Herstellung des organisch-anorganischen Verbunds nach einem der Ansprüche 20 bis 23, bei dem es sich bei der lebenden Radikalpolymerisation um Atom Transfer Radical Polymerization handelt.

**25.** Herstellungsverfahren zur Herstellung des Films aus einem organisch-anorganischen Verbund nach einem der Ansprüche 13 bis 17, das Folgendes umfasst:

einen Schritt des Erhalts eines Beschichtungsmaterials, das einen organisch-anorganischen Verbund umfasst, der das Teilchen aus einer anorganischen Verbindung und das an das Teilchen aus einer anorganischen Verbindung gebundene Polymer umfasst; und
einen Schritt des Aufbringens des Beschichtungsmaterials auf ein Substrat zur Bildung des Films aus einem organisch-anorganischen Verbund.

**26.** Verfahren zur Herstellung des Films aus einem organisch-anorganischen Verbund nach Anspruch 25, ferner umfassend einen Schritt des Vernetzens des organisch-anorganischen Verbunds durch Lichthärtung oder Wärmehärtung.

**27.** Thermoplastische Zusammensetzung, umfassend den organisch-anorganischen Verbund nach einem der Ansprüche 1 bis 11 und ein thermoplastisches Harz.

**28.** thermoplastische Zusammensetzung nach Anspruch 27, wobei der Gehalt der anorganischen Säureverbindung 1 bis 60 Vol.-%, bezogen auf das Gesamtvolumen der thermoplastischen Zusammensetzung, beträgt.

**29.** Thermoplastische Zusammensetzung nach Anspruch 27 oder 28, wobei das thermoplastische Harz mindestens einen Typ von Polymethacrylsäureester, Polycarbonat, Polyamid und Polyolefin umfasst.

**30.** Mikrostruktur, umfassend den organisch-anorganischen Verbund nach einem der Ansprüche 1 bis 11 oder die thermoplastische Zusammensetzung nach einem der Ansprüche 27 bis 29, und
mit einer Feinstruktur, die aus mehreren Erhöhungen und Vertiefungen besteht, wobei der Abstand zwischen Spitzen benachbarter Erhöhungen 10 bis 800 nm beträgt und die Tiefe der Vertiefungen 10 nm bis 1 $\mu$m beträgt, wobei der Abstand zwischen Spitzen benachbarter Erhöhungen und die Tiefe der Vertiefungen gemäß der hier beschriebenen Methode gemessen wird.

**31.** Optisches Material, umfassend mindestens einen Typ aus der Gruppe bestehend aus dem organisch-anorganischen Verbund nach einem der Ansprüche 1 bis 11, dem Film aus einem organisch-anorganischen Verbund nach einem der Ansprüche 13 bis 17, der thermoplastischen Zusammensetzung nach einem der Ansprüche 27 bis 29 und der Mikrostruktur nach Anspruch 30.

**32.** Antireflexionselement, umfassend das optische Material nach Anspruch 31.

**33.** Optische Linse, umfassend das optische Material nach Anspruch 31.

## Revendications

**1.** Composite organique-inorganique comprenant une particule de composé inorganique et un polymère lié à la particule de composé inorganique,

une distribution des poids moléculaires du polymère étant inférieure ou égale à 2,3, la distribution des poids moléculaires étant déterminée par Mw/Mn à partir d'un poids moléculaire moyen en poids et d'un poids moléculaire moyen en nombre et Mn et Mw étant des valeurs basées sur le poly(méthacrylate de méthyle) mesurées par chromatographie par perméation de gel et
une teneur en particule de composé organique étant inférieure ou égale à 96% en masse par rapport à la masse totale du composite organique-inorganique ;
la particule de composé inorganique et le polymère étant liés de manière covalente via un agent de couplage, l'agent de couplage possédant un groupe initiateur de polymérisation représenté par la formule (1) ou (2) :

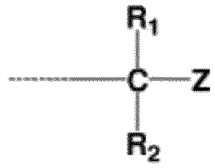

(1)

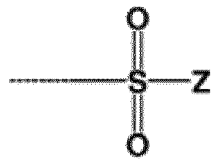

(2)

$R_1$ et $R_2$ représentant chacun indépendamment un atome d'hydrogène, un groupe alkyle avec le nombre de carbones de 1 jusqu'à 20 pouvant avoir un substituant, un groupe allyle pouvant avoir un substituant, un groupe aryle présente le nombre de carbones de 6 jusqu'à 20 pouvant avoir un substituant, un groupe alkylaryle ou un groupe alkylaryle pouvant avoir un substituant ; et Z représentant un atome d'halogène.

**2.** Composite organique-inorganique selon la revendication 1, la particule de composé inorganique étant une particule d'oxyde inorganique.

**3.** Composite organique-inorganique selon la revendication 1 ou 2, une grosseur moyenne de particule de la particule de composé inorganique étant de 1 jusqu'à 200 nm, la grosseur moyenne de particule étant la valeur moyenne du diamètre externe de la particule et étant mesurée selon la méthode décrite dans la description et/ou
une longueur maximum L et une largeur minimum D de particule de composé inorganique satisfaisant à $L/D \geq 1,2$.

**4.** Composite organique-inorganique selon l'une quelconque des revendications 1 à 3, une densité de la particule de composé inorganique étant de 2,5 jusqu' à 8 $g/cm^3$ et/ou
un indice de réfraction de la particule de composé inorganique étant de 1,6 jusqu'à 4,5, l'indice de réfraction étant mesuré selon la méthode décrite dans la description.

**5.** Composite organique-inorganique selon l'une quelconque des revendications 1 à 4, la particule de composé inorganique étant une particule d'oxyde de zirconium ou une particule d'oxyde de titane et/ou

un rapport de cavité de la particule de composé inorganique étant de 5 jusqu'à 80%, le rapport de cavité étant défini par la formule : rapport de cavité (% en volume) = (volume de la partie de cavité)/(volume de la particule entière) x 100 et le rapport de cavité étant mesuré selon la méthode décrite dans la description et/ou
la particule de composé inorganique formant une structure de chaîne comprenant une pluralité de particules primaires reliées sous forme de billes.

**6.** Composite organique-inorganique selon l'une quelconque des revendications 1 à 5, la particule de composé inorganique et le polymère étant liés via un agent de couplage, l'agent de couplage possédant une structure représentée par la formule suivante (1) :

$$X\text{-}Si(R^1)(R^2)(R^3) \ldots \qquad (1)$$

X étant un groupe initiateur de polymérisation ; $R^1$ et $R^2$ étant chacun indépendamment un groupe alkyle dont le nombre d'atomes de carbone est de 1 jusqu'à 10 ; et $R^3$ étant un groupe alcoxyle dont le nombre d'atomes de carbone est de 1 jusqu'à 9, un atome d'hydrogène, un groupe hydroxyle ou un atome d'halogène.

**7.** Composite organique-inorganique selon l'une quelconque des revendications 1 à 6, le polymère étant un polymère non ionique et/ou

le polymère comprenant un ester d'acide méthacrylique ou un ester d'acide acrylique en tant que motif monomère et/ou
le polymère comprenant au moins un groupe fonctionnel pouvant être réticulé.

**8.** Composite organique-inorganique selon l'une quelconque des revendications 1 à 7, le polymère contenant 0,1 jusqu'à 60% en masse de fluor par rapport à la masse totale du composite organique-inorganique et/ou
un poids moléculaire moyen en nombre Mn du polymère étant de 5000 jusqu'à 100.000 g/mole, Mn étant une valeur basée sur un poly(méthacrylate de méthyle) mesurée par chromatographie par perméation de gel.

**9.** Composite organique-inorganique selon l'une quelconque des revendications 1 à 8, la teneur en particule de composé inorganique étant de 5 jusqu'à 80% en masse par rapport à la masse totale du composite organique-inorganique.

**10.** Composite organique-inorganique selon l'une quelconque des revendications 1 à 9, la teneur en particule de composé inorganique étant de 2 jusqu'à 70% en volume par rapport au volume total du composite organique-inorganique.

**11.** Composite organique-inorganique selon l'une quelconque des revendications 1 à 10, comprenant en outre un polymère libre non lié à la particule de composé inorganique, une teneur en polymère libre étant inférieure ou égale à 30% en masse par rapport à la masse totale du polymère libre et du polymère lié à la particule de composé inorganique.

**12.** Cristal photonique comprenant le composite organique-inorganique selon l'une quelconque des revendications 1 à 11.

**13.** Film composite organique-inorganique comprenant le composite organique-inorganique selon l'une quelconque des revendications 1 à 11, un degré de dispersion de particule étant inférieur ou égal à 0,8, le degré de dispersion de particule = (déviation moyenne de la distance entre des centroïdes de particules adjacentes)/(distance entre des centroïdes de particules adjacentes) et étant mesuré selon la méthode décrite dans la description.

**14.** Film composite organique-inorganique selon la revendication 13, une permittivité relative étant inférieure à 7, la permittivité relative étant mesurée selon la méthode décrite dans la description ou
une proportion de vides dans le film composite organique-inorganique étant inférieure à 5% en volume par rapport à un volume du film.

**15.** Film composite organique-inorganique selon l'une quelconque de revendications 13 ou 14, le composite organique-inorganique étant réticulé.

**16.** Film composite organique-inorganique selon la revendication 15, le composite organique-inorganique étant réticulé par polymérisation radicalaire et/ou
le composite organique-inorganique étant en outre réticulé par un agent de réticulation.

**17.** Film composite organique-inorganique selon l'une quelconque des revendications 13 à 16, le degré de dispersion de particule étant inférieur ou égal à 0,6, le degré de dispersion de particule = (déviation moyenne de la distance entre des centroïdes de particules adjacentes)/(distance entre des centroïdes de particules adjacentes) et étant mesuré selon la méthode décrite dans la description et/ou
un indice de réfraction étant supérieur ou égal à 1,55, l'indice de réfraction étant mesuré selon la méthode décrite dans la description et/ou
une dureté au crayon étant supérieure ou égale à F, la dureté au crayon étant mesurée à une charge de 500 g selon JIS K5600-5-4 et/ou
un angle de contact avec l'eau étant supérieur ou égal à 75°C, l'angle de contact avec l'eau étant mesuré selon une méthode de la goutte sessile à l'aide d'un appareil de mesure d'angle de contact.

**18.** Matériau de revêtement comprenant le composite organique-inorganique selon l'une quelconque des revendications 1 à 11.

**19.** Matériau de revêtement selon la revendication 18, comprenant en outre un initiateur de photopolymérisation ou un agent de durcissement et/ou
une concentration en contenu solide étant de 0,2 jusqu'à 30% en masse.

**20.** Procédé de fabrication pour une fabrication du composite organique-inorganique selon l'une quelconque des revendications 1 à 11, comprenant l'étape 1 et l'étape 2 suivantes :

étape 1 : une étape de mise en réaction de la particule de composé inorganique avec un agent de couplage possédant un groupe initiateur de polymérisation pour obtenir une particule de composé inorganique à surface modifiée ; et

étape 2 : une étape de formation du polymère lié à la particule de composé inorganique par une polymérisation radicalaire vivante de monomères polymérisables par voie radicalaire initiée par le groupe initiateur de polymérisation pour produire le composite organique-inorganique.

**21.** Procédé de fabrication du composite organique-inorganique selon la revendication 20, comprenant en outre l'étape 3 suivante après l'étape 1 et l'étape 2 :
étape 3 : une étape de liaison d'un composé comprenant une double liaison réactive au composite organique-inorganique après l'étape 2.

**22.** Procédé de fabrication pour une fabrication du composite organique-inorganique selon l'une quelconque des revendications 1 à 11, comprenant l'étape 4 et l'étape 5 suivantes :

étape 4 : une étape de mise en réaction de la particule de composé inorganique avec un agent de couplage possédant un groupe initiateur de polymérisation et un agent hydrophobisant pour obtenir une particule de composé inorganique modifiée en surface ; et

étape 5 : une étape de formation, après l'étape 4, du polymère lié à la particule de composé inorganique par une polymérisation radicalaire vivante de monomères polymérisables par voie radicalaire initiée par le groupe initiateur de polymérisation pour produire le composite organique-inorganique.

**23.** Procédé de fabrication du composite organique-inorganique selon la revendication 22, comprenant en outre l'étape 6 suivante après l'étape 4 et l'étape 5 :
étape 6 : une étape de liaison d'un composé comprenant une double liaison réactive au composite organique-inorganique.

**24.** Procédé de fabrication du composite organique-inorganique selon l'une quelconque des revendications 20 à 23, la polymérisation radicalaire vivante étant une polymérisation radicalaire par transfert d'atome.

**25.** Procédé de fabrication pour une fabrication du film de composite organique-inorganique selon l'une quelconque des revendications 13 à 17, comprenant :

une étape d'obtention d'un matériau de revêtement comprenant un composite organique-inorganique comprenant la particule de composé inorganique et le polymère lié à la particule de composé inorganique ; et

une étape d'application du matériau de revêtement sur un substrat pour former le film de composite organique-inorganique.

**26.** Procédé pour une fabrication du film de composite organique-inorganique selon la revendication 25, comprenant en outre une étape de réticulation du composite organique-inorganique par durcissement à la lumière ou durcissement thermique.

**27.** Composition thermoplastique comprenant le composite organique-inorganique selon l'une quelconque des revendications 1 à 11 et une résine thermoplastique.

**28.** Composition thermoplastique selon la revendication 27, une teneur du composé acide inorganique étant de 1 jusqu'à 60% en volume par rapport au volume total de la composition thermoplastique.

**29.** Composition thermoplastique selon la revendication 27 ou 28, la résine thermoplastique comprenant au moins un type de poly(ester d'acide méthacrylique), de polycarbonate, de polyamide et de polyoléfine.

**30.** Microstructure comprenant le composite organique-inorganique selon l'une quelconque des revendications 1 à 11 ou la composition thermoplastique selon l'une quelconque des revendications 27 à 29 et
possédant une structure fine constituée d'une pluralité de saillies et de creux,
une distance entre des sommets de saillies adjacentes étant de 10 jusqu'à 800 nm et une profondeur des creux étant de 10 nm jusqu'à 1 $\mu$m, la distance entre des sommets de saillies adjacentes et la profondeur des creux étant mesurée selon la méthode décrite dans la description.

**31.** Matériau optique comprenant au moins un type choisi dans le groupe constitué par le composite organique-inorganique selon l'une quelconque des revendications 1 jusqu'à 11, le film de composite organique-inorganique selon l'une quelconque des revendications 13 à 17, la composition thermoplastique selon l'une quelconque des revendications 27 à 29 et la microstructure selon la revendication 30.

**32.** Élément antireflet comprenant le matériau optique selon la revendication 31.

**33.** Lentille optique comprenant le matériau optique selon la revendication 31.

*Fig.1*

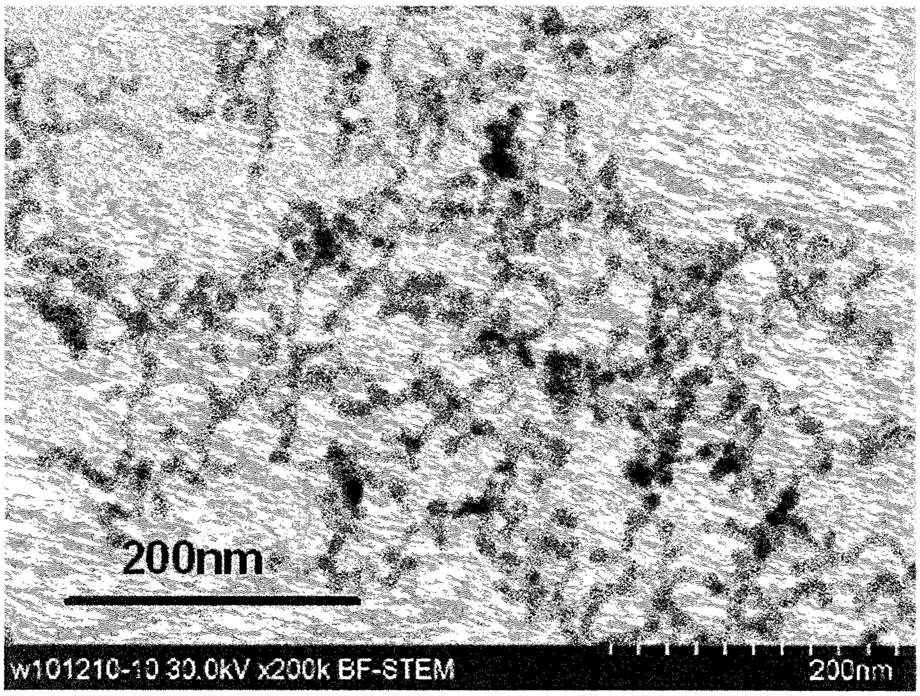

Fig.2

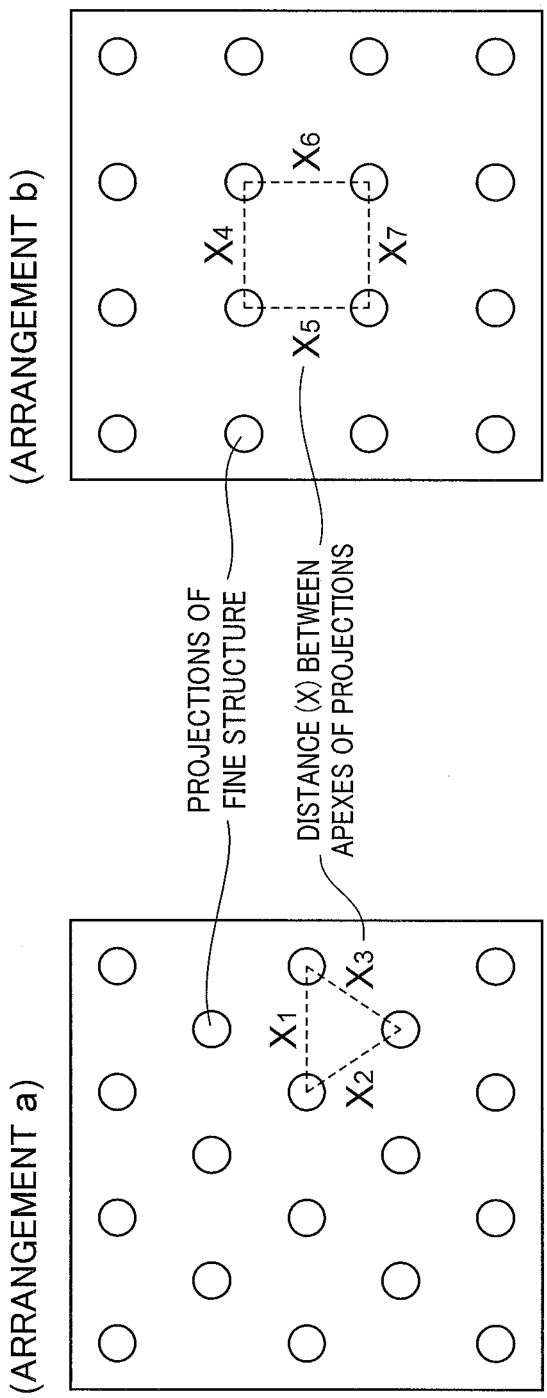
(ARRANGEMENT a)
(ARRANGEMENT b)
PROJECTIONS OF FINE STRUCTURE
DISTANCE (X) BETWEEN APEXES OF PROJECTIONS
$X_1$
$X_2$
$X_3$
$X_4$
$X_5$
$X_6$
$X_7$

*Fig.3*

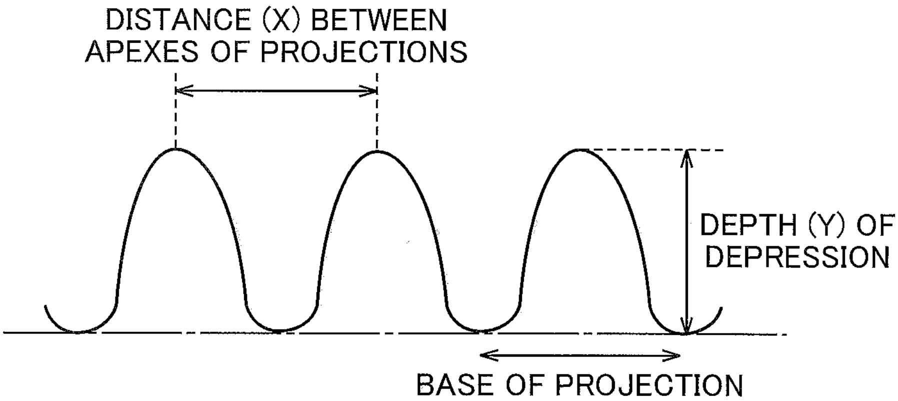
DISTANCE (X) BETWEEN
APEXES OF PROJECTIONS
DEPTH (Y) OF
DEPRESSION
BASE OF PROJECTION

*Fig.4*

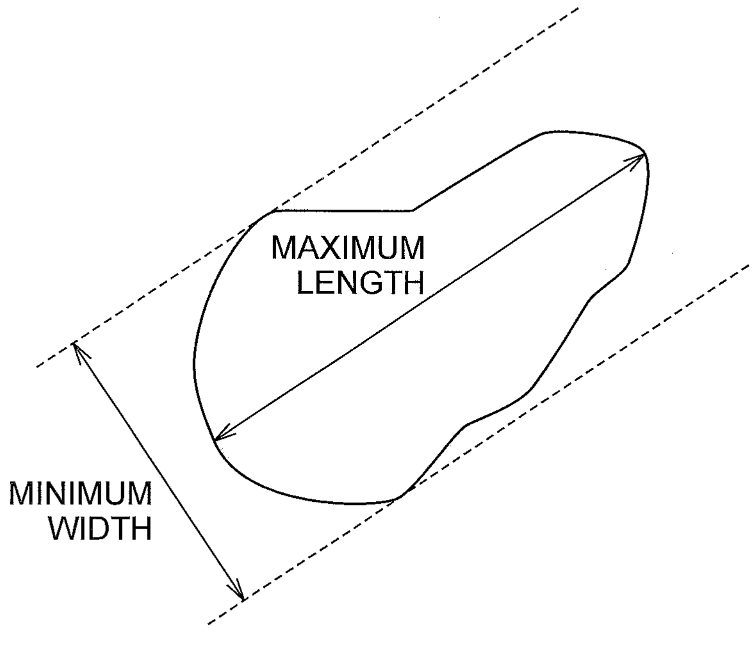

*Fig.5*

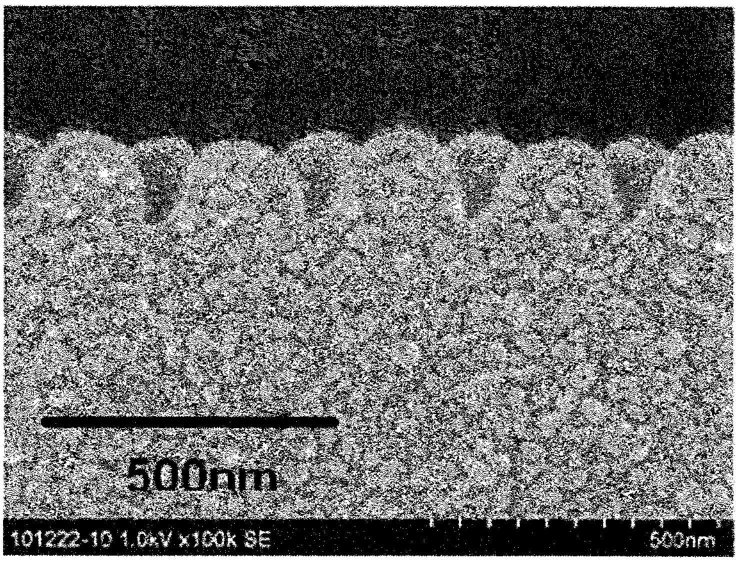

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008516017 A
- JP 2007270097 A
- JP 2007077271 A
- JP 2009138116 A
- JP 2010159369 A
- JP 11043556 A
- JP 2005179576 A
- JP 2005345617 A
- JP 2008106129 A
- JP 2006063042 A
- JP 2006257308 A


### Non-patent literature cited in the description


- **S. CHOU et al.** *Appl. Phys. lett.,* 1995, vol. 67, 3114
- *CHEMICAL ABSTRACTS,* 370870-81-8
- *CHEMICAL ABSTRACTS,* 1057260-39-5
- *CHEMICAL ABSTRACTS,* 688359-84-4
- *CHEMICAL ABSTRACTS,* 531505-27-8
- *CHEMICAL ABSTRACTS,* 1186667-60-6
- *CHEMICAL ABSTRACTS,* 314021-97-1
- *CHEMICAL ABSTRACTS,* 265119-86-6
- *CHEMICAL ABSTRACTS,* 1186667-65-1
- *CHEMICAL ABSTRACTS,* 880339-31-1
- *CHEMICAL ABSTRACTS,* 438001-36-6
- *CHEMICAL ABSTRACTS,* 663174-64-9
- *CHEMICAL ABSTRACTS,* 861807-46-7
- *CHEMICAL ABSTRACTS,* 265119-85-5
- *CHEMICAL ABSTRACTS,* 1233513-06-8
- *J. Polymer Science: Part A: polymer Chemistry,* 1993, vol. 31, 1473-1482
- *J. Polymer Science: Part A: polymer Chemistry,* 1993, vol. 31, 1483-1491